(19) Europäisches Patentamt
European Patent Office
Office européen des brevets

(11) EP 2 560 395 A2

(12) **EUROPEAN PATENT APPLICATION**
published in accordance with Art. 153(4) EPC

(43) Date of publication:
**20.02.2013 Bulletin 2013/08**

(21) Application number: **11769010.7**

(22) Date of filing: **06.04.2011**

(51) Int Cl.:
***H04N 13/00*** *(2006.01)*

(86) International application number:
**PCT/KR2011/002409**

(87) International publication number:
**WO 2011/129544 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2010 KR 20100033297**

(71) Applicants:
- **Samsung Electronics Co., Ltd.**
  **Suwon-si, Gyeonggi-do 443-742 (KR)**
- **Myongji University Industry and Academia Cooperation Foundation**
  **Gyeonggi-do 449-728 (KR)**

(72) Inventors:
- **HAN, Seung Ju**
  **Yongin-si**
  **Gyeonggi-do 449-712 (KR)**
- **HAN, Jae Joon**
  **Yongin-si**
  **Gyeonggi-do 449-712 (KR)**
- **BANG, Won Chul**
  **Yongin-si**
  **Gyeonggi-do 449-712 (KR)**
- **KIM, Do Kyoon**
  **Yongin-si**
  **Gyeonggi-do 449-712 (KR)**
- **KIM, Sang Kyun**
  **Yongin-si**
  **Gyeonggi-do 449-728 (KR)**

(74) Representative: **Beck, Michaël Andries T**
**Arnold Siedsma**
**Sweelinckplein 1**
**2517 GK The Hague (NL)**

(54) **SYSTEM AND METHOD FOR PROCESSING SENSORY EFFECTS**

(57) Disclosed are a system and method for processing sensory effects. According to an embodiment of the present invention, sensory effects contained as content can be implemented in the real world by generating command data for controlling a sensory device based on sensory effect information and specific information about the sensory device. Also, the data transmission rate is high and a low bandwidth can be used by encoding metadata as binary before transmission, or encoding as XML before transmission, or encoding as XML and then further encoding as binary before transmission.

FIG. 7A

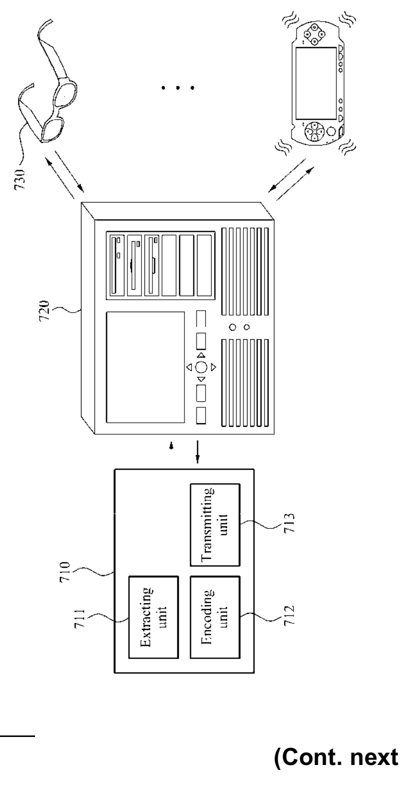


EP 2 560 395 A2

FIG. 7B

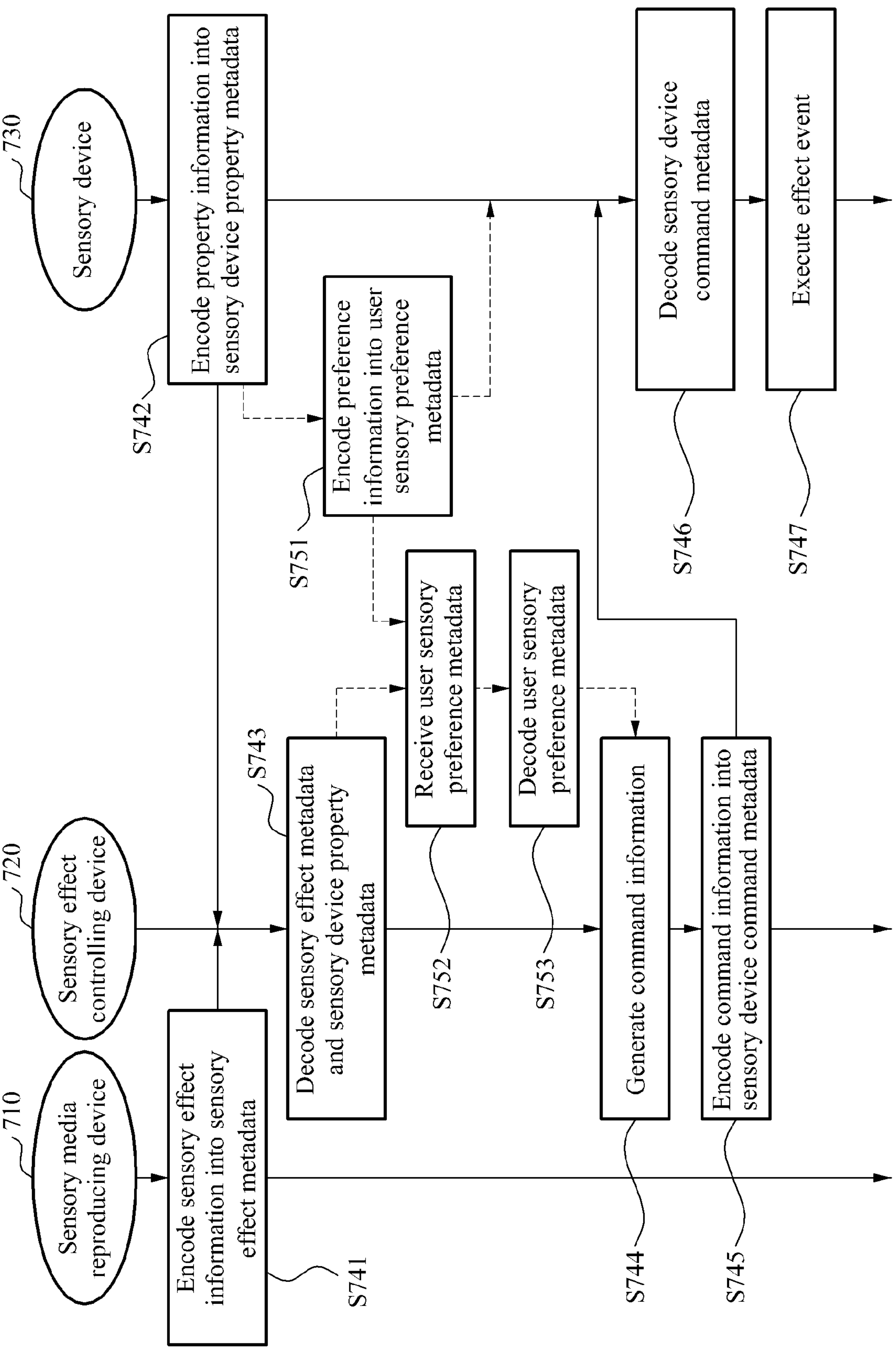
710
Sensory media reproducing device
720
Sensory effect controlling device
730
Sensory device
S741
Encode sensory effect information into sensory effect metadata
S742
Encode property information into sensory device property metadata
S743
Decode sensory effect metadata and sensory device property metadata
S751
Encode preference information into user sensory preference metadata
S752
Receive user sensory preference metadata
S753
Decode user sensory preference metadata
S744
Generate command information
S745
Encode command information into sensory device command metadata
S746
Decode sensory device command metadata
S747
Execute effect event

## Description

### Technical Field

Example embodiments of the following description relate to a system and method for processing sensory effects, and more particularly, to a system and method for quickly processing sensory effects contained in contents.

### Background Art

Recently, beyond simply displaying content information, content reproducing devices also supply various effects to users, and supply the content information by using an actuator. For example, a 4-dimensional (4D) movie theater, which is trendy these days, displays a film image and also supplies various effects such as a vibration effect of a theater seat, a windy effect, a water splash effect, and the like, corresponding to contents of the film. Therefore, users may enjoy the contents in a more immersive manner.

Thus, the content reproducing device and a content driving device that provide a sensory effect to users are being applied to various areas of life. For example, a game machine having a vibration joystick, a smell emitting TV, and the like are being studied and placed on the market.

However, research into a device and method for controlling efficient implementation of effect information contained in contents has been lacking. Therefore, the effect information cannot be efficiently implemented in the real world.

Accordingly, there is a desire for a device and method for controlling an operation to implement the effect information with an actuator of the real world.

### Disclosure of Invention

### Technical Goals

Example embodiments provide a sensory media reproducing device that may reproduce contents containing sensory effect information, the device including an extracting unit to extract the sensory effect information from the contents, an encoding unit to encode the extracted sensory effect information into sensory effect metadata (SEM), and a transmitting unit to transmit the SEM to a sensory effect controlling device.

Example embodiments also provide a sensory media reproducing method of reproducing contents containing sensory effect information, the method including extracting the sensory effect information from the contents, encoding the extracted sensory effect information into SEM, and transmitting the SEM to a sensory effect controlling device.

### Technical solutions

According to example embodiments, there is provided a system and method that may implement sensory effects contained in contents in a real world, by generating command information for controlling a sensory device, based on attribute information of the sensory device and sensory effect information.

According to example embodiments, there is provided a system and method that may transmit metadata by encoding the metadata into binary metadata, transmit the metadata by encoding the metadata into extensible mark-up language (XML) metadata, or transmit the metadata by encoding the metadata into XML metadata, and encoding the XML metadata into binary metadata, thereby increasing a data transmission rate and using a relatively low bandwidth.

### Brief Description of Drawings

FIG. 1 illustrates a diagram of a sensory effect processing system according to example embodiments.
FIGS. 2 through 4 illustrate a sensory effect processing system according to example embodiments.
FIG. 5 illustrates a structure of a sensory device according to example embodiments.
FIG. 6 illustrates a structure of a sensory effect controlling device according to example embodiments.
FIG. 7A illustrates a structure of a sensory media reproducing device according to example embodiments.
FIG. 7B illustrates a method of operating a sensory effect processing system according to example embodiments.

### Best Mode for Carrying Out the Invention

Reference will now be made in detail to example embodiments, examples of which are illustrated in the accompanying drawings, wherein like reference numerals refer to the like elements throughout. Example embodiments are described below to explain the present disclosure by referring to the figures.

FIG. 1 illustrates a diagram of a sensory effect processing system 100 according to example embodiments.

Referring to FIG. 1, the sensory effect processing system 100 includes a sensory media reproducing device 110, a sensory effect controlling device 120, and a sensory device 130.

The sensory media reproducing device 110 reproduces contents containing at least one sensory effect information. The sensory media reproducing device 110 may include a digital versatile disc (DVD) player, a movie player, a personal computer (PC), a game machine, a virtual world processing device, and the like.

The sensory effect information denotes information on a predetermined effect implemented in a real world corresponding to contents being reproduced by the sensory media reproducing device 110. For example, the sensory effect information may be information on a vibration effect for vibrating a joystick of a game machine when an earthquake occurs in a virtual world being reproduced by the game machine. The sensory effect information will be further described later.

The sensory media reproducing device 110 may extract the sensory effect information from the contents.

The sensory media reproducing device 110 may encode the extracted sensory effect information into sensory effect metadata (SEM). That is, the sensory media reproducing device 110 may generate the SEM by encoding the sensory effect information.

The sensory media reproducing device 110 may transmit the generated SEM to the sensory effect controlling device 120.

The sensory device 130 is adapted to execute an effect event corresponding to the sensory effect information. According to example embodiments, the sensory device 130 may be an actuator that implements the effect event in a real world. The sensory device 130 may include a vibration joystick, a 4-dimensional (4D) theater seat, virtual world goggles, and the like.

The effect event may denote an event implemented corresponding to the sensory effect information in the real world by the sensory device 130. For example, the effect event may be an event for operating a vibration unit of a game machine corresponding to sensory effect information that commands vibration of a joystick of the game machine.

The sensory device 130 may encode capability information regarding capability of the sensory device 130 into sensory device capability (SDCap) metadata. In other words, the sensory device 130 may generate the SDCap metadata by encoding the capability information. The capability information related to the sensory device 130 will be described in further detail hereinafter.

In addition, the sensory device 130 may transmit the generated SDCap metadata to the sensory effect controlling device 120.

The sensory device 130 may encode preference information, that is, information on a user preference with respect to a sensory effect, into user sensory preference (USP) metadata. In other words, the sensory device 130 may generate the USP metadata by encoding the preference information with respect to the sensory effect.

The preference information may denote information on a degree of user preference with respect to respective sensory effects. Also, the preference information may denote information on a level of the effect event executed corresponding to the sensory effect information. For example, regarding an effect event for vibrating a joystick, when the user does not want the vibration effect, the preference information may be information that sets a level of the effect event to 0. The preference information of the user regarding the sensory effect will be described in further detail hereinafter.

The sensory device 130 may be input with the preference information by the user.

In addition, the sensory device 130 may transmit the generated USP metadata to the sensory effect controlling device 120.

The sensory effect controlling device 120 may receive the SEM from the sensory media reproducing device 110 and also receive the SDCap metadata from the sensory device 130.

Also, the sensory effect controlling device 120 may decode the SEM and the SDCap metadata.

The sensory effect controlling device 120 may extract metadata effect information by decoding the SEM. Also, the sensory effect controlling device 120 may extract the capability information regarding capability of the sensory device 130 by decoding the SDCap metadata.

The sensory effect controlling device 120 may generate command information for controlling the sensory device 130 based on the decoded SEM and the decoded SDCap metadata. Accordingly, the sensory effect controlling device 120 may generate the command information for controlling the sensory device 130 such that the sensory device 130 executes the effect event corresponding to the capability of the sensory device 130.

The command information may be information for controlling execution of the effect event by the sensory device 130. Depending on embodiments, the command information may include the sensory effect information.

The sensory effect controlling device 120 may receive the SDCap metadata and the USP metadata from the sensory device 130.

Here, the sensory effect controlling device 120 may extract the preference information with respect to the sensory effect, by decoding the USP metadata.

Also, the sensory effect controlling device 120 may generate command information based on the decoded SEM, the decoded SDCap metadata, and the decoded USP metadata. Depending on embodiments, the command information may include the sensory effect information. Accordingly, the sensory effect controlling device 120 may generate the command information for controlling the sensory device 130 such that the sensory device 130 executes the effect event according to the degree of user preference and corresponding to the capability of the sensory device 130.

The sensory effect controlling device 120 may encode the generated command information into sensory device command (SDCmd) metadata. That is, the sensory effect controlling device 120 may generate the SDCmd metadata by encoding the generated command information.

Also, the sensory effect controlling device 120 may transmit the SDCmd metadata to the sensory device 130.

The sensory device 130 may receive the SDCmd metadata from the sensory effect controlling device 120 and decode the received SDCmd metadata.

In other words, the sensory device 130 may extract the sensory effect information by decoding the SDCmd metadata. Here, the sensory device 130 may execute the effect event corresponding to the sensory effect information.

The sensory device 130 may extract the command information by decoding the SDCmd metadata. In this case, the sensory device 130 may execute the effect event corresponding to the sensory effect information based on the command information.

FIGS. 2 through 4 illustrate a sensory effect processing system 200 according to example embodiments.

Referring to FIG. 2, the sensory effect processing system 200 may include a sensory media reproducing device 210, a sensory effect controlling device 220, and a sensory device 230.

The sensory media reproducing device 210 may include an extensible mark-up language (XML) encoder 211.

The XML encoder 211 may generate SEM by encoding sensory effect information into XML metadata. Here, the sensory media reproducing device 210 may transmit the SEM encoded in the form of the XML metadata to the sensory effect controlling device 220.

The sensory effect controlling device 220 may include an XML decoder 221.

The XML decoder 221 may decode the SEM received from the sensory media reproducing device 210. The XML decoder 221 may extract the sensory effect information by decoding the SEM.

The sensory device 230 may include an XML encoder 231.

The XML encoder 231 may generate SDCap metadata by encoding capability information regarding capability of the sensory device 230 into XML metadata. Here, the sensory device 230 may transmit the SDCap metadata encoded in the form of XML metadata to the sensory effect controlling device 220.

The XML encoder 231 may generate USP metadata by encoding preference information, that is, information on a user preference with respect to a sensory effect, into XML metadata. Here, the sensory device 230 may transmit the USP metadata encoded in the form of the XML metadata to the sensory effect controlling device 220.

The sensory effect controlling device 220 may include an XML decoder 222.

The XML decoder 222 may decode the SDCap metadata received from the sensory device 230. The XML decoder 222 may extract capability information regarding capability of the sensory device 230 by decoding the SDCap metadata.

In addition, the XML decoder 222 may decode the USP metadata received from the sensory device 230. The XML decoder 222 may extract the preference information regarding the sensory effect by decoding the USP metadata.

The sensory effect controlling device 220 may include an XML encoder 223.

The XML encoder 223 may generate SDCmd metadata by encoding command information for controlling execution of an effect event by the sensory device 230 into XML metadata. Here, the sensory effect controlling device 220 may transmit the SDCmd metadata encoded in the form of the XML metadata to the sensory device 230.

The sensory device 230 may include an XML decoder 232.

The XML decoder 232 may decode the SDCmd metadata received from the sensory effect controlling device 220. The XML decoder 232 may extract the command information by decoding the SDCmd metadata.

Referring to FIG. 3, a sensory effect processing system 300 may include a sensory media reproducing device 310, a sensory effect controlling device 320, and a sensory device 330.

The sensory media reproducing device 310 may include a binary encoder 311.

The binary encoder 311 may generate SEM by encoding sensory effect information into binary metadata. Here, the sensory media reproducing device 310 may transmit the SEM encoded in the form of the binary metadata to the sensory effect controlling device 320.

The sensory effect controlling device 320 may include a binary decoder 321.

The binary decoder 321 may decode the SEM received from the sensory media reproducing device 310. According to example embodiments, the binary decoder 321 may extract the sensory effect information by decoding the SEM.

The sensory device 330 may include a binary encoder 331.

The binary encoder 331 may generate SDCap metadata encoded in the form of the binary metadata to the sensory effect controlling device 320.

The binary encoder 331 may generate USP metadata by encoding preference information, that is, information on a user preference with respect to a sensory effect, into binary metadata. Here, the binary encoder 330 may transmit the USP metadata encoded in the form of the binary metadata to the sensory effect controlling device 320.

The sensory effect controlling device 320 may include a binary decoder 322.

The binary decoder 322 may decode the SDCap metadata received from the sensory device 330. The binary decoder 322 may extract capability information regarding capability of the sensory device 330, by decoding the SDCap metadata.

The binary decoder 322 may decode the USP metadata received from the sensory device 330. The binary decoder 322 may extract the preference information regarding the sensory effect by decoding the USP metadata.

The sensory effect controlling device 320 may include a binary encoder 323.

The binary encoder 323 may generate SDCmd metadata by encoding command information for controlling execution of an effect event by the sensory device 330 into binary metadata. Here, the sensory effect controlling device 320 may transmit the SDCmd metadata encoded in the form of the binary metadata to the sensory device 330.

The sensory device 330 may include a binary decoder 332.

The binary decoder 332 may decode the SDCmd metadata received from the sensory effect controlling device 320. The binary decoder 332 may extract the command information by decoding the SDCmd metadata.

Referring to FIG. 4, a sensory effect processing system 400 may include a sensory media reproducing device 410, a sensory effect controlling device 420, and a sensory device 430.

The sensory media reproducing device 410 may include an XML encoder 411 and a binary encoder 412.

The XML encoder 411 may generate third metadata by encoding sensory effect information into XML metadata. The binary encoder 412 may generate SEM by encoding the third metadata into binary metadata. The sensory media reproducing device 410 may transmit the SEM to the sensory effect controlling device 420.

The sensory effect controlling device 420 may include a binary decoder 421 and an XML decoder 422.

The binary decoder 421 may extract the third metadata by decoding the SEM received from the sensory media reproducing device 410. The XML decoder 422 may extract the sensory effect information by decoding the third metadata.

The sensory device 430 may include an XML encoder 431 and a binary encoder 432.

The XML encoder 431 may generate second metadata by encoding capability information regarding capability of the sensory device 430 into XML metadata. The binary encoder 432 may generate SDCap metadata by encoding the second metadata into binary metadata. Here, the sensory device 430 may transmit the SDCap metadata to the sensory effect controlling device 420.

The XML encoder 431 may generate fourth metadata by encoding preference information, that is, information on a user preference with respect to a sensory effect, into XML metadata. The binary encoder 432 may generate USP metadata by encoding the fourth metadata into binary metadata. Here, the sensory device 430 may transmit the USP metadata to the sensory effect controlling device 420.

The sensory effect controlling device 420 may include a binary decoder 423 and an XML decoder 424.

The binary decoder 423 may extract the second metadata by decoding the SDCap metadata received from the sensory device 430. The XML decoder 424 may extract the capability information regarding the sensory device 430 by decoding the second metadata.

In addition, the binary decoder 423 may extract the fourth metadata by decoding the USP metadata received from the sensory device 430. The XML decoder 424 may extract the preference information regarding the sensory effect by decoding the fourth metadata.

The sensory effect controlling device 420 may include an XML encoder 425 and a binary encoder 426.

The XML encoder 425 may generate first metadata by encoding command information for controlling execution of an effect event by the sensory device 430. The binary encoder 426 may generate SDCmd metadata by encoding the first metadata into binary metadata. Here, the sensory effect controlling device 420 may transmit the SDCmd metadata to the sensory device 430.

The sensory device 430 may include a binary decoder 433 and an XML decoder 434.

The binary decoder 433 may extract the first metadata by decoding the SDCmd metadata received from the sensory effect controlling device 420. The XML decoder 434 may extract the command information by decoding the first metadata.

FIG. 5 illustrates a structure of a sensory device 530 according to example embodiments.

Referring to FIG. 5, the sensory device 530 includes a decoding unit 531 and a drive unit 532.

The decoding unit 531 may decode SDCmd metadata containing at least one sensory effect information. In other words, the decoding unit 531 may extract at least one sensory effect information by decoding the SDCmd metadata.

The SDCmd metadata may be received from a sensory effect controlling device 520. Depending on embodiments, the SDCmd metadata may include command information.

The decoding unit 531 may extract the command information by decoding the SDCmd metadata.

The drive unit 532 may execute an effect event corresponding to the at least one sensory effect information. According to example embodiments, the drive unit 532 may execute the effect event based on the command information.

Contents reproduced by the sensory media reproducing device 510 may include at least one sensory effect information.

The sensory device 530 may further include an encoding unit 533.

The encoding unit 533 may encode capability information regarding capability of the sensory device 530 into SDCap metadata. In other words, the encoding unit 533 may generate the SDCap metadata by encoding the capability information. The encoding unit 533 may include at least one of an XML encoder and a binary encoder.

The encoding unit 533 may generate the SDCap metadata by encoding the capability information into XML metadata.

In addition, the encoding unit 533 may generate the SDCap metadata by encoding the capability information into binary metadata.

In addition, the encoding unit 533 may generate second metadata by encoding the capability information into XML metadata, and generate the SDCap metadata by encoding the second metadata into binary metadata.

The capability information may be information on capability of the sensory device 530.

The SDCap metadata may include a sensory device capability base type which denotes basic capability information regarding the sensory device 530. The sensory device capability base type may be metadata regarding the capability information commonly applied to all types of the sensory device 530.

Table 1 shows an XML representation syntax regarding the sensory device capability base type according to example embodiments.

[Table 1]

```
<!-- ################################################     -->
<!--    Sensory Device capability base type                -->
<!-- ################################################     -->
<complexType name="SensoryDeviceCapabilityBaseType" abstract="true">
        <complexContent>
                <extension base="dia:TerminalCapabilityBaseType">
                        <attributeGroup ref="cidl:sensoryDeviceCapabilityAttributes"/>
                </extension>
        </complexContent>
</complexType>
```

Table 2 shows a binary representation syntax regarding the sensory device capability base type according to example embodiments.

[Table 2]

| SensoryDeviceCapabilityBaseType{ | **Number of bits** | **Mnemonic** |
|---|---|---|
| TerminalCapabilityBase | | TerminalCapabilityBaseType |
| sensoryDeviceCapabilityAttributes | | sensoryDeviceCapabilityAttributesType |
| } | | |

Table 3 shows descriptor components semantics regarding the sensory device capability base type according to example embodiments.

[Table 3]

| **Names** | **Description** |
|---|---|
| SensoryDeviceCapabilityBaseType | SensoryDeviceCapabilityBaseType extends dia:TemicamCapabilityBaseType and provides a base abstract type for a subset of types defined as part of the sensory device capability metadata types. For details of dia:TerminalCapabilityBaseType, refer to the Part 7 of ISO/IEC 21000. |
| TerminalCapabilityBaseType | |
| sensoryDeviceCapabilityAttributes | Describes a group of attributes for the device capabilities. |

The SDCap metadata may include sensory device capability base attributes that denote groups regarding common attributes of the sensory device 530.

Table 4 shows an XML representation syntax regarding the sensory device capability base type according to example embodiments.

[Table 4]

```
<!-- ##################################################-->
<!--   Definition of Sensory Device Capability Attributes -->
<!-- ##################################################-->
<attributeGroup name="sensoryDeviceCapabilityAttributes">
    <attribute name="zerothOrderDelayTime" type="nonNegativeInteger"
use="optional"/>
    <attribute name="firstOrderDelayTime" type="nonNegativeInteger"
use="optional"/>
    <attribute name="location" type="mpeg7:termReferenceType" use="optional"/>
</attributeGroup>
```

Table 5 shows a binary representation syntax regarding the sensory device capability base type according to example embodiments.

[Table 5]

| sensoryDeviceCapability Attributes { | **Number of bits** | **Mnemonic** |
|---|---|---|
| zerothOrderDelayTimeFlag | 1 | bslbf |
| firstOrderDelayTimeFlag | 1 | bslbf |
| locationFlag | 1 | bslbf |
| if(zerothOrderDelayTimeFlag) { | | |
| zerothOrderDelayTime | 16 | uimsbf |
| } | | |
| ife firstOrderDelayTimeFlag) { | | |
| firstOrderDelayTime | 16 | uimsbf |
| } | | |
| if(locationFlag){ | | |
| location | | locationType |

(continued)

| sensoryDeviceCapability Attributes { | **Number of bits** | **Mnemonic** |
|---|---|---|
| } | | |
| } | | |

Table 6 shows a binary representation syntax regarding a location type of the sensory device capability base type according to example embodiments.

[Table 6]

| locationType | **Term ID of location** |
|---|---|
| 0000 | left. |
| 0001 | centerleft |
| 0010 | center |
| 0011 | centerright |
| 0100 | right |
| 0101 | bottom |
| 0110 | middle |
| 0111 | top |
| 1000 | back |
| 1001 | midway |
| 1010 | front |
| 1011-1111 | Reserved |

Table 7 shows descriptor components semantics regarding the sensory device capability base type according to example embodiments.

[Table 7]

| **Names** | **Descrlption** |
|---|---|
| sensoryDeviceCapabilityAttributes | Describes a group of attributes for the sensory device capabilities. |
| zerothOrderDelayTimeFlag | This field which is only present in the binary representation |
| | |
| | signals the presence of the activation attribute A value of "1" means the attribute shall be used and "0" means the attribute shall not be used. |
| firstOrderDelay/TimeFlag | This field which is only present in the binary representation, signals the presence of the activation attribute. A value of "1" means the attribute shall be used and "0" means the attribute shall not be used. |
| locationflag | This field, which is only present in the binary representation, signals the presence of the activation attribute A value of "1" means the attribute shall be used and "0" means the attribute shall not be used. |
| zerothOrderDelayTime | Describes required preparation time of a sensory device to be activated since it receives a command in the unit of millisecond (ms). |
| firstOrderDelay/Time | Describes the delay time for a device to reach the target intensity since it receives a command and is activated in the unit of millisecond (ms). |

(continued)

| Names | Description |
|---|---|
| location | Describes the position of the device from the user's perspective according to the x-, y-, and z-axis as a reference to the LocationCS as defined in Annex 2.3 of ISO/IEC 23005-6. The location attribute is defined in mpeg7: termReferenceType and is defined in Part 5 of ISO/IEC 15938. |

The sensory effect processing system may include MPEG-V information.

Table 7-1 shows a binary representation syntax regarding the MPEG-V information, according to example embodiments.

[Table 7-1]

| | Number of bits | Mnemonic |
|---|---|---|
| | | |
| MPEGVINFO { | 4 | |
| TypeOfMetadata | | bslbf |
| If (TypeOfMetadta =0) { | | |
| SEM | | SEM |
| }else(TypeOfMetadata =1){ | | |
| InteractionInfo | | InteractionInfo |
| }else(TypeOfMetadata =2){ | | |
| ControlInfo | | ControlInfo |
| }else(TypeOfMetadata =3){ | | |
| VWOC | | VWOC |
| } | | |
| } | | |

Table 7-2 shows descriptor components semantics regarding the MPEG-V information according to example embodiments.

[Table 7-2]

| Names | Description |
|---|---|
| TypeOfMetadata | This field, which is only present in the binary representation, indicates the type of the MPEGVINFO element.<br><table><tr><td>Binary representation for metadata (4 bits)</td><td>Term of Sensor</td></tr><tr><td>0</td><td>SEM</td></tr><tr><td>1</td><td>InteractionInfo</td></tr><tr><td>2</td><td>ControlInfo</td></tr><tr><td>3</td><td>VWOC</td></tr><tr><td>4-15</td><td>Reserved</td></tr></table> |
| SEM | The binary representation of the root element of sensory effect metadata. |
| InteractionInfo | The binary representation of the root element of interaction information. |
| ControlInfo | The binary representation of the root element of control information metadata. |
| VWOC | The binary representation of the root element of virtual world object characteristics metadata. |

The sensory device 530 may be classified into a plurality of types depending on types of the drive unit 532 that executes the effect event.

For example, the sensory device 530 may include a light type, a flash type, a heat type, a cooling type, a wind type, a vibration type, a scent type, a fog type, a sprayer type, a color correction type, a tactile type, a kinesthetic type, and a rigid body motion type.

Table 7-2 shows a binary representation syntax regarding each type of the sensory device 530.

[Table 7-2]

| Binary Representation for Actuator Type | Term of Actuator |
|---|---|
| 00000 | Light type |
| 00001 | Flash type |
| 00010 | Heating type |
| 00011 | Cooling type |
| 00100 | Wind type |
| 00101 | Vibration type |
| 00110 | Sprayer type |
| 00111 | Fog type |
| 01000 | Color correction type |
| 01001 | Initialize color correction parameter type |
| 01010 | Rigid body motion type |
| 01011 | Tactile type |

(continued)

| Binary Representation for Actuator Type | Term of Actuator |
|---|---|
| 01100 | Kinesthetic type |
| 01101-1111 | Reserved |

Hereinafter, the respective capability information regarding the sensory device will be described in detail.

Table 8 shows an XML representation syntax regarding the light type sensory device.

[Table 8]

```
<!-- ################################################ -->
<!-- Light capability type                                                  -->
<!-- ################################################ -->
<complexType name="LightCapabilityType">
<complexContent>
        <extension base="cidl:SensoryDeviceCapabilityBaseType">
                <sequence>
                        <element name="Color" type="mpegvct:colorType" minOccurs="0" maxOccurs="unbounded"/>
                </sequence>

                <attribute name="unit" type="mpegvct:unitType" use="optional"/>
                <attribute name="maxIntensity" type="nonNegativeInteger" use="optional"/>
                <attribute name="numOfLightLevels" type="nonNegativeInteger" use="optional"/>
        </extension>
</complexContent>
</complexType>
```

Table 9 shows a binary representation syntax regarding the light type sensory device.

[Table 9]

| LightCapabilityType { | **Number of bits** | **Mnemonic** |
|---|---|---|
| ColorFlag | 1 | bslbf |
| unitFlag | 1 | bslbf |
| maxIntensityFlag | 1 | bslbf |
| numOfLightLevelsFlag | 1 | bslbf |
| SensoryDeviceCapabilityBase | | SensoryDeviceCapabilityBaseType |
| if(ColorFlag){ | | |
| LoopColor | | vluimsbf5 |
| for(k=0; k<LoopColor;k++){ | | |

(continued)

| LightCapabilityType { | Number of bits | Mnemonic |
|---|---|---|
| Color[k] | | ColorType |
| } | | |
| } | | |
| if(unitFlag){ | | |
| unit | | unitType |
| } | | |
| if(maxIntensityFlag){ | | |
| maxIntensity | 8 | uimsbf |
| } | | |
| if(numOfLightLevelsFlag){ | | |
| numOfLightLevels | 8 | uimsbf |
| } | | |
| } | | |

Table 10 shows descriptor components semantics regarding the light type sensory device.

[Table 10]

| **Names** | **Description** |
|---|---|
| LightCapabilityType | Tool for describing a light capability. |
| ColorFlag | This field, which is only present in the binary representation |
| | |
| | signals the presence of the activation attribute A value of "1" means the attribute shall be used and "0" means the attribute shall not be used. |
| unitFlag | This field, which is only present in the binary representation, signals the presence of the activation attribute. A value of "1" means the attribute shall be used and "0" means the attribute shall not beused. |
| maxIntensityFlag | This field, which is only present in the binary representation, signals the presence of the activation attribute. A value of "1" means the attribute shall be used and "0" means the attribute shall not be used. |
| numOfLightLevelsFlag | This field, which is only present in the binary representation, signals the presence of the activation attribute. A value of "1" means the attribute shall be used and "0" means the attribute shall not be used. |
| SensoryDeviceCapabilityBase | SensoryDeviceCapabilityBase extends dia:TerminalCapabilityBaseType and provides a base abstract type for a subset of types defined as part of the sensory device capability metadata types For details of dia:TerminalCapabilityBaseType, refer to the Part 7 of ISO/IEC 21000 |
| LoopColor | This field, which is only present in the binary representation, specifies the number of Color contained in the description |
| Color | Describes the list of colors which the lighting device can provide as a reference to a classification scheme term or as RGB value A CS that may be used for this purpose is the ColorCS defined in A. 2.2 of ISO/IEC 23005-6. |
| | |

(continued)

| Names | Description |
|---|---|
| unit | Specifies the unit of the maxIntensity, if a unit other than the default unit is used, as a reference to a classification scheme term provided by UnitTypeCS defined in A.2.1 of ISO/IEC 23005-6. |
| maxIntensity | Describes the maximum intensity that the lighting device can provide in terms of LUX. |
| numOfLightLevels | Describes the number of intensity levels that the device can provide in between maximum and minimum intensity of light. |

Table 11 shows an XML representation syntax regarding the flash type sensory device.

[Table 11]

```
<!-- ################################################ -->
<!--    Flash capability type                          -->
<!-- ################################################ -->
<complexType name="FlashCapabilityType">
<complexContent>
        <extension base="dcdv:LightCapabilityType">
                <attribute name="maxFrequency" type="positiveInteger" use="optional"/>
                <attribute      name="numOfFreqLevels"      type="nonNegativeInteger"
use="optional"/>
        </extension>
</complexContent>
</complexType>
```

Table 12 shows a binary representation syntax regarding the flash type sensory device.

[Table 12]

| FlashCapabilityType { | Number of bits | Mnemonic |
|---|---|---|
| maxFrequencyFlag | 1 | bslbf |
| numOfFreqLevelsFlag | 1 | bslbf |
| LightCapability | | LightCapabilityType |
| if(maxFrequencyFlag){ | | |
| maxFrequency | 8 | uimsbf |
| } | | |
| if(numOfFreqLevelsFlag){ | | |
| numOfFreqLevels | 8 | uimsbf |
| } | | |
| } | | |

Table 13 shows descriptor components semantics regarding the flash type sensory device.

[Table 13]

| Names | Description |
|---|---|
| PlashCapabilityType | Tool for describing a flash capability. It is extended from the light capability type. |
| maxFrequencyFlag | This field, which is only present in the binary representation, signals the presence of the activation attribute. A value of "1" means the attribute shall be used and "0" means the attribute shall not be used. |
| numOfFreqLevelsFlag | This field, which is only present in the binary representation, signals the presence of the activation attribute. A value of "1" means the attribute shall be used and "0" means the attribute shall not be used. |
| LightCapability | Describes a light capability. |
| maxFrequency | Describes the maximum number of flickering in times per second. |
| numOfFreqLevels | Describes the number of frequency levels that the device can |
| | |
| | provide in between maximum and minimum frequency. |

Table 14 shows an XML representation syntax regarding the heating type sensory device.

[Table 14]

```
<!-- ################################################ -->
<!--    Heating capability type                          -->
<!-- ################################################ -->
<complexType name="HeatingCapabilityType">
    <complexContent>
        <extension base="cidl:SensoryDeviceCapabilityBaseType">
            <attribute name="maxIntensity" type="nonNegativeInteger" use="optional"/>
            <attribute name="minIntensity" type="integer" use="optional"/>
            <attribute name="unit" type="mpegvct:unitType" use="optional"/>
            <attribute name="numOfLevels" type="nonNegativeInteger" use="optional"/>
        </extension>
    </complexContent>
</complexType>
```

Table 15 shows a binary representation syntax regarding the heating type sensory device.

[Table 15]

| HeatingCapabilityType { | Number of bits | Mnemonic |
|---|---|---|
| maxIntensityFlag | 1 | bslbf |

(continued)

| HeatingCapabilityType { | Number of bits | Mnemonic |
|---|---|---|
| minIntensityFlag | 1 | bslbf |
| unitFlag | 1 | bslbf |
| numOfLevelsFlag | 1 | bslbf |
| SensoryDeviceCapabilityBase | | SensoryDeviceCapabilityBaseType |
| if(maxIntensityFlag){ | | |
| maxIntensity | 8 | uimsbf |
| } | | |
| if(minIntensityFlag){ | | |
| minIntensity | 10 | simsbf |
| } | | |
| if(unitFlag){ | | |
| unit | | unitType |
| } | | |
| if(numOfLevelsFlag){ | | |
| numOfLevels | 8 | uimsbf |
| } | | |
| } | | |

Table 16 shows descriptor components semantics regarding the heating type sensory device.

[Table 16]

| **Names** | **Description** |
|---|---|
| HeatingCapabilityType | Tool for describing the capability of a device which can increase the room temperature |
| maxIntensityFlag | This field, which is only present in the binary representation, signals the presence of the activation attribute A value of "1" means the attribute shall be used and "0" means the attribute shall not be used. |
| minIntensityFlag | This field, which is only present in the binary representation, signals the presence of the activation attribute. A value of "1" means the attribute shall be used and "0" means the attribute shall not be used. |
| unitFlag | This field, which is only present in the binary representation, signals the presence of the activation attribute A value. of "1" means the attribute shall be used and "0" means the attribute shall not be used. |
| numOfLevelsFlag | This field, which is only present in the binary representation, signals the presence of the activation attribute. A value of "1" means the attribute shall be used and "0" means the attribute shall not be used. |
| SensoryDeviceCapabilityBase | SensoryDeviceCapabilityBase extends dia:TerminalCapabilityBaseType and provides a base abstract type for a subset of types defined as part of the sensory device capability metadata types For details of dia:TerminalCapabilityBaseType, refer to the Part 7 of ISO/IEC21000. |
| maxIntensity | Describes the highest temperature that the heating device can provide in terms of Celsius (or Fahrenheit). |

(continued)

| Names | Description |
|---|---|
| minIntensity | Describes the lowest temperature that the heating device can provide in terms of Celsius (or Fahrenheit). |
| unit | Specifies the unit of the intensity, as a reference to a classification scheme term provided by UnitTypeCS defined in A.2.1 of ISO/IEC 23005-6 (it shall be a reference to neither Celsius or Fahrenheit) If the unit is not specified, the default unit is Celsius. |
| numOfLevels | Describes the number of temperature levels that the device can provide in between maximum and minimum temperature. |

Table 17 shows an XML representation syntax regarding the cooling type sensory device.

[Table 17]

```
<!-- ################################################ -->
<!--    Cooling capability type                      -->
<!-- ################################################ -->

<complexType name="CoolingCapabilityType">
    <complexContent>
        <extension base="cidl:SensoryDeviceCapabilityBaseType">
            <attribute name="minIntensity" type="integer" use="optional"/>
            <attribute name="maxIntensity" type="nonNegativeInteger"
use="optional"/>
            <attribute name="unit" type="mpegvct:unitType"
use="optional"/>
            <attribute name="numOfLevels" type="nonNegativeInteger"
use="optional"/>
        </extension>
    </complexContent>
</complexType>
```

Table 18 shows a binary representation syntax regarding the cooling type sensory device.

[Table 18]

| CoolingCapabilityType { | Number of bits | Mnemonic |
|---|---|---|
| maxIntensityFlag | 1 | bslbf |
| minIntensityFlag | 1 | bslbf |
| unitFlag | 1 | bslbf |
| numOfLevelsFlag | 1 | bslbf |
| SensoryDeviceCapabilityBase | | SensoryDeviceCapabilityBaseType |
| if(maxIntesisityFlag){ | | |

(continued)

| CoolingCapabilityType { | Number of bits | Mnemonic |
|---|---|---|
| maxIntensity | 8 | uimsbf |
| } | | |
| if(minIntensityFlag){ | | |
| minIntensity | 10 | simsbf |
| } | | |
| if(unitFlag){ | | |
| unit | | unitType |
| } | | |
| if(numOfLevelsFlag){ | | |
| numOfLevels | 8 | uimsbf |
| } | | |
| } | | |

Table 19 shows descriptor components semantics regarding the cooling type sensory device.

[Table 19]

| **Names** | **Description** |
|---|---|
| CoolingCapabilityType | Tool for describing the capability of a device which can decrease the room temperature. |
| maxIntensityFlag | This field, which is only present in the binary representation, signals the presence of the activation attributes. A value of "1" means the attribute shall be used and "0" means the attribute shall not be used. |
| minIntensityFlag | This field, which is only present in the binary representation, signals the presence of the activation attribute A value of "1" means the attribute shall be used and "0" means the attribute shall not be used. |
| unitFlag | This field, which is only present in the binary representation, signals the presence of the activation attribute A value of "1" means the attribute shall be used and "0" means the attribute shall not be used. |
| numOfLevelsFlag | This field, which is only present in the binary representation, signals the presence of the activation attribute. A value of "1" means the attribute shall be used and "0" means the attribute shall not be used |
| SensoryDeviceCapabilityBase | SensoryDeviceCapabilityBase extends dia:TerminalCapabilityBaseType and provides a base abstract type for a subset of types defined as part of the sensor device capability metadata types For details of dia:TerminalCapabilityBaseType, refer to the Part 7 or ISO/IEC 21000. |
| maxIntensity | Describes the lowest temperature that the cooling device can provide in terms of Celsius. |
| minIntensity | Describes the highest temperature that the cooling device can provide in terms of Celsius. |
| unit | Specifies the unit of the intensity, as a reference to a Classification scheme term provided by UnitTypeCS defined in A.2.1 of ISO/IEC 23005-6 (it shall be a reference to either Celsius or Fahrenheit) If the unit is not specified, the default unit is Celsius. |

(continued)

| Names | Description |
|---|---|
| numOfLevels | Describes provide in the number of temperature levels that the device can between maximum and minimum temperature. |

Table 20 shows an XML representation syntax regarding the wind type sensory device.

[Table 20]

```
<!-- ################################################ -->
<!-- Wind type                                        -->
<!-- ################################################ -->
<complexType name="WindCapabilityType">
    <complexContent>
        <extension base="cidl:SensoryDeviceCapabilityBaseType">
            <attribute name="maxWindSpeed" type="nonNegativeInteger" use="optional"/>
            <attribute name="unit" type="mpegvct:unitType" use="optional"/>
            <attribute name="numOfLevels" type="nonNegativeInteger" use="optional"/>
        </extension>
    </complexContent>
</complexType>
```

Table 21 shows a binary representation syntax regarding the wind type sensory device.

[Table 21]

| WindCapabilityType { | Number of bits | Mnemonic |
|---|---|---|
| maxWindSpeedFlag | 1 | bslbf |
| unitFlag | 1 | bslbf |
| numOfLevelsFlag | 1 | bslbf |
| SensoryDeviceCapabilityBase | | SensoryDeviceCapabiLityBaseType |
| if(maxWindSpeedFlag){ | | |
| maxWindSpeed | 8 | uimsbf |
| } | | |
| if(unitFlag){ | | |
| unit | | unitType |
| } | | |
| if(numOfLevelsFlag){ | | |
| numOfLevels | 8 | uimsbf |
| } | | |
| } | | |

Table 22 shows descriptor components semantics regarding the wind type sensory device.

[Table 22]

| **Names** | **Description** |
|---|---|
| WindCapabilityType | Tool for describing a wind capability, |
| maxWindSpeedFlag | This field, which is only present in the binary representation, signals the presence of the activation attribute. A value of "1" means the attribute shall be used and "0" means the attribute shall not be used. |
| unitFlag | This field, which is only present in the binary representation, signals the presence of the activation attribute A value of "1" means the attribute shall be used and "0" means the attribute shall not be used. |
| numOfLevelsFlag | This field, which is only present in the binary representation, signals the presence of the activation attribute. A value of "1" means the attribute shall be used and "0" means the attribute shall not be used. |
| SensoryDeviceCapabilityBase | SensoryDeviceCapabilityBase extends dia:TerminalCapabilityBaseType and provides a base abstract type for a subset of types defined as part of the sensory device capability metadata types. For details of dia:TerminalCapabilityBaseType, refer to the Part 7 of ISO/IEC 21000. |
| maxWindSpeed | Describes the maximum wind speed that the fan can provide in terms of Meter per second. |
| unit | Specifies the unit of the intensity, if a unit other than the default unit specified in the semantics of the maxWindSpeed is used, as a reference to a classification scheme term provided by UnitTypeCS defined in A.2.1 of ISO/IEC 23005-6. |
| numOfLevels | Describes the number of wind speed levels that the device can provide in between maximum and minimum speed. |

Table 23 shows an XML representation syntax regarding the vibration type sensory device.

[Table 23]

```xml
<!-- ################################################# -->
```

```
<!--    Vibration capability type                                   -->
<!-- ################################################ -->
<complexType name="VibrationCapabilityType">
    <complexContent>
        <extension base="cidl:SensoryDeviceCapabilityBaseType">
            <attribute name="maxIntensity" type="nonNegativeInteger" use="optional"/>
            <attribute name="unit" type="mpegvct:unitType" use="optional"/>
            <attribute name="numOfLevels" type="nonNegativeInteger" use="optional"/>
        </extension>
    </complexContent>
</complexType>
```

Table 24 shows a binary representation syntax regarding the vibration type sensory device.

[Table 24]

| VibrationCapabilityType { | **Number of bits** | **Mnemonic** |
|---|---|---|
| maxIntensityFlag | 1 | bslbf |
| unitFlag | 1 | bslbf |
| numOfLevelsFlag | 1 | bslbf |
| Sensory DeviceCapability Base | | SensoryDeviceCapabiLityBaseType |
| if(maxInteiisityFlag){ | | |
| maxIntensity | 8 | uimsbf |
| } | | |
| if(unitFlag){ | | |
| unit | | unitType |
| } | | |
| if(numOfLevelsFlag){ | | |
| numOfLevels | 8 | uimsbf |
| } | | |
| } | | |

Table 25 shows descriptor components semantics regarding the vibration type sensory device.

[Table 25]

| **Names** | **Description** |
|---|---|
| VibrationCapabilityType | Tool for describing a vibration capability. |
| maxIntensitFlag | This field which is only present in the binary representation signals the presence of the activation attribute A value of "1" means the attribute shall be used and "0" means the attribute shall not be used. |

(continued)

| Names | Description |
|---|---|
| unitflag | This field, which is only present in the Binary representation signals the presence of the activation attribute A value of "1" means the attribute shall be used and "0" means the attribute shall not be used. |
| numOfLevelsFlag | This field which is only present in the binary representation signals the presence of the activation attribute A value of "1" means the attribute shall be used and "0" means the attribute shall not be used. |
| SensoryDeviceCapabilityBase | SensoryDeviceCapabilityBase extends dia:TeminalCapabilityBaseType and provides a base abstract type for a subset of types defined as part of the sensory device capability metadata types. For details of dia:TerminalCapabilityBaseType refer to the Part 7 of ISO/IEC 21000. |
| maxIntensity | Describes the maximum intensity that the vibrator device can provide in terms of Richter magnitude. |
| unit | Specifies the unit of the intensity, if a unit other than the default unit specified in the semantics of the maxIntensity is used, as a reference to a classification scheme term provided by |
| | |
| | UnitTypeCS defined in A.2.1 of ISO/IEC 23005-6. |
| numOfLevels | Describes the number of intensity levels that the device can provide in between zero and maximum intensity. |

Table 26 shows an XML representation syntax regarding the scent type sensory device.

[Table 26]

```
<!-- ################################################ -->
<!--   Scent capability type                            -->
<!-- ################################################ -->
<complexType name="ScentCapabilityType">
    <complexContent>
```

```
<extension base="cidl:SensoryDeviceCapabilityBaseType">
    <sequence>
        <element name="Scent" type="mpeg7:termReferenceType" minOccurs="0" maxOccurs="unbounded"/>
    </sequence>
    <attribute name="maxIntensity" type="nonNegativeInteger" use="optional"/>
    <attribute name="unit" type="mpegvct:unitType" use="optional"/>
    <attribute name="numOfLevels" type="nonNegativeInteger" use="optional"/>
</extension>
</complexContent>
</complexType>
```

Table 27 shows a binary representation syntax regarding the scent type sensory device.

[Table 27]

| ScentCapabilityType { | **Number of bits** | **Mnemonic** |
|---|---|---|
| ScentFlag | 1 | bslbf |
| maxIntensityFlag | 1 | bslbf |
| unitFlag | 1 | bslbf |
| numOfLevelsFlag | 1 | bslbf |
| SensoryDeviceCapabiLityBase | | SensoryDeviceCapabiLityBaseType |
| if(ScentFlag){ | | |
| LoopScent | | vluimsbf5 |
| for(k=0;k<LoopScent;k++){ | | |
| Scent[k] | | ScentType |
| } | | |
| } | | |
| if(maxIntensityFlag){ | | |
| maxIntensity | 8 | uimsbf |
| } | | |
| if(unitFlag){ | | |
| unit | | unitType |
| } | | |
| if(numOfLevelsFlag){ | | |
| numOfLevels | 8 | uimsbf |
| } | | |
| } | | |

Table 28 shows a binary representation syntax regarding the scent type sensory device.

[Table 28]

| scentType | **Term ID of scent** |
|---|---|
| 0000 | rose |
| 0001 | acacia |
| 0010 | chrysanthemum. |
| 0011 | lilac |
| 0100 | mint |
| 0101 | jasmine |
| 0110 | pine_tree |
| 0111 | orange |
| 1000 | grape |
| 1001-1111 | Reserved |

Table 29 shows descriptor components semantics regarding the scent type sensory device.

[Table 29]

| **Names** | **Description** |
|---|---|
| ScentCapabilityType | Tool for describing a scent capability. |
| ScentFlag | This field, which is only present in the binary representation, signals the presence of the activation attribute. A value of "1" means the attribute shall be used and "0" means the attribute shall not be used. |
| maxIntensityFlag | This field which is only present in the binary representation, signals the presence of the activation attribute. A value of "1" means the attribute shall be used and "0" means the attribute shall not be used. |
| unitFlag | This field, which is only present in the binary representation, signals the presence of the activation attribute. A value of "1" means the attribute shall be used and "0" means the attribute shall not be used. |
| numOfLevelsFlag | This field, which is only present in the binary representation, signals the presence of the activation attribute A value of "1" means the attribute shall be used and "0" means the attribute shall not be used. |
| SensoryDeviceCapabilityBase | SensoryDeviceCapabilityBase extends |
| | |
| | dia:TerminalCapabilityBaseType and provides a base abstract type for a subset of types defined as part of the sensory device capability metadata types. For details of dia:TerminalCapabilityBaseType, refer to the Part 7 of ISO/IEC 21000. |
| LoopScent | This field, which is only present in the binary representation, specifies the number of Scent contained in the description. |
| Scent | Describes the list of scent that the perfumer can provide. A CS that may be used for this purpose is the ScentCS defined in A.2.4 of ISO/IEC23005-6. |
| maxIntensity | Describes the maximum intensity that the perfumer can provide in terms of ml/h |

(continued)

| Names | Description |
|---|---|
| | |
| maxIntensity | Describes the maximum intensity that the perfumer can provide in terms of ml/h |
| unit | Specifies the unit of the intensity, if a unit other than the default unit specified in the semantics of the maxintensity is used, as a reference to a classification scheme term provided by UnitTypeCS defined in A.2.1 of ISO/IEC 23005-6. |
| numOfLevels | Describes the number of intensity levels of the scent that the device can provide in between zero and maximum intensity. |

Table 30 shows an XML representation syntax regarding the fog type sensory device.

[Table 30]

```
<!-- ################################################ -->
<!--    Fog capability type                             -->
<!-- ################################################ -->
<complexType name="FogCapabilityType">
    <complexContent>
        <extension base="cidl:SensoryDeviceCapabilityBaseType">
            <attribute name="maxIntensity" type="nonNegativeInteger"
use="optional"/>
            <attribute name="unit" type="mpegvct:unitType" use="optional"/>
            <attribute name="numOfLevels" type="nonNegativeInteger"
use="optional"/>
        </extension>
    </complexContent>
</complexType>
```

Table 31 shows a binary representation syntax regarding the fog type sensory device.

[Table 31]

| FogCapabilityType { | Number of bits | Mnemonic |
|---|---|---|
| maxIntensityFlag | 1 | bslbf |
| unitFlag | 1 | bslbf |
| numOfLevelsFlag | 1 | bslbf |
| SensoryDeviceCapabilityBase | | SensoryDeviceCapabilityBaseType |
| if(maxIntensityFlag){ | | |
| maxIntensity | 8 | uimsbf |
| } | | |
| if(unitFlag){ | | |
| unit | | unitType |

(continued)

| FogCapabilityType { | Number of bits | Mnemonic |
|---|---|---|
| } | | |
| if(numOfLevelsFlag){ | | |
| numOfLevels | 8 | uimsbf |
| } | | |
| } | | |

Table 32 shows descriptor components semantics regarding the fog type sensory device.

[Table 32]

| Names | Description |
|---|---|
| FogCapabilityType | Tool for describing a fog capabiliy. |
| maxIntensityFlag | This field which is only present in the Binary representation, signals the presence of the activation attribute A value of 1" means the attribute shall be used and "0" means the attribute shall not be used. |
| unitFlag | This field, which is only present in the binary representation, signals the presence of the activation attribute A value of "1" means the attribute shall be used and "0" means the attribute shall not be used. |
| numOfLevelsFlag | This field, which is only present in the binary representation, signals the presence of the activation attributes A value of "1" means the attribute shall be used and "0" means the attribute shall not be used |
| SensoryDeviceCapabilityBase | SensoryDeviceCapabilityBase extends dia:TerminalCapabilityBaseType and provides a base abstract type for a subset of types defined as part of the sensory device capability metadata types. For details of dia:TerminalCapabilityBaseType, refer to the Part 7 of ISO/IEC 21000. |
| maxIntensity | Describes the maximum intensity that the fog device can provide in terms of ml/h. |
| unit | Specifies the unit of the intensity, if a unit other than the default unit specified in the semantics of the maxIntensity is used, as a reference to a classification scheme term provided by UnitTypeCS defined in A.2.1 of ISO/IEC23005-6. |
| numOfLevels | Describes the number of intensity levels of the fog that the device canprovide in between zero and maximum intensity. |

Table 33 shows an XML representation syntax regarding the sprayer type sensory device.

[Table 33]

```
<!-- ################################################ -->
<!--   Sprayer capability type                       -->
<!-- ################################################ -->
<complexType name="SprayerCapabilityType">
```

```
        <complexContent>
            <extension base="cidl:SensoryDeviceCapabilityBaseType">
                <attribute name="sprayingType" type="mpeg7:termReferenceType"/>
                <attribute name="maxIntensity" type="nonNegativeInteger" use="optional"/>
                <attribute name="unit" type="mpegvct:unitType" use="optional"/>
                <attribute name="numOfLevels" type="nonNegativeInteger" use="optional"/>
            </extension>
        </complexContent>
    </complexType>
```

Table 34 shows a binary representation syntax regarding the sprayer type sensory device.

[Table 34]

| SprayerCapabilityType { | **Number of bits** | **Mnemonic** |
|---|---|---|
| sprayingFlag | 1 | bslbf |
| maxIntensityFlag | 1 | bslbf |
| unitFlag | 1 | bslbf |
| numOfLevelsFlag | 1 | bslbf |
| SensoryDeviceCapabiLityBase | | SensoryDeviceCapabiLityBaseType |
| if(sprayingFlag) { | | |
| spraying | | SprayingType |
| } | | |
| if(maxIntensityFlag){ | | |
| maxIntensity | 8 | uimsbf |
| } | | |
| if(unitFlag){ | | |
| unit | | unitType |
| } | | |
| if(numOfLevelsFlag){ | | |
| numOfLevels | 8 | uimsbf |
| } | | |
| } | | |

Table 35 shows a binary representation syntax regarding the sprayer type sensory device.

[Table 35]

| **SprayingType** | **Term ID of Spraying** |
|---|---|
| 00 | water |
| 01-11 | Reserved |

Table 36 shows descriptor components semantics regarding the sprayer type sensory device.

[Table 36]

| **Names** | **Description** |
|---|---|
| SprayerCapabilityType | Tool for describing a fog capability. |
| sprayingFlag | This field which is only present in the binary representation signals the presence of the activation attribute. A value of "1" means the attribute shall be used and "0" means the attribute shall not be used. |
| maXIntensityFlag | This field, which is only present in the binary representation, signals the presence of the activation attribute A value of "1" means the attribute shall be used and "0" means the attribute shall not be used. |
| unitFlag | This field, which is only present in the binary representation, signals the presence of the activation attribute A value of "1" means the attribute shall be used and "0" means the attribute shall not be used. |
| numOfLevelsFlag | This field, which is only present in the binary representation, signals the presence of the activation attribute. A value of "1" means the attribute shall be used and "0" means the attribute shall not be used. |
| SensoryDeviceCapabilityBase | SensoryDeviceCapabilityBase extends dia:TerminalCapabilityBaseType and provides a base abstract type for a subset of types defined as part of the sensory device capability metadata types For details of dia:TerminalCapabilityBaseType refer to the Part 7 of ISO/IEC 21000. |
| spraying | Describes the type of the sprayed material as a reference to a classification scheme term. A CS that may be used for this purpose is the SprayingTypeCS defined in Annex A.2.7 of ISO/IEC 23005-6. |
| maxIntensity | Describes the maximum intensity that the water sprayer can provide in terms of ml/h |
| unit | specified the unit of the intensity, if a unit other than the default unit specified in the semantics of the maxIntensity is used, as a reference to a classification scheme term provided by UnitTypeCS defined in A.2.1 of ISO/IEC 23005-6. |
| | |
| numOfLevels | Describes the number of intensity levels of the fog that the device can provide in between zero and maximum intensity. |

Table 37 shows an XML representation syntax regarding the color correction type sensory device.

[Table 37]

```
<!-- ################################################ -->
<!--    Definition of Color Correction Type              -->
<!-- ################################################ -->
<complexType name="ColorCorrectionCapabilityType">
        <complexContent>
                <extension base="cidl:SensoryDeviceCapabilityBaseType">
                        <attribute name="flag" type="boolean" use="optional"/>
                </extension>
        </complexContent>
</complexType>
```

Table 38 shows a binary representation syntax regarding the color correction type sensory device.

[Table 38]

| ColorCorrectionCapabilityType { | **Number of bits** | **Mnemonic** |
|---|---|---|
| flagFlag | 1 | bslbf |
| SensoryDeviceCapabiLityBase | | SensoryDeviceCapabiLityBaseType |
| if(flagFlag) { | | |
| flag | 1 | bslbf |
| } | | |
| } | | |

Table 39 shows descriptor components semantics regarding the color correction type sensory device.

[Table 39]

| **Names** | **Description** |
|---|---|
| Co orCorrectionCapabilityType | Tool for describing a fog capability. |
| flagFlag | This field, which is only present in the binary representation, signals the presence of the activation attribute A value of "1" means the attribute shall be used and "0" means the attribute shall not be used. |
| SensoryDeviceCapabilityBase | SensoryDeviceCapabilityBase extends dia:TeminalCapabilityBaseType and provides a base abstract type for a subset of types defined as part of the sensory device capability metadata types. For details of dia:TerminalCapabilityType refer to the Part 7 of ISO/IEC 21000. |
| flag | Describes the existence of the color correction capability of the given device in terms of "true" and "false", |

Table 40 shows an XML representation syntax regarding the tactile type sensory device.

[Table 40]

```
<!-- ################################################ -->
<!--    Tactile capability type                        -->
<!-- ################################################ -->
<complexType name="TactileCapabilityType">
<complexContent>
    <extension base="cidl:SensoryDeviceCapabilityBaseType">
        <attribute name="intensityUnit" type="mpegvct:unitType" use="optional"/>
        <attribute name="maxValue" type="nonNegativeInteger" use="optional"/>
        <attribute name="minValue" type="nonNegativeInteger" use="optional"/>
        <attribute name="arraysizeX" type="integer"/>
        <attribute name="arraysizeY" type="integer"/>
        <attribute name="gapX" type="float" use="optional"/>
        <attribute name="gapY" type="float" use="optional"/>
        <attribute name="gapUnit" type="mpegvct:unitType" use="optional"/>
        <attribute name="maxUpdateRate" type="integer" use="optional"/>

        <attribute name="updateRateUnit" type="mpegvct:unitType" use="optional"/>
        <attribute name="actuatorType" type="mpeg7:termReferenceType" use="optional"/>
        <attribute name="numOfLevels" type="nonNegativeInteger" use="optional"/>
    </extension>
</complexContent>
</complexType>
```

Table 41 shows a binary representation syntax regarding the tactile type sensory device.

[Table 41]

| TactileCapabilityType { | **Number of bits** | **Mnemonic** |
|---|---|---|
| intensityUnitFlag | 1 | bslbf |
| maxValueFlag | 1 | bslbf |
| minValueFlag | 1 | bslbf |
| arraysizeXFlag | 1 | bslbf |
| arraysizeYFlag | 1 | bslbf |
| gapXFlag | 1 | bslbf |
| gapYFlag | 1 | bslbf |

(continued)

| TactileCapabilityType { | **Number of bits** | **Mnemonic** |
|---|---|---|
| gapUnitFlag | 1 | bslbf |
| maxUpdateRateFlag | 1 | bslbf |
| updateRateUnitFlag | 1 | bslbf |
| actuatorTypeFlag | 1 | bslbf |
| numOfLevelsFlag | 1 | bslbf |
| SensoryDeviceCapabilityBase | | SensoryDeviceCapabilityBaseType |
| if(intensityUnitFlag) { | | |
| intensityUnit | | unitType |
| } | | |
| if(maxValueFlag){ | | |
| maxValue | 8 | uimsbf |
| } | | |
| if(minValueFlag) { | | |
| minValue | 8 | uimsbf |
| } | | |
| if(arraysizeXFlag){ | | |
| arraysizeX | 10 | simsbf |
| } | | |
| if(arraysizeYFlag){ | | |
| arraysizeY | 10 | simsbf |
| } | | |
| if(gapXFlag){ | | |
| gapX | 32 | fsbf |
| } | | |
| if(gapYFlag){ | | |
| gapY | 32 | fsbf |
| } | | |
| if(gapUnitFlag){ | | |
| gapUnit | | unitType |
| } | | |
| if(maxUpdateRateFlag){ | | |
| maxUpdateRate | 10 | simsbf |
| } | | |
| if(updateRateUnitFlag){ | | |
| updateRateUnit | | unitType |
| } | | |
| if(actuatorTypeFlag){ | | |
| actuatorType | | TactileDisplaycsType |

(continued)

| TactileCapabilityType { | Number of bits | Mnemonic |
|---|---|---|
| } | | |
| if(numOfLevelsFlag){ | | |
| numOfLevels | 8 | uimsbf |
| } | | |
| } | | |

Table 42 shows a binary representation syntax regarding a tactile display type according to example embodiments.

[Table 42]

| TactileDisplaycsType | Term ID of TactileDisplay |
|---|---|
| 000 | vibrotactile |
| 001 | electrotactile |
| 010 | pneumatictactile |
| 011 | piezoelectrictactile |
| 100 | thermal |
| 101-111 | Reserved. |

Table 43 shows descriptor components semantics regarding the tactile type sensory device.

[Table 43]

| Names | Description |
|---|---|
| TactileCapabilityType | Tool for describing a tactile capability. |
| intensityUnitFlag | This field, which is only present in the binary representation signals the presence of the activation attribute. A value of "1" means the attribute shall be used and "0" means the attribute shall not be used. |
| maxValueFlag | This field, which is only present in the binary representation, signals the presence of the activation attribute. A value of "1" means the attribute shall be used and "0" means the attribute shall not be used. |
| minValueFlag | This field, which is only present in the binary representation, signals the presence of the activation attribute A value of "1" means the attribute shall be used and "0" means the attribute shall not be used. |
| arraysizeXFlag | This field, which is only present in the binary representation, signals the presence of the activation attribute A value of "1" means the attributes shall be used and "0" means the attribute shall not be used. |
| arraysi2eYFlag | This field, which is only present in the binary representation, signals the presence of the activation attribute A value of "1" means the attribute shall be used and "0" means the attribute shall not be used. |
| gapXFlag | This field, which is only present in the binary representation, signals the presence of the activation attribute A value of "1" means the attribute shall be used and "0" means the attribute shall not be used. |

(continued)

| Names | Description |
|---|---|
| gapYFlag | This field, which is only present in the binary representation, signals the presence of the activation attribute A value of "1" means the attribute shall be used and "0" means the attribute shall not be used. |
| gapUnitFlag | This field, which is only present in the binary representation, signals the presence of the activation attribute A value of "1" means the attribute shall be used and "0" means the attribute shall not be used. |
| maxUpdateRateFlag | This field, which is only present m the binary representation, signals the presence of the activation attribute A value of "1" means the attribute shall be used and "0" means the attribute shall not be used. |
| updateRalteUnitFlag | This field, which is only present in the binary representation, signals the presence of the activation attribute A value of "1" means the attribute shall be used and "0" means the attribute shall not be used. |
| actuatorTypeFlag | This field, which is only present in the binary representation. signals the presence of the activation attribute. A value of "1" means the attribute shall be used and "0" means the attribute shall not be used. |
| numOfLevelsFlag | This field, which is only present in the binary representation, signals the presence of the activation attribute A value of "1" means the attribute shall be used and "0" means the attribute shall not be used. |
| SensoryDeviceCapabilityBase | SensoryDeviceCapabilityBase extends dia:TeminalCapabilityBaseType and provides a base abstract type for a subset of types defined as part of the sensory device capability metadata types For details of dia:TerminalCapabilityBasetype, refer to the Part 7 of ISO/IEC 21000. |
| intensityUnit | Specifies the unit of the intensity for maxValue and minValue, as a reference to a classification scheme term provided by UnitTypeCS defined in A.2.1 of ISO/IEC 23005-6. There is no default unit specified as the intensityUnit may vary depending on the type of the actuator used for the Tactile device. For example, when an electrotactile device is selected the unit can be mA For a pneumatic tactile device, the unit may be either psi or Pa for a vibrotactile device, the unit may be hz (frequency), or mm (amplitude), for a thermal display, the unit may be either Celsius or Fahrenheit |
| maxValue | Describes the maximum intensity that a tactile device can drive in the unit specified by the intensityUnit attribute. |
| min Value | Describes the minimum intensity that a tactile device can drive in the unit specified by the intensityUnit attribute. |
| arraysizeX | Describes a number of actuators in X (horizontal) direction since |
| | |
| | a tactile device is formed as m-by-n array types, (integer) |
| arraysizeY | Describes a number of actuators in Y (vertical) direction since a tactile device is formed as m-by-n array types, (integer) |
| gapX | Describes the X directional gap space between actuators in a tactile device. (mm) |
| gapY | Describes the Y directional gap space between actuators in a tactile device.(mm) |
| gapUnit | Specifies the unit of the description of gapX and gapY attributes as a reference to a classification scheme term provided by UnitTypeCS defined in A.2.1 of ISO/IEC 23005-6, if any unit other than the default unit of mm is used |

(continued)

| Names | Description |
|---|---|
| | |
| maxUpdateRate | Describes a maximum update rate that a tactile device can drive. |
| updateRateUnit | Specifies the unit of the description of maxUpdateRate as a reference to a classification scheme term provided by UnitTypeCS defined in A.2.1 of ISO/IEC 23005-6, if any unit other than the default unit of Hz is used. |
| actuatorType | Describes a type of tactile device (e.g. vibrating motor, electrotactile device, pneumatic device, piezoelectric device, thermal device, etc). A CS that may be used for this purpose is the TactileDisplayCS defined in A.2.11 of ISO/IEC 23005-6. |
| numOfLevels | Describes the number of intensity levels that a tactile device can drive. |

Table 44 shows an XML representation syntax regarding the kinesthetic type sensory device.

[Table 44]

```
<!-- ################################################ -->
<!--    Kinesthetic capability type                                    -->
<!-- ################################################ -->
<complexType name="KinestheticCapabilityType">
    <complexContent>
        <extension base="cidl:SensoryDeviceCapabilityBaseType">
            <sequence>
                <element name="maximumForce" type="mpegvct:Float3DVectorType"/>
                <element name="maximumTorque" type="mpegvct:Float3DVectorType" minOccurs="0"/>
                <element name="maximumStiffness" type="mpegvct:Float3DVectorType" minOccurs="0"/>
                <element name="DOF" type="dcdv:DOFType"/>
                <element name="workspace" type="dcdv:workspaceType"/>
            </sequence>
            <attribute name="forceUnit" type="mpegvct:unitType" use="optional"/>
            <attribute name="torqueUnit" type="mpegvct:unitType" use="optional"/>
            <attribute name="stiffnessUnit" type="mpegvct:unitType" use="optional"/>
        </extension>
    </complexContent>
</complexType>

<complexType name="DOFType">
    <sequence>
        <element name="Tx" type="boolean"/>
        <element name="Ty" type="boolean"/>
        <element name="Tz" type="boolean"/>
        <element name="Rx" type="boolean"/>
        <element name="Ry" type="boolean"/>
        <element name="Rz" type="boolean"/>
    </sequence>
</complexType>

<complexType name="workspaceType">
    <sequence>
        <element name="Width" type="float"/>
```

```
            <element name="Height" type="float"/>
            <element name="Depth" type="float"/>
            <element name="RotationX" type="float"/>
            <element name="RotationY" type="float"/>
            <element name="RotationZ" type="float"/>
        </sequence>
    </complexType>
```

Table 45 shows a binary representation syntax regarding the kinesthetic type sensory device.

[Table 45]

| KinestheticCapabilityType { | **Number of bits** | **Mnemonic** |
|---|---|---|
| maximumTorqueFlag | 1 | bslbf |
| maximumStiffnessFlag | 1 | bslbf |
| forceUnitFlag | 1 | bslbf |
| torqueUnitFlag | 1 | bslbf |
| stiffnessUnitFlag | 1 | bslbf |
| SensoryDeviceCapabilityBase | | SensoryDeviceCapabilityBaseType |
| maximumForce | | Float3DVectorType |
| if(maximumTorqueFlag) { | | |
| maximumTorque | | Float3DVectorType |
| } | | |
| if(maximumStiffnessFlag) { | | |
| maximumStiffness | | Float3DVectorType |
| } | | |
| DOF | | DOFType |
| workspace | | workspaceType |
| If(forceUnitFlag) { | | |
| forceUnit | | unitType |
| } | | |
| if(torqueUnitFlag) { | | |
| torqueUnit | | unitType |
| } | | |
| if(stiffnessUnitFlag) { | | |
| stiffnessUnit | | unitType |
| } | | |
| } | | |
| Float3DVectorType { | | |
| X | 32 | fsbf |
| Y | 32 | fsbf |

(continued)

| KinestheticCapabilityType { | Number of bits | Mnemonic |
|---|---|---|
| z | 32 | fsbf |
| } | | |
| DOFType { | | |
| Tx | 1 | bslbf |
| Ty | 1 | bslbf |
| Tz | 1 | bslbf |
| Rx | 1 | bslbf |
| Ry | 1 | bslbf |
| Rz | 1 | bslbf |
| } | | |
| workspaceType { | | |
| Width | 32 | fsbf |
| Height | 32 | fsbf |
| Depth | 32 | fsbf |
| RotationX | 32 | fsbf |
| RotationY | 32 | fsbf |
| RotationZ | 32 | fsbf |
| } | | |

Table 46 shows descriptor components semantics regarding the kinesthetic type sensory device.

[Table 46]

| **Names** | **Description** |
|---|---|
| KinestheticCapabilityType | Tool for describing a tactile capability. |
| maximumTorqueFlag | This field, which is only present in the binary representation, signals the presence of the activation attribute A value of "1" means the attribute shall be used and "0" means the attribute shall not be used. |
| maximumStiffnessFlag | This field, which is only present in the binary representation, signals the presence of the activation attribute A value of "1" means the attribute shall be used and "0" means the attribute shall not be used. |
| forceUnitFlag | This field, which is only present in the binary representation, signals the presence of the activation attribute A value of "1" means the attribute shall be used and "0" means the attribute shall not be used. |
| torqueUnitFlag | This field, which is only present in the binary representation, signals the presence of the activation attribute A value of "1" means the attribute shall be used and "0" means the attribute shall not be used, |
| stiffnessUnitFlag | This field which is only present in the binary representation, signals the presence of the activation attribute, A value of "1" means the attribute shall be used and "0" means the attribute shall not be used, |

(continued)

| Names | Description |
|---|---|
| SensoryDeviceCapabilityBase | SensoryDeviceCapabilityBase extends dia:TeminalCapabilityBasetype and provides a base abstract type for a subset of types defined as part of the sensory device capability metadata types, For details of dia:TerminalCapabilityBaseType, refer to the Part 7 of ISO/IEC21000. |
| maximumForce | Describes the maximum force that the device can provide stably for each axis (N). |
| maximumTorque | Describes the maximum torque referring maximum rotational force that the device can generate stably for each axis. (Nmm) |
| maximumStiffness | Describes the maximum stiffness (rigidity) that the device can generate stably for each axis. (N/mm) |
| DOF | Describes the DOF (degree of freedom) of the device |
| workspace | Describes the workspace of the device (e.g. Width x Height x Depth,(mm) 3 angles (degree)), |
| forceUnit | Specifies the unit of the description of maximumForce attribute as a reference to a classification scheme term provided by UnitTypeCS defined in A.2.1 of ISO/IEC 23005-6, if any unit other than N(Newton) is used. 1N refers a force that produces an acceleration of 1 $m/s^2$ for 1 kg mass, |
| | |
| torqueUnit | Specifies the unit of the description of maximumTorque attribute as a reference to a classification scheme term provided by UnitTypeCS defined in A.2.1 of ISO/IEC 23005-6, if any unit other than Nmm (Newton-millimeter) is used, |
| stiffnessunit | Specifies the unit of the description of maximumTorque attribute as a reference to a classification scheme term provided by UnitTypeCS defined in A.2.1 of ISO/IEC 23005-6, if any unit other than N/mm (Newton per millimeter) is used. |
| Float3DVectorType | Tool for describing a 3D position vector |
| X | Describes the sensed value in x-axis in the unit |
| Y | Describes the sensed value in y-axis in the unit |
| Z | Describes the sensed value in z-axis in the unit |
| DOFType | Defines a degree of freedom that shows a kineskhetic device provides several single (independent) movements. |
| Tx | A Boolean values whether a kinesthetic device allows x directional independent translation or not. |
| Ty | A Boolean values whether a kinesthetic device allows y directional indapendent translation or not. |
| Tz | A Boolean values whether a kinesthetic device allows z directionalindependent translation or not |
| Rx | A Boolean values whither a kinesthetic device allows x directional independent rotation or not. |
| Ry | A Boolean values whither a kinesthetic device allows y directional independent rotation or not. |
| Rz | A Boolean values whether a Kinesthetic device allows z directional independent rotation or not. |

(continued)

| Names | Description |
|---|---|
| workspaceType | Defines ranges where a kinesthetic device can translate and rotate. According to DOF (degree of freedom), three translational values(width, Height, and depth) in mm(miilimeter) and three rotational values(roll, pitch and yaw) in degree are defined |
| Width | Defines a maximum range in the unit of mm (millimeter) that a kinesthetic device can translate in x-axis. |
| Height | Defines a maximum range in the unit of mm (millimeter) that a Kinesthetic device can translate in y-axis. |
| Depth | Defines a maximum range in the unit of mm (millimeter) that a Kinesthetic device can translate in z-axis. |
| RotationX | Defines a maximum range that a kinesthetic device can rotate in x-ais, φ (roll). |
| RotationY | Defines a maximum range that a Kinesthetic device can rotate in y-axis, Θ(opitch) |
| RotationZ | Defines a maximum range that a kinesthetic device can rotate in |
| | |
| | 2-axis, Ψ(yaw) |

Table 47 shows an XML representation syntax regarding the rigid body motion type sensory device.

[Table 47]

```
<!-- ################################################ -->
<!--    Rigid Body Motion capability type                              -->
<!-- ################################################ -->
<complexType name="RigidBodyMotionCapabilityType">
        <complexContent>
                <extension base="cidl:SensoryDeviceCapabilityBaseType">
                        <sequence>
```

```
                <element name="MoveTowardCapability" type="dcdv:MoveTowardCapabilityType" minOccurs="0"/>
                <element name="InclineCapability" type="dcdv:InclineCapabilityType" minOccurs="0"/>
            </sequence>
        </extension>
    </complexContent>
</complexType>

<!-- ################################################ -->
<!--  MoveToward Capability type                                  -->
<!-- ################################################ -->
<complexType name="MoveTowardCapabilityType">
    <attribute name="MaxXDistance" type="float" use="optional"/>
    <attribute name="MaxYDistance" type="float" use="optional"/>
    <attribute name="MaxZDistance" type="float" use="optional"/>
    <attribute name="distanceUnit" type="mpegvct:unitType" use="optional"/>
    <attribute name="MaxXSpeed" type="float" use="optional"/>
    <attribute name="MaxYSpeed" type="float" use="optional"/>
    <attribute name="MaxZSpeed" type="float" use="optional"/>
    <attribute name="speedUnit" type="mpegvct:unitType" use="optional"/>
    <attribute name="MaxXAccel" type="float" use="optional"/>
    <attribute name="MaxYAccel" type="float" use="optional"/>
    <attribute name="MaxZAccel" type="float" use="optional"/>
    <attribute name="accelUnit" type="mpegvct:unitType" use="optional"/>
    <attribute name="XDistanceLevels" type="nonNegativeInteger" use="optional"/>
    <attribute name="YDistanceLevels" type="nonNegativeInteger" use="optional"/>
    <attribute name="ZDistanceLevels" type="nonNegativeInteger" use="optional"/>
    <attribute name="XSpeedLevels" type="nonNegativeInteger" use="optional"/>
    <attribute name="YSpeedLevels" type="nonNegativeInteger" use="optional"/>
    <attribute name="ZSpeedLevels" type="nonNegativeInteger" use="optional"/>
    <attribute name="XAccelLevels" type="nonNegativeInteger" use="optional"/>
    <attribute name="YAccelLevels" type="nonNegativeInteger" use="optional"/>
    <attribute name="ZAccelLevels" type="nonNegativeInteger" use="optional"/>
</complexType>

<!-- ################################################ -->
```

```
<!--    Incline Capability type                                          -->
<!-- ################################################# -->
<complexType name="InclineCapabilityType">
        <attribute name="MaxPitchAngle" type="mpegvct:InclineAngleType" use="optional"/>
        <attribute name="MaxYawAngle" type="mpegvct:InclineAngleType" use="optional"/>
        <attribute name="MaxRollAngle" type="mpegvct:InclineAngleType" use="optional"/>
        <attribute name="MaxPitchSpeed" type="float" use="optional"/>
        <attribute name="MaxYawSpeed" type="float" use="optional"/>
        <attribute name="MaxRollSpeed" type="float" use="optional"/>
        <attribute name="speedUnit" type="mpegvct:unitType" use="optional"/>
        <attribute name="MaxPitchAccel" type="float" use="optional"/>
        <attribute name="MaxYawAccel" type="float" use="optional"/>
        <attribute name="MaxRollAccel" type="float" use="optional"/>
        <attribute name="accelUnit" type="mpegvct:unitType" use="optional"/>
        <attribute name="PitchAngleLevels" type="nonNegativeInteger" use="optional"/>
        <attribute name="YawAngleLevels" type="nonNegativeInteger" use="optional"/>
        <attribute name="RollAngleLevels" type="nonNegativeInteger" use="optional"/>
        <attribute name="PitchSpeedLevels" type="nonNegativeInteger" use="optional"/>
        <attribute name="YawSpeedLevels" type="nonNegativeInteger" use="optional"/>
        <attribute name="RollSpeedLevels" type="nonNegativeInteger" use="optional"/>
        <attribute name="PitchAccelLevels" type="nonNegativeInteger" use="optional"/>
        <attribute name="YawAccelLevels" type="nonNegativeInteger" use="optional"/>
        <attribute name="RollAccelLevels" type="nonNegativeInteger" use="optional"/>
</complexType>
```

Table 48 shows a binary representation syntax regarding the rigid body motion type sensory device.

[Table 48]

| RigidBodyMotionCapabilityType { | **Number of bits** | **Mnemonic** |
|---|---|---|
| MoveTowardCapabilityFlag | 1 | bslbf |
| InclineCapabilityFlag | 1 | bslbf |
| SensoryDeviceCapabilityBase | | SensoryDeviceCapabilityBaseType |
| if(MoveTowardCapabilityFlag) { | | |
| MoveTowardCapability | | MoveTowardCapabilityType |
| } | | |
| if(InclineCapabifityFlag) { | | |
| InclineCapability | | InclineCapabilityType |
| } | | |
| } | | |

(continued)

| RigidBodyMotionCapabilityType { | Number of bits | Mnemonic |
|---|---|---|
| MoveTowardCapabilityType { | | |
| MaxXDistanceFlag | 1 | bslbf |
| MaxYDistanceFlag | 1 | bslbf |
| MaxZDistanceFlag | 1 | bslbf |
| distanceUnitFlag | 1 | bslbf |
| MaxXSpeedFlag | 1 | bslbf |
| MaxYSpeedFlag | 1 | bslbf |
| MaxZSpeedFlag | 1 | bslbf |
| speedUnitFlag | 1 | bslbf |
| MaxXAccelFlag | 1 | bslbf |
| MaxYAccelFlag | 1 | bslbf |
| MaxZAccelFlag | 1 | bslbf |
| accelUnitFlag | 1 | bslbf |
| XDistanceLevelsFlag | 1 | bslbf |
| YDistanceLevelsFlag | 1 | bslbf |
| ZDistanceLevelsFlag | 1 | bslbf |
| XSpeedLevelsFlag | 1 | bslbf |
| YSpeedLevelsFlag | 1 | bslbf |
| ZSpeedLevelsFlag | 1 | bslbf |
| XAccelLevelsFlag | 1 | bslbf |
| YAccelLevelsFlag | 1 | bslbf |
| ZAccelLevelsFlag | 1 | bslbf |
| if(MaxXDistanceFlag) { | | |
| MaxXDistance | 32 | fsbf |
| } | | |
| if(MaxYDistanceFlag) { | | |
| MaxYDistance | 32 | fsbf |
| } | | |
| if(MaxZDistanceFlag) { | | |
| MaxZDistance | 32 | fsbf |
| } | | |
| if(distanceUnitFlag) { | | |
| distanceUnit | | unitType |
| } | | |
| if(MaxXSpeedFlag) { | | |
| MaxXSpeed | 32 | fsbf |
| } | | |
| if(MaxYSpeedFlag) { | | |

(continued)

| RigidBodyMotionCapabilityType { | Number of bits | Mnemonic |
|---|---|---|
| MaxYSpeed | 32 | fsbf |
| } | | |
| if(MaxZSpeedFlag) { | | |
| MaxZSpeed | 32 | fsbf |
| } | | |
| if(speedUnitFlag) { | | |
| speedUnit | | unitType |
| } | | |
| if(MaxXAccelFlag) { | | |
| MaxXAccel | 32 | fsbf |
| } | | |
| if(MaxYAccelFlag) { | | |
| MaxYAccel | 32 | fsbf |
| } | | |
| if(MaxZAccelFlag){ | | |
| MaxZAccel | 32 | fsbf |
| } | | |
| if(accelUnitFlag) { | | |
| accelUnit | | unitType |
| } | | |
| if(XDistanceLevelsFlag) { | | |
| XDistanceLevels | 8 | uimsbf |
| } | | |
| if(YDistanceLevelsFlag) { | | |
| YDistanceLevels | 8 | uimsbf |
| } | | |
| if(ZDistanceLevelsFlag) { | | |
| ZDistanceLevels | 8 | uimsbf |
| } | | |
| if(XSpeedLevelsFlag) { | | |
| XSpeedLevels | 8 | uimsbf |
| } | | |
| if(YSpeedLevelsFlag) { | | |
| YSpeedLevels | 8 | uimsbf |
| } | | |
| if(ZSpeedLevelsFlag) { | | |
| ZSpeedLevels | 8 | uimsbf |
| } | | |

(continued)

| RigidBodyMotionCapabilityType { | **Number of bits** | **Mnemonic** |
|---|---|---|
| if(XAccelLevelsFlag) { | | |
| XAccelLevels | 8 | uimsbf |
| } | | |
| if(YAccelLevelsFlag) { | | |
| YAccelLevels | 8 | uimsbf |
| } | | |
| if(ZAccelLevelsFlag) { | | |
| ZAccelLevels | 8 | uimsbf |
| } | | |
| } | | |
| InclineCapabilityType { | | |
| MaxPitchAngleFlag | 1 | bslbf |
| MaxYawAngleFlag | 1 | bslbf |
| MaxRollAngleFlag | 1 | bslbf |
| MaxPitchSpeedFlag | 1 | bslbf |
| MaxYawSpeedFlag | 1 | bslbf |
| MaxRollSpeedFlag | 1 | bslbf |
| speedUnitFlag | 1 | bslbf |
| MaxPitchAccelFlag | 1 | bslbf |
| MaxYawAccelFlag | 1 | bslbf |
| MaxRollAccelFlag | 1 | bslbf |
| accelUnitFlag | 1 | bslbf |
| PitchAngleLevelsFlag | 1 | bslbf |
| YawAngleLevelsFlag | 1 | bslbf |
| RollAngleLevelsFlag | 1 | bslbf |
| PitchSpeedLevelsFlag | 1 | bslbf |
| YawSpeedLevelsFlag | 1 | bslbf |
| RollSpeedLevelsFlag | 1 | bslbf |
| PitchAccelLevelsFlag | 1 | bslbf |
| YawAccelLevelsFlag | 1 | bslbf |
| RollAccelLevelsFlag | 1 | bslbf |
| if(MaxPitchAngleFlag) { | | |
| MaxPitchAngle | | InclineAngleType |
| } | | |
| if(MaxYawAngleFlag) { | | |
| MaxYawAngle | | InclineAngleType |
| } | | |
| if(MaxRollAngleFlag) { | | |

(continued)

| RigidBodyMotionCapabilityType { | **Number of bits** | **Mnemonic** |
|---|---|---|
| MaxRollAngle | | InclineAngleType |
| } | | |
| if(MaxPitehSpeedFlag) { | | |
| MaxPitchSpeed | 32 | fsbf |
| } | | |
| if(MaxYawSpeedFlag) { | | |
| MaxYawSpeed | 32 | fsbf |
| } | | |
| if(MaxRollSpeedFlag) { | | |
| MaxRollSpeed | 32 | fsbf |
| } | | |
| if(speedUnitFlag) { | | |
| speedUnit | | unitType |
| } | | |
| if(MaxPitchAccelFlag) { | | |
| MaxPitchAccel | 32 | fsbf |
| } | | |
| if(MaxYawAccelFlag) { | | |
| MaxYawAccel | 32 | fsbf |
| } | | |
| if{MaxRollAccelFlag) { | | |
| MaxRollAccel | 32 | fsbf |
| } | | |
| if(accelUnitFlag) { | | |
| accelUnit | | unitType |
| } | | |
| if(PitchAngleLevelsFlag) { | | |
| PitchAngleLevels | 8 | uimsbf |
| } | | |
| if(YawAngleLevelsFlag) { | | |
| YawAngleLevels | 8 | uimsbf |
| } | | |
| if(RollAngleLevelsFlag) { | | |
| RollAngleLevels | 8 | uimsbf |
| } | | |
| if(PitchSpeedLevelsFlag) { | | |
| PitchSpeedLevels | 8 | uimsbf |
| } | | |

(continued)

| RigidBodyMotionCapabilityType { | **Number of bits** | **Mnemonic** |
|---|---|---|
| if(YawSpeedLevelsFlag) { | | |
| YawSpeedLevels | 8 | uimsbf |
| } | | |
| if(RollSpeedLevelsFlag) { | | |
| RollSpeedLevels | 8 | uimsbf |
| } | | |
| if(PitchAccelLevelsFlag) { | | |
| PitchAccelLevels | 8 | uimsbf |
| } | | |
| if(YawAccelLevelsFlag) { | | |
| YawAccelLevels | 8 | uimsbf |
| } | | |
| if(RollAccelLevelsFlag) { | | |
| RollAccelLevels | 8 | uimsbf |
| } | | |
| } | | |

Table 49 shows descriptor components semantics regarding the rigid body motion type sensory device.

[Table 49]

| **Names** | **Description** |
|---|---|
| RigidBodyMotionCapabilityType | Tool for describing the capability of Rigid body motion effect |
| MoveTowardCapabilityFlag | This field, which is only present in the binary representation, signals the presence of the activation attribute A value of "1" means the attribute shall be used and "0" means the attribute shall not be used. |
| InclineCapabilityFlag | This field, which is only present in the binary representation, signals the presence of the activation attribute A value of "1" means the attribute shall be used and "0" means the attribute shall not be used. |
| SensoryDeviceCapabilityBase | sensoryDeviceCapabilityBase extends dia:TerminalCapabilityBaseType and provides a base abstract type for a subset of types defined as part of the sensory device capability metadata types. For details of dia: TerminalCapabilityBaseType, refer to the Part 7 of ISO/IEC 21000. |
| MoveTowardCapability | Describes the capability for move toward motion effect. |
| InclineCapability | Describes the capability for Incline motion effect |
| MoveTowardCapabilityType | Tool for describing a capability on move toward motion effect. |
| | |
| MaxXDistanceFlag | This field, which is only present in the binary representation, signals the presence of the activation attribute A value of "1" means the attribute shall be used and "0" means the attribute shall not be used. |

(continued)

| Names | Description |
|---|---|
| MaxYDistanceFlag | This field, which is only present in the binary representation, signals the presence of the activation attribute A value of "1" means the attribute shall be used and "0" means the attribute shall not be used. |
| MaxZDistanceFlag | This field which is only present in the binary representation, signals the presence of the activation attribute A value of "1" means the attribute shall be used and "0" means the attribute shall not be used. |
| distanceUnitFlag | This field, which is only present in the binary representation signals the presence of the activation attribute A value of "1" means the attribute shall be used and "0" means the attribute shall not be used. |
| MaxXSpeedFlag | This field, which is only present in the binary representation, signals the presence of the activation attribute A value of "1" means the attribute shall be used and "0" means the attribute shall not be used, |
| MaxYSpeedFlag | This field, which is only present in the binary representation, signals the presence of the activation attribute A value of "1" means the attribute shall be used and "0" means the attribute shall not be used. |
| MasZSpeedFlag | This field, which is only present in the binary representation, signals the presence of the activation attribute. A value of "1" means the attribute shall be used and "0" means the attribute shall not be used. |
| speedUnitFlag | This field, which is only present in the binary representation, signals the presence of the activation attribute A value of "1" means the attribute shall be used and "0" means the attribute shall not be used. |
| MaxXAccelFlag | This field, which is only present in the binary representation, signals the presence of the activation attribute A value of "1" means the attribute shall be used and "0" means the attribute shall not be used. |
| MaxYAccelFlag | This field, which is only present in the binary representation, signals the presence of the activation attribute A value of "1" means the attribute shall be used and "0" means the attribute shall not be used. |
| MaxZAccelFlag | This field, which is only present in the binary representation signals the presence of the activation attribute A value of "1" |
| | |
| | means the attribute shall be used and "0" means the attribute shall not be used. |
| accelUnitFlag | This field, which is only present in the binary representation, signals the presence of the activation attribute A value of "1" means the attribute shall be used and "0" means the attribute shall not be used. |
| XDistanceLevelsFlag | This field, which is only present in the binary representation, signals the presence of the activation attribute A value of "1" means the attribute shall be used and "0" means the attribute shall not be used, |
| YDistanceLevelsFlag | This field, which is only present in the binary representation, signals the presence of the activation attribute A value of " 1" means the attribute shall be used and "0" means the attribute shall not be used. |
| ZDistanceLevelsFlag | This field, which is only present in the binary representation, signals the presence of the activation attribute A value of "1" means the attribute shall be used and "0" means the attribute shall not beused. |

(continued)

| Names | Description |
|---|---|
| XSpeedLevelsFlag | This field, which is only present in the binary representation, signals the presence of the activation attribute A value of "1" means the attribute shall be used and "0" means the attribute shall not be used. |
| YSpeedLevelsFlag | This field, which is only present in the binary representation, signals the presence of the activation attribute A value of "1" means the attribute shall be used and "0" means the attribute shall not be used. |
| ZSpeedLevelsFlag | This field, which is only present in the binary representation. signals .the presence of the activation attribute. A value of "1" means the attribute shall be used and "0" means the attritute shall not be used. |
| XAccelLevelsFlag | This field, which is only present in the binary representation, signals the presence of the activation attribute A value of "1" means the attribute shall be used and "0" means the attribute shall not be used. |
| YAccelLevelsFlag | This field, which is only present in the binary representation, signals the presence of the activation attribute. A value of "1" means the attribute shall be used and "0" means the attribute shall not be used. |
| ZAccelLevelsFlag | This field, which is only present in the binary representation, signals the presence of the activation attribute A value of "1" means the attribute shall be used and "0" means the attribute, shall not be used, |
| MaxXDistance | Describes the maximum distance on x-axis that the device can provide in terms of centimeten.<br>EXAMPLE The value '10' means the device can move maximum 10cm on x-axis.<br>NOTE The value 0 means the device can't provide x-axis movement. |
| MaxYDistance | Describes the maximum distance on y-axis that the device can provide in terms of centimeter. |
| MaxZDistance | Describes the maximum distance on z-axis that the device can provide in terms of centimeter. |
| distanceUnit | Specifies the unit of the description of MaxXDistance, MaxYDistance, and MaxZDistance attributes as a reference to a classification scheme term provided by UnitTypeCS defined in A.2.1 of ISO/IEC 23005-6. if any unit other than cm (centimeter) is used These three attributes shall have the same unit. |
| MaxKSpeed | Describes the maximum speed on x-axis that the device can provide in terms of centimeter per second |
| MaxYSpeed | Describes the maximum speed on y-axis that the devices can provide in terms of centimeter per second. |
| MaxZSpeed | Describes the maximum speed on z-axis that the device can provide in terms of centimeter per second. |
| speedUnit | Specifies the unit of the description of MaxXSpeed, MaxYSpeed, and MazZSpeed attributes as a reference to a classification scheme term provided by UnitTypeCS defined in A.2.1 of ISO/IEC 23005-6, if any unit other than cm/sec (centimeter per second) is used. These three attributes shall have the same unit. |
| MaxXAccel | Describes the maximum acceleration on x-axis that the device can provide in terms of centimeter per square second. |

(continued)

| Names | Description |
|---|---|
| MaxYAccel | Describes the maximum acceleration on y-axis that the device can provide in terms of centimeter per square second |
| MaxZAccel | Describes the maximum acceleration on z-axis that the device can provide in terms of centimeter per second square. |
| accelUnit | Specifies the unit of the description of MaxXAccel, MaxYAccel, and MaxZAccel attributes as a reference to a classification scheme term provided by UnitTypeCS defined in A.2.1 of ISO/IEC 23005-6, if any unit other than cm/$sec^2$ (centimeter per second square) is used. These three attributes shall have the same unit. |
| XDistanceLevels | Describes the number of distance levels that the device can provide in between maximum and minimum distance on x-axis. |
| | |
| | EXAMPLE The value 5 means the device can provide 5 steps from minimum to maximum distance in x-axis. |
| YDistanceLevels | Describes the number of distance levels that the device can provide inbetween maximum and minimum distance on y-axis. |
| ZDistanceLevels | Describes the number of distance levels that the device can provide inbetween maximum and minimum distance on z-axis. |
| XSpeedLevels | Describes the number of speed levels that the device can provide in between maximum and minimum speed on x-axis. |
| YSpeedLevels | Describes the number of speed levels that the device can provide in between maximum and minimum speed on y-axis. |
| ZSpeedLevels | Describes the number of speed levels that the device can provide in between maximum and minimum speed on z-axis. |
| XAccelLevels | Describes the number of acceleration that the device can provide in between maximum and minimum acceleration on x-axis. |
| YAccelLevels | Describes the number of acceleration that the device can provide in between maximum and minimum acceleration on y-axis. |
| ZAccelLevels | Describes the number of acceleration that the device can provide in between maximum and minimum acceleration on z-axis. |
| InclineCapabilityType | Tool for describing a capability on move toward motion effect. |
| MaxPitchAngleFlag | This field, which is only present in the binary representation, signals the presence of the activation attribute. A value of "1" means the attribute shall be used and "0" means the attribute shall not be used. |
| MasYawAngleFlag | This field, which is only present in the binary representation, signals the presence of the activation attribute A value of "1" means the attribute shall be used and "0" means the attribute shall not be used. |
| MaxRollAngleFlag | This field, which is only present in the binary representation, signals the presence of the activation attribute. A value of "1" means the attribute shall be used and "0" means the attribute shall not be used. |
| MaxPitchSpeedFlag | This field, which is only present in the binary representation. signals the presence of the activation attribute. A value of "1" means the attribute shall be used and "0" means the attribute shall not be used. |

(continued)

| Names | Description |
|---|---|
| MaxTawSpeedFlag. | This field which is only present in the binary representation, signals the presence of the activation attribute A value of "1" means the attribute shall be used and "0" means the attribute shall not be used. |
| | |
| MaxRollSpeedFlag | This field, which is only present in the binary representation. signals the presence of the activation attribute A value of "1" means the attribute shall be used and "0" means the attribute shall not be used. |
| speedUnitFlag | This field, which is only present in the binary representation, signals the presence of the activation attribute A value of "1" means the attribute shall be used and "0" means the attribute shall not be used. |
| MaxPitchAccelFlag | This field, which is only present in the binary representation, signals the presence of the activation attribute A value of "1" means the attribute shall be used and "0" means the attribute shall not be used. |
| MaxYawAccelFlag | This field, which is only present in the binary representation, signals the presence of the activation attribute A value of "1" means the attribute shall be used and "0" means the attribute shall not be used. |
| MaxRollAccelFlag | This field, which is only present in the binary representation, signals the presence of the activation atribute A value of "1" means the attribute shall be used and "0" means the attribute shall not be used. |
| accelUnitFlag | This field, which is only present in the binary representation, signals the presence of the activation attribute A value of "1" means the attribute shall be used and "0" means the attribute shall not be used. |
| PitchAngleLevelsFlag | This field, which is only present in the binary representation, signals the presence of the activation attribute A value of "1" means the attribute shall be used and "0" means the attribute shall not be used. |
| YawAngleLevelsFlag | This field, which is only present in the binary representation, signals the presence of the activation attribute A value of "1" means the attribute shall be used and "0" means the attribute shall not be used, |
| RollAngleLevelsFlag | This field, which is only present in the binary representation, signals the presence of the activation attribute A value of "1" means the attribute shall be used and "0" means the attribute shall not be used. |
| PitchSpeedLevelsFlag | This field, which is only present in the binary representation, signals the presence of the activation attribute A value of "1" means the attribute shall be used and "0" means the attribute shall not be used. |
| YawSpeedLevelsFlag | This field, which is only present in the binary representation, signals the presence of the actuation attribute A value of "1" |
| | |
| | means the attribute shall be used and "0" means the attribute shall not be used. |
| RollSpeedLevelsFlag | This field, which is only present in the binary representation, signals the presence of the activation attribute A value of "1" means the attribute shall be used and "0" means the attribute shall not be used. |
| PitchAccelLevelsFlag | This field, which is only present in the binary representation, signals the presence of the activation attribute A value of "1" means the attribute shall be used and "0" means the attribute shall not be used. |

(continued)

| Names | Description |
|---|---|
| YawAccelLevelsFlag | This field, which is only present in the binary representation, signals the presence of the activation attribute A value of "1" means the attribute shall be used and "0" means the attribute shall not be used. |
| RollAccelLevelsFlag | This field, which is only present in the binary representation, signals the presence of the activation attribute A value of "1" means the attribute shall be used and "0" means the attribute shall not be used. |
| MaxPitchAngle | Describes the maximum angle of x-axis rotation in degrees that the device can provide.<br>NOTE The rotation angle is increased with counter-clock wise. |
| MaxYawAngle | Describes the maximum angle of y-axis rotation in degrees that the device can provide.<br>NOTE The rotation angle is increased with clock wise. |
| MaxRollAngle | Describes the maximum angle of z-axis rotation in degrees that the device can provide. NOTE The rotation angle is increased with counter- clock wise. |
| MaxPitchSpeed | Describes the maximum speed of x-axis rotation that the device can provide in terms of degree per second. |
| MaxYawSpeed | Describes the maximum speed of y-axis rotation that the device can provide in terms of degree per second. |
| MaxRollSpeed | Describes the maximum speed of z-axis rotation that the device can provide in terms of degree per second. |
| speedUnit | Specifies the common unit of the description of MaxPitch speed, MaxYawSpeed, and MaxRollSpeed attributes as a reference to a classification scheme term provided by UnitTypeCS defined in A.2.1 of ISO/IEC 23005-6, if any unit other than degree per sencod is used. |
| MaxPitchAccel | Describes the maximum acceleration of x-axis rotation that the device can provide in terms of degree per second square. |
| MaxYawAccel | Describes the maximum acceleration of y-axis rotation that the device can provide in terms of degree per second square. |
| MaxRollAccel | Describes the maximum acceleration of z-axis rotation that the device can provide in terms of degree per second square. |
| accelUnit | Specifies the common unit of the description of MaxPitchAccel, MaxYawAccel, and MaxRollAccel attributes as a reference to a classification scheme term provided by UnitTypeCS defined in A.2.1 of ISO/IEC 23005-6, if any unit other than degree per sencod square is used. |
| PitchAngleLevels | Describes the number of rotation angle levels that the device can provide in between maximum and minimum angle of x-axis rotation.<br>EXAMPLE The value 5 means the device can provide 5 steps from minimum to maximum rotation angle on x-axis. |
| YawAngleLevels | Describes the number of rotation angle levels that the device can provide in between maximum and minimum angle of y-axis rotation. |
| RollAngleLevels | Describes the number of rotation angle levels that the device can provide in between maximum and minimum angle of 2-axis rotation. |

(continued)

| Names | Description |
|---|---|
| PitchSpeedLevels | Describes the number of rotation speed levels that the device can provide in between maximum and minimum speed of x-axis rotation.<br>EXAMPLE The value 5 means the device can provide 5 steps from minimum to maximum rotation angle on x-axis. |
| YawSpeedLevels | Describes the number of rotation speed levels that the device can provide in between maximum and minimum speed of y-axis rotation. |
| RollSpeedLevels | Describes the number of rotation speed levels that the device can provide in between maximum and minimum speed of z-axis rotation. |
| | |
| PitchAccelLevels | Describes the number of rotation acceleration leves that the device can provide in between maximum and minimum acceleration of x-axis rotation. |
| YawAccelLevels | Describes the number of rotation acceleration levels that the device can provide in between maximum and minimum acceleration of y-axis rotation. |
| RollAccelLevels | Describes the number of rotation acceleration levels that the device can provide in between maximum and minim acceleration of z-axis rotation. |

The encoding unit 533 may encode preference information, that is, information on a user preference with respect to a sensory effect, into USP metadata. That is, the encoding unit 533 may generate USP metadata by encoding the preference information. The encoding unit 533 may include at least one of an XML encoder and a binary encoder.

According to example embodiments, the encoding unit 533 may generate the USP metadata by encoding the preference information into XML metadata.

Also, the encoding unit 533 may generate the USP metadata by encoding the preference information into binary metadata.

In addition, the encoding unit 533 may generate fourth metadata by encoding the preference information into XML metadata, and generate the USP metadata by encoding the fourth metadata into binary metadata.

The sensory device 530 may further include an input unit 534.

The input unit 534 may be input with the preference information from the user of the sensory device 530.

The USP metadata may include USP base type which denotes basic information on a preference of the user with respect to the sensory effect. The sensory device preference base type may be metadata regarding the preference information commonly applied to all types of the sensory device 530.

Table 50 shows an XML representation syntax regarding the USP base type.

[Table 50]

```
<!-- ################################################ -->
<!--   UserSensory Preference base type                            -->
<!-- ################################################ -->
<complexType name="UserSensoryPreferenceBaseType" abstract="true">
    <complexContent>
        <extension base="dia:UserCharacteristicBaseType">
            <attributeGroup ref="cidl:userSensoryPrefBaseAttributes"/>
        </extension>
    </complexContent>
</complexType>
```

Table 51 shows a binary representation syntax regarding the USP base type.

[Table 51]

| UserSensoryPreferenceBaseType { | **Number of bits** | **Mnemonic** |
|---|---|---|
| UserCharacteristicBase | | UserCharacteristicBaseType |
| userSensoryPrefBaseAttributes | | userSensoryPretBaseAttributesType |
| } | | |

Table 52 shows descriptor components semantics regarding the USP base type.

[Table 52]

| **Names** | **Description** |
|---|---|
| UserSensoryPreferenceBaseType | UserSensoryPreferenceBaseType extends dia:UserCharacteristicBaseType as defined in Part 7 of ISO/IEC 21000 and provides a base abstract type for a subset of types defined as part of the sensory device capability metadata types |
| UserCharacteristicBase | |
| userSensoryPrefBaseAttributes | Describes a group of common attributes for the describing user preferences on sensory experience |

The USP metadata may include USP base attributes which denote groups regarding common attributes of the sensory device 530.

Table 53 shows an XML representation syntax regarding the USP base attributes.

[Table 53]

```
<!-- ################################################# -->
<!--   User Sensory Preference Base Attributes                    -->
<!-- ################################################# -->
<attributeGroup name="userSensoryPrefBaseAttributes">
    <attribute name="adaptationMode" type="cidl:adaptationModeType" use="optional"/>
    <attribute name="activate" type="boolean" use="optional"/>
</attributeGroup>
<!--   User Preference of Adaptation Mode Types          -->
<simpleType name="adaptationModeType">
    <restriction base="string">
        <enumeration value="strict"/>
        <enumeration value="scalable"/>
    </restriction>
</simpleType>
```

Table 54 shows a binary representation syntax regarding the USP base attributes.

[Table 54]

| userSensoryPrefBaseAttributesType { | Number of bits | Mnemonic |
|---|---|---|
| adaptationModeFlag | 1 | bslbf |
| activateFlag | 1 | bslbf |
| if(adaptationModeFlag) { | | |
| adaptationMode | | adaptationModeType |
| } | | |
| if(activateFlag){ | | |
| activate | 1 | bslbf |
| } | | |
| } | | |
| adaptationModeType { | | |
| adaptationMode | 2 | bslbf |
| } | | |

Table 55 shows an adaptation mode type regarding the USP base attributes.

[Table 55]

| adaptationModeType | adaptationMode |
|---|---|
| 00 | strict |
| 01 | scalable |
| 10-11 | Reserved |

Table 56 shows descriptor components semantics regarding the USP base attributes.

[Table 56]

| **Names** | **Description** |
|---|---|
| userSensoryPrefBaseAttributesType | Describes a group of common attributes for the describing user preferences on sensory experience. |
| adaptationModeFlag | This field, which is only present in the binary representation, signals the presence of the activation attribute. A value of "1" means the attribute shall be used and "0" means the attribute shall not be used. |
| activateFlag | This. field, which is only present in the binary representation, signals the presence of the activation attribute. A value of "1" means the attribute shall be used and "0" means the attribute shall not be used. |
| | |
| adaptationMode | Describes the user's preference on the adaptation method for the sensory effect.<br>EXAMPLE The value "strict" means the user prefer to render sensory effect exactly as described. Otherwise the value "scalable" means to render sensory effect with scaled intensity according to the device capacity. |
| activate | Describes whether the effect shall be activated. A value of true means the effect shall be activated and false means the effect shall be deactivated. |

(continued)

| Names | Description |
|---|---|
| adaptationModeType | Tool for describing the adaptation mode with enumeration set. When its value is strict, it means that when the input value is out of range, the output should be equal to the maximum value that the device is able to operate. When its value is scalable, it means that the output shall be linearly scaled into the range that the device can operate. |

Hereinafter, the preference information regarding each type of the sensory device 530 will be described in detail.

Table 57 shows an XML representation syntax of the preference information regarding the light type sensory device according to example embodiments.

[Table 57]

```
<!-- ################################################ -->
<!-- Light Preference type                                                  -->
<!-- ################################################ -->
<complexType name="LightPrefType">

    <complexContent>
        <extension base="cidl:UserSensoryPreferenceBaseType">
            <sequence>
                <element name="UnfavorableColor" type="mpegvct:colorType"
minOccurs="0" maxOccurs="unbounded"/>
            </sequence>
            <attribute name="maxIntensity" type="integer" use="optional"/>
            <attribute name="unit" type="mpegvct:unitType" use="optional"/>
        </extension>
    </complexContent>
</complexType>
```

Table 58 shows a binary representation syntax of the preference information regarding the light type sensory device according to example embodiments.

[Table 58]

| LightPrefType { | Number of bits | Mnemonic |
|---|---|---|
| UnfavorableColorFlag | 1 | bslbf |
| maxIntensityFlag | 1 | bslbf |
| unitFlag | 1 | bslbf |
| UserSensoryPreferenceBase | | UserSensoryPreferenceBaseType |
| if(UnfavorableColorFlag){ | | |
| LoopUnfavorableColor | | vluimsbf5 |
| for(k=0;k< LoopUnfavorableColor; k++){ | | |

(continued)

| LightPrefType { | Number of bits | Mnemonic |
|---|---|---|
| UnfavorableColor[k] | | ColorType |
| } | | |
| } | | |
| if(maxIntensityFlag) { | | |
| maxIntensity | 10 | simsbf |
| } | | |
| if(unitFlag){ | | |
| unit | | unitType |
| } | | |
| } | | |

Table 59 shows a binary representation syntax of a unit CS.

[Table 59]

| unitType | Term ID of unit |
|---|---|
| 00000000 | micrometer |
| 00000001 | mm |
| 00000010 | cm |
| 00000011 | meter |
| 00000100 | km |
| 00000101 | inch |
| 00000110 | yard |
| 00000111 | mile |
| 00001000 | mg |
| 00001001 | gram |
| 00001010 | kg |
| 00001011 | ton |
| 00001100 | micrometerpersec |
| 00001101 | mmpersec |
| 00001110 | cmpersec |
| 00001111 | meterpersec |
| 00010000 | Kmpersec |
| 00010001 | inchpersec |
| 00010010 | yardpersec |
| 00010011 | milepersec |
| 00010100 | micrometerpermin |
| 00010101 | mmpermin |
| | |
| 00010110 | cmpermin |

(continued)

| unitType | Term ID of unit |
|---|---|
| 00010111 | meterpermin |
| 00011000 | kmpermin |
| 00011001 | inchpermin |
| 00011010 | yardpermin |
| 00011011 | milepermin |
| 00011100 | micrometerperhour |
| 00011101 | mmperhour |
| 00011110 | cmperhour |
| 00011111 | meterperhour |
| 00100000 | kmperhour |
| 00100001 | inchperhour |
| 00100010 | yardperhour |
| 00100011 | mileperhour |
| 00100100 | micrometerpersecsquare |
| 00100101 | mmpersecsquare |
| 00100110 | cmpersecsquare |
| 00100111 | meterpersecsquare |
| 00101000 | kmpersecsquare |
| 00101001 | inchpersecsquare |
| 00101010 | yardperseesquare |
| 00101011 | milepersecsquare |
| 00101100 | micormeterperminsquare |
| 00101101 | mmperminsquare |
| 00101110 | cmperminsquare |
| 00101111 | meterperminsquare |
| 00110000 | kmpersminsquare |
| 00110001 | inchperminsquare |
| 00110010 | yardperminsquare |
| 00111011 | mileperhoursquare |
| 00111100 | Newton |
| 00111101 | Nmm |
| 00111110 | Npmm |
| | |
| 00111111 | Hz |
| 01000000 | KHz |
| 01000001 | MHz |
| 01000010 | GHz |

(continued)

| unitType | Term ID of unit |
|---|---|
| 01000011 | volt |
| 01000100 | miltivolt |
| 01000101 | ampere |
| 01000110 | milliampere |
| 01000111 | milliwatt |
| 01001000 | watt |
| 01001001 | kilowatt |
| 01001010 | lux |
| 01001011 | celsius |
| 01001100 | fahrenheit |
| 01001101 | radian |
| 01001110 | degree |
| 01001111 | radpersec |
| 01010000 | degpersec |
| 01010001 | radpersecsquare |
| 01010010 | degpersecsquare |
| 01010011 | Npermmsquare |
| 01011100 - 11111111 | Reserved |

Table 60 shows descriptor components semantics of the preference information regarding the light type sensory device.

[Table 60]

| Names | Description |
|---|---|
| LightPrefType | Tool for describing user preference on tight effect |
| UnfavorableColorFlag | This held, which is only present in the binary representation, signals the presence of the activation attribute A value of "1" means the attribute shall be used and "0" means the attribute shall not be used. |
| maxIntensityFlag | This field, which is only present in the binary representation, signals the presence of the activation, attribute A value of "1" means the attribute shall be used and "0" means the attribute shall not be used. |
| unitFlag | This field, which is only present in the binary representation, signals the presence of the activation attribute A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of |
| | |
| | types defined as part of the sensory device capability metadata types. |
| LoopUnfavorableColor | This field, which is only present in the binary representation, specifies the number of Unfavorable Color contained in the description. |

(continued)

| Names | Description |
|---|---|
| Unfavorable Colors | Describes the list of user's detestable colors as a reference to a classification scheme term or as RGB value. A CS that may be used for this purpose is the Colors defined in A.2.2 of ISO/IEC 23005-6.<br>EXAMPLE urn:mpeg:mpeg-v:01-SI-ColorCS-NS:alice_blue would describe the color Alice blue. |
| maxIntensity | Describes the maximum desirable intensity of the light effect in terms of illumination with respect to [$10^{-5}$ lux, 130 kluxl]. |
| unit | Specifies the unit of the maxIntensity value as a reference to a classification scheme term provided by UnitTypeCS defined in A.2.1 of ISO/IEC 23005-6, if a unit other than the default unit specified if the semantics of the maxIntensity is used. |

Table 61 shows an XML representation syntax of the preference information regarding the flash type sensory device.

[Table 61]

```
<!-- ################################################ -->
<!--   Flash Preference type                              -->
<!-- ################################################ -->
<complexType name="FlashPrefType">
    <complexContent>
        <extension base="sepv:LightPrefType">
            <attribute name="maxFrequency" type="positiveInteger" use="optional"/>
            <attribute name="freqUnit" type="mpegvct:unitType" use="optional"/>
        </extension>
    </complexContent>
</complexType>
```

Table 62 shows a binary representation syntax of the preference information regarding the flash type sensory device.

[Table 62]

| FlashPrefType { | Number of bits | Mnemonic |
|---|---|---|
| maxFrequencyFlag | 1 | bslbf |
| freqUnitFlag | 1 | bslbf |
| LightPref | | LightPrefType |
| if(maxfrequencyflag){ | | |
| maxFrequency | 8 | uimsbf |
| } | | |
| if(freqUnitFlag){ | | |
| freqUnit | | unitType |
| } | | |

(continued)

| FlashPrefType { | **Number of bits** | **Mnemonic** |
|---|---|---|
| } | | |

Table 63 shows descriptor components semantics of the preference information regarding the flash type sensory device.

[Table 63]

| **Names** | **Description** |
|---|---|
| FashPrefType | Tool for describing a user preference on light effect. |
| maxFrequencyFlag | This field, which is only present in the binary representation, signals the presence of the activation attribute. A value of "1"' means the attribute shall be used and "0" means the attribute shall not be used. |
| freqUnitFlag | This field, which is only present in the binary representation, signals the presence of the activation attribute. A value of "1" means the attribute shall be used and "0" means the attribute shall not be used. |
| LightPref | Describes a user preference on light effect. |
| maxFrequency | Describes the maximum allowed number of flickering in times per second.<br>EXAMPLE The value 10 means it will flicker 10 times for each second. |
| freqUnit | Specifies the unit of the mawFrequency value as a reference to a classification scheme term provided by UnitTypeCS defined in A.2.1 of ISO/IEC 23005-6, if a unit other than the default unit specified in the semantics of the maxFrequency is used. |

Table 64 shows an XML representation syntax of the preference information regarding the heating type sensory device.

[Table 64]

```
<!-- ################################################ -->
<!-- Heating Preference type                          -->
<!-- ################################################ -->
<complexType name="HeatingPrefType">
    <complexContent>
        <extension base="cidl:UserSensoryPreferenceBaseType">
            <attribute name="minIntensity" type="integer" use="optional"/>
            <attribute name="maxIntensity" type="integer" use="optional"/>
            <attribute name="unit" type="mpegvct:unitType" use="optional"/>
        </extension>
    </complexContent>
</complexType>
```

Table 65 shows a binary representation syntax of the preference information regarding the heating type sensory device.

[Table 65]

| HeatingPrefType { | Number of bits | Mnemonic |
|---|---|---|
| minIntensityFlag | 1 | bslbf |
| maxIntensityFlag | 1 | bslbf |
| unitFlag | 1 | bslbf |
| UserSensoryPreferenceBase | | UserSensoryPreferenceBaseType |
| if(minIntensityFlag){ | | |
| minIntensity | 10 | simsbf |
| } | | |
| if(maxIntensityFlag){ | | |
| maxIntensity | 10 | simsbf |
| } | | |
| If(unitFlag){ | | |
| unit | | unitType |
| } | | |
| } | | |

Table 66 shows descriptor components semantics of the preference information regarding the heating type sensory device.

[Table 66]

| Names | Description |
|---|---|
| HeatingPrefType | Tool for describing a user preference on heating effect. |
| minIntensityFlag | This field, which is only present in the binary representation, signals the presence of the activation attribute A value of "1" means the attribute shall be used and "0" means the attribute shall not be used. |
| maxIntensityFlag | This field, which is only present in the binary representation, signals the presence of the activation attribute A value of "1" means the attribute shall be used and "0" means the attribute shall not be used. |
| unitFlag | This field, which is only present in the binary representation, signals the presence of the activation attribute A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of |
| | |
| | types defined as part of the sensory device capability metadata types. |
| minIntensity | Describes the highest desirable temperature of the heating effect with respect to the Celsius scale (or Fahrenheit). |
| maxIntensity | Describes the lowest desirable temperature of the heating effect with respect to the Celsius scale (or Fahrenheit). |
| units | Specifies the unit of the maxIntensity and minIntensity value as reference to a classification scheme term provided by UnitTypeCS defined in A.2.1 of ISO/IEC 23005-6. |

Table 67 shows an XML representation syntax of the preference information regarding the cooling type sensory

device.

[Table 67]

```
<!-- ################################################ -->
<!-- Cooling Preference type                          -->
<!-- ################################################ -->
<complexType name="CoolingPrefType">
    <complexContent>
        <extension base="cidl:UserSensoryPreferenceBaseType">
            <attribute name="minIntensity" type="integer" use="optional"/>

            <attribute name="maxIntensity" type="integer" use="optional"/>
            <attribute name="unit" type="mpegvct:unitType" use="optional"/>
        </extension>
    </complexContent>
</complexType>
```

Table 68 shows a binary representation syntax of the preference information regarding the cooling type sensory device.

[Table 68]

| CoolingPrefType { | **Number of bits** | **Mnemonic** |
|---|---|---|
| minIntensityFlag | 1 | bslbf |
| maxIntensityFlag | 1 | bslbf |
| unitFlag | 1 | bslbf |
| UserSensoryPreferenceBase | | UserSensoryPreferenceBaseType |
| if(minIntensityFlag){ | | |
| minIntensity | 10 | simsbf |
| } | | |
| if(maxIntensityFlag){ | | |
| maxIntensity | 10 | simsbf |
| } | | |
| if(unitFlag){ | | |
| unit | | unitType |
| } | | |
| } | | |

Table 69 shows descriptor components semantics of the preference information regarding the cooling type sensory device.

[Table 69]

| **Names** | **Descriptions** |
|---|---|
| CoolingPrefType | Tool for describing a user preference on cooling effect. |
| minItensityFlag | This field, which is only present in the binary representation, signals the presence of the activation attribute. A value of "1" means the attribute shall be used and "0" means the attribute shall not be used. |
| maxIntensivityFlag | This field, which is only present in the binary representation, signals the presence of the activation attribute. A value of "1" means the attribute shall be used and "0" means the attribute shall not be used. |
| unitFlag | This field, which is only present in the binary representation, signals the presence of the activation attribute. A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of types defined as part of the sensory device capability metadata types. |
| minIntensity | Describes the lowest desirable temperature of the cooling effect with respect to the Celsius scale (or Fahrenheit). |
| maxIntensity | Describes the highest desirable temperature of the cooling effect with respect to the Celsius scale (or Fahrenheit). |
| units | Specifies the unit of the maxIntensity and minIntensity value as a reference to a classification scheme term provided by UnitTypeCS defined in A.2.1 of ISO/IEC 23005-6. |

Table 70 shows an XML representation syntax of the preference information regarding the wind type sensory device.

[Table 70]

```
<!-- ################################################ -->
<!-- Wind Preference type                              -->
<!-- ################################################ -->
<complexType name="WindPrefType">
    <complexContent>
        <extension base="cidl:UserSensoryPreferenceBaseType">
            <attribute name="maxIntensity" type="integer" use="optional"/>

            <attribute name="unit" type="mpegvct:unitType" use="optional"/>
        </extension>
    </complexContent>
</complexType>
```

Table 71 shows a binary representation syntax of the preference information regarding the wind type sensory device.

[Table 71]

| WindPrefType { | **Number of bits** | **Mnemonic** |
|---|---|---|
| maxIntensityFlag | 1 | bslbf |

(continued)

| WindPrefType { | Number of bits | Mnemonic |
|---|---|---|
| unitFlag | 1 | bslbf |
| UserSensoryPreferenceBase | | UserSensoryPreferenceBaseType |
| if(maxIntensityFlag){ | | |
| maxIntensity | 10 | simsbf |
| } | | |
| if(unitFlag){ | | |
| unit | | unitType |
| } | | |
| } | | |

Table 72 shows descriptor components semantics of the preference information regarding the wind type sensory device.

[Table 72]

| Names | Description |
|---|---|
| WindPrefType | Tool for describing a user preference on a wind effect. |
| maxIntensityFlag | This field, which is only present in the binary representation, signals the presence of the activation attribute. A value of "1" means the attribute shall be used and "0" means the attribute shall not be used. |
| unitFlag | This field, which is only present in the binary representation, signals the presence of the activation attribute. A value of "1" means the attribute shall be used and "0" means the attribute shall not be used. |
| UserSensoryPreferenceBased | UserSensoryPreferenceBaseType extends dia:UserCharacteristicBaseType as defined in Part 7 of ISO/IEC 21000 and provides a base abstract type for a subset of types defined as part of the sensory device capability metadata, types. |
| maxIntensity | Describes the maximum desirable intensity of the wind effect in terms of strength with respect to the Beaufort scale. |
| | |
| unit | Specifies the unit of the maxIntensity value as a reference to a classification scheme term provided by UnitTypeCS defined in A.2 of ISO/IEC 23005-6, if a unit other than the default unit specified in the semantics of the maxIntensity is used. |

Table 73 shows an XML representation syntax of the preference information regarding the vibration type sensory device.

[Table 73]

```
<!-- ################################################ -->
<!--    Vibration Preference type                        -->
<!-- ################################################ -->
<complexType name="VibrationPrefType">
        <complexContent>
                <extension base="cidl:UserSensoryPreferenceBaseType">
                        <attribute name="maxIntensity" type="integer" use="optional"/>
                        <attribute name="unit" type="mpegvct:unitType" use="optional"/>
                </extension>
        </complexContent>

</complexType>
```

Table 74 shows a binary representation syntax of the preference information regarding the vibration type sensory device.

[Table 74]

| VibrationPrefType { | Number of bits | Mnemonic |
|---|---|---|
| maxIntensityFlag | 1 | bslbf |
| unitFlag | 1 | bslbf |
| UserSensoryPreferenceBase | | UserSensoryPreferenceBaseType |
| if(maxIntensityFlag){ | | |
| maxIntensity | 10 | simsbf |
| } | | |
| If(unitFlag){ | | |
| unit | | unitType |
| } | | |
| } | | |

Table 75 shows descriptor components semantics of the preference information regarding the vibration type sensory device.

[Table 75]

| Name | Description |
|---|---|
| VibrationPrefType | Tool for describing a user preference on vibration effect. |
| maxIntensityFlag | This field, which is only present in the binary representation, signals the presence of the activation attribute. A value of "1" |
| | |
| | means the attribute shall be used and "0" means the attribute shall not be used. |

(continued)

| Name | Description |
|---|---|
| unitFlag | This field, which is only present in the binary representation, signals the presence of the activation attribute A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of types defined as part of the sensory device capability metadata types. |
| maxIntensity | Describes the maximum desirable intensity of the vibration effect in terms of strength with respect to the Richter magnitude scale. |
| unit | Specifies the unit of the maxIntensity value as a reference to a classification scheme term provided by UnitTypeCS defined in A.2.1 of ISO/IEC 23005-6, if a unit other than the default unit specified in the semantics of the maxIntensity is used. |

Table 76 shows an XML representation syntax of the preference information regarding the scent type sensory device.

[Table 76]

```
<!-- ################################################ -->
<!--    Scent Preference type                          -->
<!-- ################################################ -->
<complexType name="ScentPrefType">
    <complexContent>
        <extension base="cidl:UserSensoryPreferenceBaseType">
            <sequence>
                <element name="UnfavorableScent"
    type="mpeg7:termReferenceType" minOccurs="0" maxOccurs="unbounded"/>
            </sequence>
            <attribute name="maxIntensity" type="integer" use="optional"/>
            <attribute name="unit" type="mpegvct:unitType" use="optional"/>
        </extension>
    </complexContent>
</complexType>
```

Table 77 shows a binary representation syntax of the preference information regarding the scent type sensory device.

[Table 77]

| ScentPrefType { | Number of bits | Mnemonic |
|---|---|---|
| UnfavorableScentFlag | 1 | bslbf |
| maxIntensityFlag | 1 | bslbf |
| unitFlag | 1 | bslbf |

(continued)

| ScentPrefType { | Number of bits | Mnemonic |
|---|---|---|
| UserSensoryPreferenceBase | | UserSensoryPreferenceBaseType |
| if(UnfavorableScentFlag) { | | |
| Loop Unfavorable Scent | | vluimsbf5 |
| for(k=0;k< LoopUnfavorableScent; k++){ | | |
| UnfavorableScent[k] | | ColorType |
| } | | |
| } | | |
| if(maxIntensityFlag){ | | |
| maxIntensity | 10 | simsbf |
| } | | |
| if(unitFlag){ | | |
| unit | | unitType |
| } | | |
| } | | |

Table 78 shows a binary representation syntax of the scent type.

[Table 78]

| scentType | **Term ID of scent** |
|---|---|
| 0000 | rose |
| 0001 | acacia |
| 0010 | chrysanthemum |
| 0011 | lilac |
| 0100 | mint |
| 0101 | jasmine |
| 0110 | pine_tree |
| 0111 | orange |
| 1000 | grape |
| 1001-1111 | Reserved |

Table 79 shows descriptor components semantics of the preference information regarding the scent type sensory device.

[Table 79]

| **Names** | **Description** |
|---|---|
| ScentPrefType | Tool for describing a user preference on scent effect. |
| UnfavorableScentFlag | This field, which is only present in the binary representation, signals the presence of the activation attribute A value of "1" means the attribute shall be used and "0" means the attribute shall not be used. |

(continued)

| Names | Description |
|---|---|
| | |
| maxIntensityFlag | This field, which is only present in the binary representation, signals the presence of the activation attribute. A value of "1'" means the attribute shall be used and "0" means the attribute shall not be used. |
| unitFlag | This field, which is only present in the binary representation, signals the presence of the activation attribute. A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of types defined as part of the sensory device capability metadata types. |
| LoopUnfavorableScent | This field, which is only present in the binary representation, specifies the number of UnfavorableScent contained in the description. |
| UnfavorableScent | Describes the list of user's detestable scent. A CS that may be used for this purpose is the SeentCS defined in A. 2.4 of ISO/IEC 23005-6. |
| maxIntensity | Describes the maximum desirable intensity of the scent effect in terms of milliliter/hour. |
| unit | Specifies the unit of the maxIntensity value as a reference to a classification schema term provided by UnitTypeCS defined in A. 2.1 of ISO/IEC 23005-6, if a unit other than the default unit specified in the semantics of the maxiltensity is used. |

Table 80 shows an XML representation syntax of the preference information regarding the fog type sensory device.

[Table 80]

```
<!-- ################################################ -->
<!--    Fog Preference type                            -->
<!-- ################################################ -->
<complexType name="FogPrefType">
    <complexContent>
        <extension base="cidl:UserSensoryPreferenceBaseType">
            <attribute name="maxIntensity" type="integer" use="optional"/>
            <attribute name="unit" type="mpegvct:unitType" use="optional"/>
        </extension>
    </complexContent>
</complexType>
```

Table 81 shows a binary representation syntax of the preference information regarding the fog type sensory device.

[Table 81]

| FogPrefType { | Number of bits | Mnemonic |
|---|---|---|
| maxIntensityFlag | 1 | bslbf |
| unitFlag | 1 | bslbf |

(continued)

| FogPrefType { | Number of bits | Mnemonic |
|---|---|---|
| UserSensoryPreferenceBase | | UserSensoryPreferenceBaseType |
| if(maxIntensityFlag){ | | |
| maxIntensity | 10 | simsbf |
| } | | |
| if(unitFlag){ | | |
| unit | | unitType |
| } | | |
| } | | |

Table 82 shows descriptor components semantics of the preference information regarding the fog type sensory device.

[Table 82]

| **Names** | **Description** |
|---|---|
| FogPrefType | Tool for describing a preference on fog effect. |
| mayIntensityFlag | This field, which is only present in the binary representation, signals the presence of the activation attribute. A value of "1" means the attribute shall be used and "0" means the attribute shall not be used. |
| unitFlagt | This field, which is only present if the binary representation, signals the presence of the activation attribute. A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides abase abstract type for a subset of types defined as part of the sensory device capability metadata types. |
| maxIntensity | Describes the maximum desirable intensity of the fog effect in terms of milliliter/hour. |
| unit | Specifies the unit of the maxIntensity value as a reference to a classification scheme term provided by UnitTypeCS defined in A.2.1 of ISO/IEC 23005-6, if a unit other than the default unit specifiedin the semantics of the maxIntensity is used. |

Table 83 shows an XML representation syntax of the preference information regarding the sprayer type sensory device.

[Table 83]

```
<!-- ################################################ -->
<!--   Spraying Preference type                        -->
<!-- ################################################ -->
<complexType name="SprayingPrefType">
    <complexContent>
        <extension base="cidl:UserSensoryPreferenceBaseType">
            <attribute name="sprayingType" type="mpeg7:termReferenceType"/>
            <attribute name="maxIntensity" type="integer" use="optional"/>
            <attribute name="unit" type="mpegvct:unitType" use="optional"/>
        </extension>
    </complexContent>
</complexType>
```

Table 84 shows a binary representation syntax of the preference information regarding the sprayer type sensory device.

[Table 84]

| SprayingPrefType{ | **Number of bits** | **Mnemonic** |
|---|---|---|
| sprayingFlag | 1 | bslbf |
| maxIntensityFlag | 1 | bslbf |
| unitFlag | 1 | bslbf |
| UserSensoryPreferenceBase | | UserSensoryPreferenceBaseType |
| if(sprayingFlag){ | | |
| spraying | | SprayingType |
| } | | |
| if(maxIntensityFlag){ | | |
| maxIntensity | 10 | simsbf |
| } | | |
| if(unitFlag){ | | |
| unit | | unitType |
| } | | |
| } | | |

Table 85 shows a binary representation syntax of the sprayer type.

[Table 85]

| **SprayingType** | **Term ID of Spraying** |
|---|---|
| 00 | water |
| 01-11 | Reserved |

Table 86 shows descriptor components semantics of the preference information regarding the sprayer type sensory device.

[Table 86]

| **Names** | **Description** |
|---|---|
| SprayingPrefType | Tool for describing a preference on fog effect. |
| | |
| sprayingFlag | This field, which is only present in the binary representation, signals the presence of the activation attribute, A value of "1" means the attribute shall be used and "0" means the attribute shall not be used, |
| maxIntensityFlag | This field, which is only present in the binary representation, signals the presence of the activation attribute. A value of "1" means the attribute shall be used and "0" means the attribute shall not be used. |
| unitFlag | This field, which is only present in the binary representation, signals the presence of the activation attribute. A value of "1" means the attribute shall be used and "0" means the attribute shall not be used. |
| UserSensoryPreferenceBase | UserSensoryPreferenceBaseType extends dia:UserCharactesisticBaseType as defined in Part 7 of ISO/IEC 21000 and provides a base abstract type for a subset of types defined as part of the sensory device capability metadata, types. |
| spraying | Describes the type of the sprayer material as a reference to a classification scheme term A CS that may be used for this purpose is the sprayingTypeCS defined in Annex A. 2.7 of ISO/IEC 23005-6. |
| maxIntensity | Describes the maximum desirable intensity of the fog effect in terms of milliter/hour. |
| unit | Specifies the unit of the maxIntensivity value as a reference to a Classification scheme term provided by UnitTypeCS defined in A.2.1 of ISO/IEC 23005-6, if a unit other than the default units specified in the semantics of the maxIntensivity is used. |

Table 87 shows an XML representation syntax of the preference information regarding the color correction type sensory device.

[Table 87]

```
<!-- ################################################ -->
<!--    Definition of Color Correction Preference Type    -->
<!-- ################################################ -->
<complexType name="ColorCorrectionPrefType">
    <complexContent>

        <extension base="cidl:UserSensoryPreferenceBaseType"/>
    </complexContent>
</complexType>
```

Table 88 shows a binary representation syntax of the preference information regarding the color correction type sensory device.

[Table 88]

| ColorCorrectionPrefType { | Number of bits | Mnemonic |
|---|---|---|
| UserSensoryPreferenceBase | | UserSensoryPreferenceBaseType |
| } | | |

Table 89 shows descriptor components semantics of the preference information regarding the color correction type sensory device.

[Table 89]

| Names | Description |
|---|---|
| ColorCorrectionPrefType | Specifies whether the user prefers to use color correction functionality of the device or not by using activate attribute. Any information given by other attributes is ignored. |
| UserSensoryPreferenceBase | UserSensoryPreferenceBaseType extends dia:UserCharacteristicBaseType defined in Part 7 of ISO/IEC E1000 and provides abase abstract type for a subset of types defined as part of the sensory device capability metadata types. |

Table 90 shows an XML representation syntax of the preference information regarding the tactile type sensory device.

[Table 90]

```
<!-- ################################################ -->
<!-- Tactile Preference type                          -->
<!-- ################################################ -->
<complexType name="TactilePrefType">
    <complexContent>

     <extension base="cidl:UserSensoryPreferenceBaseType">
          <attribute name="maxTemperature" type="float" use="optional"/>
          <attribute name="minTemperature" type="float" use="optional"/>
          <attribute name="maxCurrent" type="float" use="optional"/>
          <attribute name="maxVibration" type="float" use="optional"/>
          <attribute name="tempUnit" type="mpegvct:unitType" use="optional"/>
          <attribute name="currentUnit" type="mpegvct:unitType" use="optional"/>
          <attribute name="vibrationUnit" type="mpegvct:unitType"
use="optional"/>
     </extension>
    </complexContent>
</complexType>
```

Table 91 shows a binary representation syntax of the preference information regarding the tactile type sensory device.

[Table 91]

| TactilePrefType { | Number of bits | Mnemonic |
|---|---|---|
| maxTemperatureFlag | 1 | bslbf |
| minTemperatureFlag | 1 | bslbf |
| maxCurrentFlag | 1 | bslbf |
| maxVibrationFlag | 1 | bslbf |
| tempUnitFlag | 1 | bslbf |
| currentUnitFlag | 1 | bslbf |
| vibrationUnitFlag | 1 | bslbf |
| UserSensoryPreferenceBase | | UserSensoryPreferenceBaseType |
| if(maxTemperatureFlag) { | | |
| maxTemperature | 32 | fsbf |
| } | | |
| if(minTemperatureFlag) { | | |
| minTemperature | 32 | fsbf |
| } | | |
| if(maxCurrentFlag) { | | |
| maxCurrent | 32 | fsbf |
| } | | |
| if(maxVibrationFlag) { | | |
| maxVibration | 32 | fsbf |
| } | | |
| if(tempUnitFlag) { | | |
| tempUnit | | unitType |
| } | | |
| if(currentUnitFlag) { | | |
| currentUnit | | unitType |
| } | | |
| if(vibrationUnitFlag) { | | |
| vibrationUnit | | unitType |
| } | | |
| } | | |

Table 92 shows descriptor components semantics of the preference information regarding the tactile type sensory device.

[Table 92]

| **Names** | **Description** |
|---|---|
| TactilePrefType | Tool for describing a user preference on tactile effect. |
| maxTemperatureFlag | This field, which is only present in the binary representation, signals the presence of the activation attribute. A value of "1" means the attribute shall be used and "0" means the attribute shall not be used. |

(continued)

| Names | Description |
|---|---|
| minTemperatureFlag | This field, which is only present in the binary representation, signals the presence of the activation attribute. A value of "1" means the attribute shall be used and "0" means the attribute |
| | |
| | shall not be used. |
| maxCurrentFlag | This field, which is only present in the binary representation, signals the presence of the activation attribute, A value of "1" means the attribute shall be used and "0" means the attribute shall not be used. |
| maxVibrationFlag | This field, which is only present in the binary representation, signals the presence of the activation attribute. A value of "1" means the attribute shall be used and "0" means the attribute shall not be used. |
| tempUnitFlag | This field, which is only present in the binary representation, signals the presence of the activation attribute. A value of "1" means the attribute shall be used and "0" means the attribute shall not be used. |
| currentUnitFlag | This field, which is only present in the binary representation, signals the presence of the activation attribute. A value of "1" means the attribute shall be used and "0" means the attribute shall not be used. |
| vibrationUnitFlag | This field, which is only present in the binary representation, signals the presence of the activation attribute. A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of types defined as part of the sensory device capability metadata types. |
| maxTemperature | Describes the maximum desirable temperature regarding how hot the tactile effect may be achieved, (Celsius) |
| minTemperature | Describes the minimum desirable temperature regarding how cold the tactile effect may be achieved. (Celsius) |
| maxCurrent | Describe the maximum desirable electric current. (mA) |
| maxVibration | Describes the maximum desirable vibration (mm) |
| tempUnit | Specifies the unit of the intensity, as a reference to a classification scheme term provided by UnitTypeCS defined in A.2.1 of ISO/IEC 23005-6. If the unit is not specified, the default unit is Celsius. |
| currentUnit | Specifies the unit of the intensity, as a reference to a classification scheme term provided by UnitTypeCS defined in A.2.1 of ISO/IEC 23005-6. If the unit is not specified, the default unit is milli-ampere. |
| vibrationUnit | Specifies the unit of the intensity, as a reference to a classification scheme term provided by UnitTypeCS defined in |
| | |
| | A.2.1 of ISO/IEC 23005-6. |

Table 93 shows an XML representation syntax of the preference information regarding the kinesthetic type sensory device.

[Table 93]

```
<!-- ################################################ -->
<!-- Kinesthetic Preference type                                    -->
<!-- ################################################ -->
<complexType name="KinestheticPrefType">
    <complexContent>
        <extension base="cidl:UserSensoryPreferenceBaseType">
            <sequence>
                <element name="maxForce" type="mpegvct:Float3DVectorType" minOccurs="0"/>
                <element name="maxTorque" type="mpegvct:Float3DVectorType" minOccurs="0"/>
            </sequence>
            <attribute name="forceUnit" type="mpegvct:unitType" use="optional"/>
            <attribute name="torqueUnit" type="mpegvct:unitType" use="optional"/>
        </extension>
    </complexContent>
</complexType>
```

Table 94 shows a binary representation syntax of the preference information regarding the kinesthetic type sensory device.

[Table 94]

| KinestheticPrefType { | **Number of bits** | **Mnemonic** |
|---|---|---|
| maxForceFlag | 1 | bslbf |
| maxTorqueFlag | 1 | bslbf |
| forceUnitFlag | 1 | bslbf |
| torqueUnitFlag | 1 | bslbf |
| UserSensoryPreferenceBase | | UserSensoryPreferenceBaseType |
| if(maxForceFlag) { | | |
| maxForce | | Float3DVectorType |
| } | | |
| if(maxTorqueFlag) { | | |
| maxTorque | | Float3DVectorType |
| } | | |
| If(forceUnitFlag) { | | |
| forceUnit | | unitType |
| } | | |
| if(torqueUnitFlag) { | | |

(continued)

| KinestheticPrefType { | Number of bits | Mnemonic |
|---|---|---|
| torqueUnit | | unitType |
| } | | |
| } | | |
| Float3DVectorType { | | |
| X | 32 | fsbf |
| Y | 32 | fsbf |
| Z | 32 | fsbf |
| } | | |

Table 95 shows descriptor components semantics of the preference information regarding the kinesthetic type sensory device.

[Table 95]

| **Names** | **Description** |
|---|---|
| KinestheticPrefType | Tool for describing a user preference on Kinesthetic effect (forcefeedback effect). |
| maxForceFlag | This field, which is only present in the binary representation, signals the presence of the activation attribute. A value of "1" means the attribute shall be used and "0" means the attribute shall not be used. |
| maxTorqueFlag | This field, which is only present in the binary representation, signals .the presence of the activation attribute. A value of "1" means the attribute shall be used and "0" means the attribute shall not be used. |
| forceUnitFlag | This field, which is only present in the binary representation, signals the presence of the activation attribute. A value of "1" means the attribute shall be. used and "0" means the attribute shall not be used. |
| torqueUnitFlag | This field, which is only present in the binary representation, signals the presence of the activation attribute. A value of "1" means the attribute shall be used and "0" means the attribute shall not be used. |
| UserSensoryPreferenceBase | UserSensoryPreferenceBaseType extends dia:UserCharacteristicBaseType as defined in Part 7 of ISO/IEC 21000 and provides a base abstract type for a subset of types defined as part of the sensory device capability metadata types. |
| maxForce | Describes the maximum desirable force for each direction of 3 dimensional axis (x, y and 2) (N) |
| maxTorque | Describes the maximum desirable torque for each direction of 3 dimensional axis (x, y and 2). (Nmm) |
| forceUnit | Specifies the unit of the intensity, as a reference to a classification scheme term provided by UnitTypeCS defined in A.2.1 of ISO/IEC 23005-6. If the unit is not specified, the default |
| | |
| | unit is newton(N). |
| torqueUnit | Specifies the unit of the intensity, as a reference to a classification scheme term provided by UnitTypeCS defined in A.2.1 of ISO/IEC 23005-6. If the unit is not specified, the default unit is newton millimeters (Nmm). |
| Float3DvectorType | Tool for describing a 3D position vector |
| X | Describes the sensed value in x-axis in the unit |

(continued)

| **Names** | **Description** |
|---|---|
| Y | Describes.the sensed value in y-axis in the unit |
| Z | Describes the sensed value in z-axis in the unit. |

Table 96 shows an XML representation syntax of the preference information regarding the rigid body motion type sensory device.

[Table 96]

```
<!-- ################################################ -->
<!-- RigidBodyMotion Preference type                      -->
<!-- ################################################ -->
<complexType name="RigidBodyMotionPrefType">
	<complexContent>
		<extension base="cidl:UserSensoryPreferenceBaseType">
			<sequence minOccurs="1" maxOccurs="7">
				<element                    name="MotionPreference"
type="sepv:MotionPreferenceBaseType"/>
			</sequence>
		</extension>
	</complexContent>
</complexType>

<!-- ################################################    -->
<!--   Motion Preference base type                    -->
<!-- ################################################   -->
<complexType name="MotionPreferenceBaseType" abstract="true">
	<attribute name="unfavor" type="boolean" use="optional" default="0"/>
</complexType>

<!-- ################################################ -->
<!--   Move Toward Preference type                                    -->
<!-- ################################################ -->
<complexType name="MoveTowardPreferenceType">
	<complexContent>
		<extension base="sepv:MotionPreferenceBaseType">
			<attribute name="MaxMoveDistance" type="unsignedInt" use="optional"/>
			<attribute name="MaxMoveSpeed" type="float" use="optional"/>
			<attribute name="MaxMoveAccel" type="float" use="optional"/>
			<attribute name="distanceUnit" type="mpegvct:unitType" use="optional"/>
			<attribute name="speedUnit" type="mpegvct:unitType" use="optional"/>
```

```
                <attribute name="accelUnit" type="mpegvct:unitType" use="optional"/>
            </extension>
        </complexContent>
    </complexType>

    <!-- ################################################ -->
    <!--    Incline Preference type                                    -->
    <!-- ################################################ -->
    <complexType name="InclinePreferenceType">
        <complexContent>
            <extension base="sepv:MotionPreferenceBaseType">
                <attribute name="MaxRotationAngle" type="float" use="optional"/>
                <attribute name="MaxRotationSpeed" type="float" use="optional"/>
                <attribute name="MaxRotationAccel" type="float" use="optional"/>
                <attribute name="angleUnit" type="mpegvct:unitType" use="optional"/>
                <attribute name="speedUnit" type="mpegvct:unitType" use="optional"/>
                <attribute name="accelUnit" type="mpegvct:unitType" use="optional"/>
            </extension>
        </complexContent>
    </complexType>

    <!-- ################################################ -->
    <!--    Wave Preference type                                    -->
    <!-- ################################################ -->
    <complexType name="WavePreferenceType">
        <complexContent>
            <extension base="sepv:MotionPreferenceBaseType">
                <attribute name="MaxWaveDistance" type="float" use="optional"/>
                <attribute name="MaxWaveSpeed" type="float" use="optional"/>
                <attribute name="distanceUnit" type="mpegvct:unitType" use="optional"/>
                <attribute name="speedUnit" type="mpegvct:unitType" use="optional"/>
            </extension>
        </complexContent>
    </complexType>

    <!-- ################################################ -->
    <!--    Collide Preference type                                    -->
```

```
<!-- ################################################ -->
<complexType name="CollidePreferenceType">
    <complexContent>
        <extension base="sepv:MotionPreferenceBaseType">
            <attribute name="MaxCollideSpeed" type="float" use="optional"/>
            <attribute name="speedUnit" type="mpegvct:unitType" use="optional"/>
        </extension>
    </complexContent>
</complexType>

<!-- ################################################ -->
<!--  Turn Preference type                            -->
<!-- ################################################ -->
<complexType name="TurnPreferenceType">
    <complexContent>
        <extension base="sepv:MotionPreferenceBaseType">
            <attribute name="MaxTurnSpeed" type="float" use="optional"/>
            <attribute name="speedUnit" type="mpegvct:unitType" use="optional"/>
        </extension>
    </complexContent>
</complexType>

<!-- ################################################ -->
<!--  Shake Preference type                           -->
<!-- ################################################ -->
<complexType name="ShakePreferenceType">
    <complexContent>
        <extension base="sepv:MotionPreferenceBaseType">
            <attribute name="MaxShakeDistance" type="float" use="optional"/>
            <attribute name="MaxShakeSpeed" type="float" use="optional"/>
            <attribute name="distanceUnit" type="mpegvct:unitType" use="optional"/>
            <attribute name="speedUnit" type="mpegvct:unitType" use="optional"/>
        </extension>
    </complexContent>
</complexType>

<!-- ################################################ -->
```

```
<!--    Spin Preference type                                                    -->
<!-- ################################################ -->
<complexType name="SpinPreferenceType">
    <complexContent>
        <extension base="sepv:MotionPreferenceBaseType">
            <attribute name="MaxSpinSpeed" type="float" use="optional"/>
            <attribute name="speedUnit" type="mpegvct:unitType" use="optional"/>
        </extension>
    </complexContent>
</complexType>
```

Table 97 shows a binary representation syntax of the preference information regarding the rigid body motion type sensory device.

[Table 97]

| RigidBodyMotionPrefType { | Number of bits | Mnemonic |
|---|---|---|
| UserSensoryPreferenceBase | | UserSensoryPreferenceBaseType |
| LoopMotionPreference | 3 | uimsbf |
| for(k=0;k< LoopMotionPreference; k++) { | | |
| MotionPreference[k] | | MotionPreferenceBaseType |
| } | | |
| } | | |
| MotionPreferenceBaseType { | | |
| unfavorFlag | 1 | bslbf |
| if(unfavorFlag) { | | |
| unfavor | 1 | bslbf |
| } | | |
| } | | |
| MoveTowardPreferenceType { | | |
| MaxMoveDistanceFlag | 1 | bslbf |
| MaxMoveSpeedFlag | 1 | bslbf |
| MaxMoveAccelFlag | 1 | bslbf |
| distanceUnitFlag | 1 | bslbf |
| speedUnitFlag | 1 | bslbf |
| accelUnitFlag | 1 | bslbf |
| MotionPreferenceBase | | MotionPreferenceBaseType |
| if(MaxMoveDistanceFlag){ | | |
| MaxMoveDistance | 8 | uimsbf |
| } | | |
| if(MaxMoveSpeedFlag){ | | |

(continued)

| RigidBodyMotionPrefType { | Number of bits | Mnemonic |
|---|---|---|
| MaxMoveSpeed | 32 | fsbf |
| } | | |
| if(MaxMoveAccelFlag){ | | |
| MaxMoveAccel | 32 | fsbf |
| } | | |
| if(distanceUnitFlag){ | | |
| distanceUnit | | unitType |
| } | | |
| if(speedUnitFlag){ | | |
| speedUnit | | unitType |
| } | | |
| if(accelUnitFlag){ | | |
| accelUnit | | unitType |
| } | | |
| } | | |
| InclinePreferenceType { | | |
| MaxRotationAngleFlag | 1 | bslbf |
| MaxRotationSpeedFlag | 1 | bslbf |
| MaxRotationAccelFlag | 1 | bslbf |
| angleUnitFlag | 1 | bslbf |
| speedUnitFlag | 1 | bslbf |
| accelUnitFlag | 1 | bslbf |
| MotionPreferenceBase | | MotionPreferenceBaseType |
| if(MaxRotationAngleFlag) { | | |
| MaxRotationAngle | 32 | fsbf |

(continued)

| RigidBodyMotionPrefType { | Number of bits | Mnemonic |
|---|---|---|
| } | | |
| if(MaxRotationSpeedFlag){ | | |
| MaxRotationSpeed | 32 | fsbf |
| } | | |
| if(MaxRotationAccelFlag){ | | |
| MaxRotationAccel | 32 | fsbf |
| } | | |
| if(angleUnitFlag){ | | |
| angleUnit | | unitType |
| } | | |
| if(speedUnitFlag){ | | |
| speedUnit | | unitType |
| } | | |
| if(accelUnitFlag){ | | |
| accelUnit | | unitType |
| } | | |
| } | | |
| WavePreferenceType { | | |
| MaxWaveDistanceFlag | 1 | bslbf |
| MaxWaveSpeedFlag | 1 | bslbf |
| distanceUnitFlag | 1 | bslbf |
| speedUnitFlag | 1 | bslbf |
| MotionPreferenceBase | | MotionPreferenceBaseType |
| if(MaxWaveDistanceFlag){ | | |
| MaxWaveDistance | 32 | fsbf |

(continued)

| RigidBodyMotionPrefType { | Number of bits | Mnemonic |
|---|---|---|
| } | | |
| if(MaxWaveSpeedFlag){ | | |
| MaxWaveSpeed | 32 | fsbf |
| } | | |
| if(distanceUnitFlag){ | | |
| distanceUnit | | unitType |
| } | | |
| if(speedUnitFlag){ | | |
| speedUnit | | unitType |
| } | | |
| } | | |
| CollidePreferenceType { | | |
| MaxCollideSpeedFlag | | |
| speedUnitFlag | | |
| MotionPreferenceBase | | MotionPreferenceBaseType |
| if(MaxCollideSpeedFlag){ | | |
| MaxCollideSpeed | 32 | fsbf |
| } | | |
| if(speedUnitFlag){ | | |
| speedUnit | | unitType |
| } | | |
| } | | |
| TurnPreferenceType { | | |
| MaxTurnSpeedFlag | 1 | bslbf |
| speedUnitFlag | 1 | bslbf |

(continued)

| RigidBodyMotionPrefType { | Number of bits | Mnemonic |
|---|---|---|
| MotionPreferenceBase | | MotionPreferenceBaseType |
| if(MaxTurnSpeedFlag){ | | |
| MaxTurnSpeed | 32 | fsbf |
| } | | |
| if(speedUnitFlag){ | | |
| speedUnit | | unitType |
| } | | |
| } | | |
| ShakePreferenceType { | | |
| MaxShakeDistanceFlag | 1 | bslbf |
| MaxShakeSpeedFlag | 1 | bslbf |
| distanceUnitFlag | 1 | bslbf |
| speedUnitFlag | 1 | bslbf |
| MotionPreferenceBase | | MotionPreferenceBaseType |
| if(MaxShakeDistanceFlag){ | | |
| MaxShakeDistance | 32 | fsbf |
| } | | |
| if(MaxShakeSpeedFlag){ | | |
| MaxShakeSpeed | 32 | fsbf |
| } | | |
| if(distanceUnitFlag){ | | |
| distanceUnit | | unitType |
| } | | |
| if(speedUnitFlag){ | | |
| speedUnit | | unitType |

(continued)

| RigidBodyMotionPrefType { | Number of bits | Mnemonic |
|---|---|---|
| } | | |
| } | | |
| SpinPreferenceType { | | |
| MaxSpinSpeedFlag | 1 | bslbf |
| speedUnitFlag | 1 | bslbf |
| MotionPreferenceBase | | MotionPreferenceBaseType |
| if(MaxSpinSpeedFlag){ | | |
| MaxSpinSpeed | 32 | fsbf |
| } | | |
| if(speedUnitFlag){ | | |
| speedUnit | | unitType |
| } | | |
| } | | |

Table 98 shows descriptor components semantics of the preference information regarding the rigid body motion type sensory device.

[Table 98]

| **Names** | **Description** |
|---|---|
| RigidBodyMotionPrefType | Tool for describing a user preference on Rigid body motion effect. |
| UserSensoryPreferenceBase | UserSensoryPreferenceBaseType extends dia:UserCharacteristicBaseType as defined in Part 7 of ISO/IEC 21000 and provides a base abstract type for a subset of types defined as part of the sensory device capability metadata types. |
| LoopMotionPreference | This field, which is only present in the binary representation, specifies the number of MotionPreference contained in the description. |
| MotionPreference | Describes the user preference for various types of rigid body motion effect. This element shall be instantiated by typing any specific extended type of MotionPreferenceBasetype |
| MotionPreferenceBaseType | Provides base type for the type hierarchy of individual motion related preference types. |
| unfavorFlag | This field, which is only present in the binary representation, signals the presence of the activation attribute. A value of "1" means the attribute shall be used and "0" means the attribute shall not be used. |
| unfavor | Describes the user's distasteful motion effect.<br>EXAMPLE The value "true" means the user has a dislike for the specific motion sensory effect |
| MoveTowardPreferenceType | Tool for describing a user preference on move toward effect. |
| MaxMoveDistanceFlag | This field, which is only present in the binary representation, signals the presence of the activation attribute. A value of "1" means the attribute shall be used and "0" means the attribute shall not be used. |
| MaxMoveSpeedFlag | This field, which is only present in the binary representation, signals the presence of the activation attribute. A value of "1" means the attribute shall be used and "0" means the attribute shall not be used. |
| speedUnit | Specifies the unit of the speed, as a reference to a classification scheme term provided by UnitTypeCS defined in A.2.1 of ISO/TEC 23005-6. |
| accelUnit | Specifies the unit of the acceleration, as a reference to a classification scheme term provided by UnitTypeCS defined in A.2.1 of ISO/IEC 23005-6. |
| InclinePreferenceType | Tool for describing a user preference on motion chair incline effect. |
| MaxRotationAngleFlag | This field, which is only present in the binary representation, signals the presence of the activation attribute. A value of "1" means the attribute shall be used and "0" means the attribute shall not be used. |
| MaxRotationSpeedFlag | This field, which is only present in the binary representation, signals the presence of the activation attribute. A value of "1" means the attribute shall be used and "0" means the attribute shall not be used. |
| MaxRotationAccelFlag | This field, which is only present in the binary representation, signals the presence of the activation attribute. A value of "1" |
| | |
| | means the attribute shall be used and "0" means the attribute shall not be used. |
| angleUnitFlag | This field, which is only present in the binary representation, signals the presence of the activation attribute. A value of "1" means the attribute shall be used and "0" means the attribute shall not be used. |

(continued)

| Names | Description |
|---|---|
| speedUnitFlag | This field, which is only present in the binary representation, signals the presence of the activation attribute. A value of "1" means the attribute shall be used and "0" means the attribute shall not be used. |
| MaxMoveAccelFlag | This field, which is only present in the binary representation, signals the presence of the activation attribute. A value of "1" means the attribute shall be used and "0" means the attribute shall not be used. |
| distanceUnitFlag | This field, which is only present in the binary representation, signals the presence of the activation attribute. A value of "1" means the attribute shall be used and "0" means the attribute |
| | |
| | shall not be used. |
| speedUnitFlag | This field, which is only present in the binary representation, signals the presence of the activation attribute. A value of "1" means the attribute shall be used and "0" means the attribute shall not be used. |
| accelUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxMoveDistance | Describes the maximum desirable distance of the move effect with respectto the centimeter.<br>EXAMPLE The value '10' means the user does not want the chair move more than 10 cm. |
| MaxMoveSpeed | Describes the maximum desirable speed of move effect with respectto the centimeter per second. EXAMPLE The value '10' means the user does not want the chair speed exceed more than 10cm/s. |
| MaxmoveAccel | Describes the maximum desirable acceleration of move effect with respect to the centimeter per square second. |
| distanceUnit | Specifies the unit of the distance, as a reference to a classification scheme term provided by UnitTypeCS defined in A.2.1 of ISO/IEC 23005-6. |
| accelUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxRotationAngle | Describes the maximum desirable rotation angle of incline effect. |
| MaxRotationSpeed | Describes the maximum desirable rotation speed of incline effect with respect to the degree per second.<br>EXAMPLE The value '10' means the user does not want the chair speedexceedmore than 10 degree/s. |
| MaxRotationAccel | Describes the maximum desirable rotation acceleration of incline effect with respect to the degree per second. |
| angleUnit | Specifies the unit of the angle, as a reference to a classification scheme term provided by UnitTypeCS defined in A.2.1 of ISO/IEC 23006-6. |
| speedUnit | Specifies the unit of the speed, as a reference to a Classification scheme term provided by UnitTypeCS defined in A.2.1 of ISO/IEC 23005-6. |

(continued)

| Names | Description |
|---|---|
| accelUnit | Specifies the unit of the acceleration, as a reference to a classification scheme term provided by UnitTypeCS defined in A.2.1 of ISO/IEC 23005-6. |
| WavePreferenceType | Tool for describing a user preference on wave effect. |
| MaxWaveDistanceFlag | This field, which is only present in the binary representation, signals the presence of the activation attribute. A value of "1" means the attribute shall be used and "0" means the attribute shall not be used. |
| MaxWaveSpeedFlag | This field, which is only present in the binary representation, signals the presence of the activation attribute. A value of "1" means the attribute shall be used and "0" means the attribute shall not be used. |
| | |
| distanceUnitFlag | This field, which is only present in the binary representation, signals the presence of the activation attribute. A value of "1" means the attribute shall be used and "0" means the attribute shall not be used. |
| speedUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxWaveDistance | Describes the maximum desirable distance of wave effect with respectto the centimeter.<br>NOTE Observe the maximum distance among the distance of yawing, rolling and pitching. |
| MaxWaveSpeed | Describes the maximum desirable speed of wave effect in terms of cycle per second.<br>NOTE Observe the maximum speed among the speed of yawing, rolling and pitching. |
| distanceUnit | Specifies the unit of the distance, as a reference to a classification scheme term provided by UnitTypeCS defined in A.2.1 of ISO/IEC 23005-6. |
| speedUnit | Specifies the unit of the speed, as a reference to a classification scheme term provided by UnitTypeCS defined in A.2.1 of ISO/IEC 23005-6. |
| CollidePreferenceType | Tool for describing a user preference on motion chair collision effect. |
| MaxCollideSpeedFlag | This field, which is only present in the binary representation, signals the presence of the activation attribute. A value of "1" means the attribute shall be used and "0" means the attribute shall not be used. |
| speedUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxCollideSpeed | Describes the maximum desirable speed of collision effect with respectto the centimeter per second.<br>EXAMPLE The value ’10’ means the user does not want the chair speed exceed more than 10cm/s. |
| speedUnit | Specifies the unit of the speed, as a reference to a classification scheme term provided by UnitTypeCS defined in A.2.1 of |
| | |

(continued)

| Names | Description |
|---|---|
| | ISO/IEC 23005-6. |
| TurnPreferenceType | Tool for describing a user preference on turn effect. |
| MaxTurnSpeedFlag | This field, which is only present in the binary representation, signals the presence of the activation attribute. A value of "1" means the attribute shall be used and "0" means the attribute shall not be used. |
| speedUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxTurnSpeed | Describes the maximum desirable speed of turn effect with respect to the degree per second.<br>EXAMPLE The value '10' means the user does not want the chair speed exceed more than 10 degree/s. |
| speedUnit | Specifies the unit of the speed, as a reference to a classification scheme term provided by UnitTypeCS defined in A.2.1 of ISO/IEC 23005-6. |
| ShakePreferenceType | Tool for describing a user preference on motion chair shake effect. |
| MaxShakeDistanceFlag | This field, which is only present in the binary representation. signals the presence of the activation attribute. A value of "1" means the attribute shall be used and "0" means the attribute shall not be used. |
| MaxShakeSpeedFlag | This field, which is only present in the binary representation, signals the presence of the activation attribute. A value of "1" means the attribute shall be used and "0" means the attribute shall not be used. |
| distanceUnitFlag | This field, which is only present in the binary representation, signals the presence of the activation attribute. A value of "1" means the attribute shall be used and "0" means the attribute shall not be used. |
| speedUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxShakeDistance | Describes the maximum desirable distance of the Shake effect with respectto the centimeter.<br>EXAMPLE The value '10' means the user does not want the |
| | |
| | chair shake more than 10 cm. |
| MaxShakeSpeed | Describes the maximum desirable speed of shake effect in terms of cycle per second.<br>EXAMPLE The value '1' means the motion chair shake speed can't exceed 1cycle/sec. |
| distanceUnit | Specifies the unit of the distance, as a reference to a classification scheme term provided by UnitTypeCS defined in A.2.1 of ISO/IEC 23005-6. |
| speedUnit | Specifies the unit of the speed, as a reference to a classification scheme term provided by UnitTypeCS defined in A.2.1 of ISO/IEC 23005-6. |
| SpinPreferenceType | Tool for describing a user preference on motion chair spin effect. |

(continued)

| Names | Description |
|---|---|
| axSpinSpeedFlag | This field, which is only present in the binary representation, signals the presence of the activation attribute. A value of "1" means the attribute shall be used and "0" means the attribute shall not be used. |
| speedUnitFlag | This field, which is only present in the binary representation, signals the presence of the activation attribute. A value of "1" means the attribute shall be used and "0" means the attribute shall not be used. |
| MotionPreferenceBase | Provides base type for the type hierarchy of individual motion related preference types. |
| MaxSpinSpeed | Describes the maximum desirable speed of spin effect in terms of cycle per second.<br>EXAMPLE The value '1' means the motion chair spin speed can't exceed 1cycle/sec. |
| speedUnit | Specifies the unit of the speed, as a reference to a classification scheme term provided by UnitTypeCS defined in A.2.1 of ISO/IEC 23005-6. |

FIG. 6 illustrates a structure of a sensory effect controlling device 620 according to example embodiments.

Referring to FIG. 6, the sensory effect controlling device 620 includes a decoding unit 621, a generation unit 622, and an encoding unit 623.

The decoding unit 621 may decode SEM and SDCap metadata. The sensory effect controlling device 620 may receive the SEM from the sensory media reproducing device 610 and receive the SDCap metadata from the sensory device 630.

The decoding unit 621 may extract the sensory effect by decoding the SEM. Also, the decoding unit 621 may extract capability information regarding capability of the sensory device 630 by decoding the SDCap metadata.

The decoding unit 621 may include at least one of an XML decoder and a binary decoder. According to example embodiments, the decoding unit 621 may include the XML decoder 221 of FIG. 2, the binary decoder 321 of FIG. 3, and the binary decoder 421 and the XML decoder 422 of FIG. 4.

The generation unit 622 may generate command information for controlling the sensory device 630 based on the decoded SEM and the decoded SDCap metadata.

The command information may be information for controlling execution of an effect event corresponding to the sensory effect information by the sensory device 630.

The sensory effect controlling device 620 may further include a receiving unit (not shown).

The receiving unit may receive USP metadata from the sensory device 630.

Here, the decoding unit 621 may decode the USP metadata. That is, the decoding unit 621 may extract preference information, that is, information on a user preference with respect to a sensory effect, by decoding the USP metadata.

The generation unit 622 may generate command information for controlling the sensory device 630 based on the decoded sensory effect metadata, the decoded SDCap metadata, and the decoded USP metadata.

The encoding unit 623 may encode the command information into SDCmd metadata. That is, the encoding unit 623 may generate the SDCmd metadata by encoding the command information. The encoding unit 623 may include at least one of an XML encoder and a binary encoder.

The encoding unit 623 may generate the property device command metadata by encoding the command information into XML metadata.

Also, the encoding unit 623 may generate the property device command metadata by encoding the command information into binary metadata.

In addition, the encoding unit 623 may generate first metadata by encoding the command information into XML metadata, and generate the SDCmd metadata by encoding the first metadata.

The SDCmd metadata may include a sensory device command base type which denotes basic command information for control of the sensory device 630. The sensory device command base type may be metadata regarding the command information commonly applied to all types of the sensory device 630.

Table 99 shows an XML representation syntax of the sensory device command base type.

[Table 99]

```
<!-- ################################################ -->
<!--    Device command base type                      -->
<!-- ################################################ -->
<complexType name="DeviceCommandBaseType" abstract="true">
    <sequence>
        <element name="TimeStamp" type="mpegvct:TimeStampType"/>
    </sequence>
    <attributeGroup ref="iidl:DeviceCmdBaseAttributes"/>
</complexType>
```

Table 100 shows a binary representation syntax of the sensory device command base type.

[Table 100]

| DeviceCommandBaseType{ | **Number of bits** | **Mnemonic** |
|---|---|---|
| TimeStamp | | TimeStampType |
| DeviceCmd BaseAttri butes | | DeviceCmdBaseAttributesType |
| } | | |
| TimeStampType{ | | |
| TimeStampSelect | 2 | bslbf |
| if(TimeStampSelect==00){ | | |
| AbsoluteTimeStamp | | AbsoluteTimeStampType |
| } else if (TimeStampSelect==01) { | | |
| ClockTickTimeStamp | | ClockTickTimeStampType |
| } else if (TimeStampSelect==10) { | | |
| ClockTickTimeDeltaStamp | | ClockTickTimeDeltaStampType |
| } | | |
| } | | |

Table 101 shows descriptor components semantics of the sensory device command base type.

[Table 101]

| **Names** | **Description** |
|---|---|
| | |
| TimeStamp | Provides the timing information for the device command to be executed. As defined in Part 6 of ISO/IEC 23005, there is a choice of selection among three timing schemes, which are absolute time, clock tick time, and delta of clock tick time |
| DeviceCommandBase | Provides the topmost type of the base type hierarchy which each individual device command can inherit. |
| TimeStampType | This field, which is only present in the binary representation, describes which time stamp scheme shall be used. 00" means that the absolute time stamp type shall be used, "01" means that the clock tick time stamp type shall be used, and 10" means that the clock tick time delta stamp type shall be used. |

(continued)

| Names | Description |
|---|---|
| AbsoluteTimeStamp | The absolute time stamp is defined in A. 2.3 of ISO/IEC 23005-6. |
| ClockTickTimeStamp | The clock tick time stamp is defined in A.2. 3 of ISO/IEC 23005-6. |
| ClockTickTimeDeltaStamp | The clock tick time delta stamp, which value is the time delta between the present and the past time, is defined in A.2.3 of ISO/IEC 23005-6. |
| DeviceCmdBaseAttributes | Describes a group of attributes for the commands |

The SDCmd metadata may include sensory device command base attributes that denote groups regarding common attributes of the command information.

Table 102 shows an XML representation syntax regarding the sensory device command base type according to example embodiments.

[Table 102]

```
<!-- ################################################ -->
<!--    Definition of Device Command Base Attributes        -->
<!-- ################################################ -->
<attributeGroup name="DeviceCmdBaseAttributes">
        <attribute name="id" type="ID" use="optional"/>

<attribute name="deviceIdRef" type="anyURI" use="optional"/>
<attribute name="activate" type="boolean" use="optional" default="true"/>
</attributeGroup>
```

Table 103 shows a binary representation syntax regarding the sensory device command base type according to example embodiments.

[Table 103]

| DeviceCmdBaseAttributesType{ | Number of bits | Mnemonic |
|---|---|---|
| idFlag | 1 | bslbf |
| deviceIdRefFlag | 1 | bslbf |
| activateFlag | 1 | bslbf |
| If(idFlag) { | | |
| id | See ISO 10646 | UTF-8 |
| } | | |
| if(deviceIdRefFlag) { | | |
| deviceIdRefLength | | vluimsbf5 |
| deviceIdRef | 8* deviceIdRefLength | bslbf |
| } | | |
| if(activateFlag) { | | |
| activate | 1 | bslbf |
| } | | |
| } | | |

Table 104 shows descriptor components semantics regarding the sensory device command base type according to example embodiments.

[Table 104]

| **Names** | **Description** |
|---|---|
| DeviceCmdBaseAttributesType | Provides the topmost type of the base type hierarchy which the attributes of each individual device command can inherit. |
| idFlag | This field, which is only present in the binary representation, signals the presence of the id attribute. A value of "1" means the attribute shall be used and "0" means the attribute shall not be used. |
| deviceIdRefFlag | This field, which is only present in the binary representation, signals the presence of the sensor ID reference attribute. A value of "1" means the attribute shall be used and "0" means the attribute shall not be used. |
| activateFlag | This field, which is only present in the binary representation, signals the presence of the activation attribute. A value of "1" means the attribute shall be used and "0" means the attribute shall not be used. |
| id | id to identify the sensed information with respect to a light sensor. |
| deviceIdRefLength | This field, which is only present in the binary representation, specifies the length of the following deviceIdRef attribute. |
| deviceIdRef | References a device that has generated the command included in this specific device command. |
| activate | Describes whether the device is activated. A value of "1" means the sensor is activated and "0" means the sensor is deactivated. |

Hereinafter, command information regarding each type of the sensory device will be described in detail.

Table 105 shows an XML representation syntax regarding the light type sensory device.

[Table 105]

```
<!-- ################################################ -->
<!--    Definition of DCV Light Type                  -->
<!-- ################################################ -->

<complexType name="LightType">
    <complexContent>
        <extension base="iidl:DeviceCommandBaseType">
            <attribute name="color" type="mpegvct:colorType" use="optional"/>
            <attribute name="intensity" type="integer" use="optional"/>
        </extension>
    </complexContent>
</complexType>
```

Table 106 shows a binary representation syntax regarding the light type sensory device.

[Table 106]

| LightType{ | Number of bits | Mnemonic |
|---|---|---|
| colorFlag | 1 | bslbf |
| intensityFlag | 1 | bslbf |
| DeviceCommandBase | | DeviceCommandBaseType |
| if(colorFlag) { | | |
| color | | colorType |
| } | | |
| if(intensityFlag) { | | |
| intensity | 7 | uimsbf |
| } | | |
| } | | |

Table 107 shows a binary representation syntax of a color CS.

[Table 107]

| **colorType** | **Term ID of color** |
|---|---|
| 000000000 | alice_blue |
| 000000001 | alizarin |
| 000000010 | amaranth |
| 000000011 | amaranth_pink |
| 000000100 | amber |
| 000000101 | amethyst |
| 000000110 | apricot |
| 000000111 | aqua |
| 000001000 | aquamarine |
| 000001001 | army_green |
| 000001010 | asparagus |
| 000001011 | atomic_tangerine |
| 000001100 | auburn |
| 000001101 | azure_colo_wheel |
| 000001110 | azure_web |
| 000001111 | baby_blue |
| 000010000 | beige |
| 000010001 | bistre |
| 000010010 | black |
| 000010011 | blue |
| 000010100 | blue_pigment |
| 000010101 | blue_ryb |
| 000010110 | blue_green |
| 000010111 | blue-green |

(continued)

| colorType | Term ID of color |
|---|---|
| 000011000 | blue-violet |
| 000011001 | bondi_blue |
| 000011010 | brass |
| 000011011 | bright_green |
| 000011100 | bright_pink |
| 000011101 | bright_turquoise |
| 000011110 | brilliant_rose |
| 000011111 | brink_pink |
| 000100000 | bronze |
| 000100001 | brown |
| 000100010 | buff |
| 000100011 | burgundy |
| 000100100 | burnt_orange |
| 000100101 | burnt_sienna |
| 000100110 | burnt_umber |
| 000100111 | camouflage_green |
| 000101000 | caput_mortuum |
| 000101001 | cardinal |
| 000101010 | carmine |
| 000101011 | carmine_pink |
| 000101100 | carnation_pink |
| 000101101 | Carolina_blue |
| 000101110 | carrot_orange |
| 00101111 | celadon |
| 000110000 | cerise |
| 00 0110001 | cerise_pink |
| 000110010 | cerulean |
| 000110011 | cerulean_blue |
| 000110100 | champagne |
| 000110101 | charcoal |
| 000110110 | chartreuse_traditional |
| 000110111 | chartreuse_web |
| 000111000 | cherry_blossom_pink |
| 000111001 | chestnut |
| 000111010 | chocolate |
| 000111011 | cinnabar |
| | |

(continued)

| colorType | Term ID of color |
|---|---|
| 000111100 | cinnamon |
| 000111101 | cobalt |
| 000111110 | Columbia_blue |
| 000111111 | copper |
| 001000000 | copper_rose |
| 001000001 | coral |
| 001000010 | coral_pink |
| 001000011 | coral_red |
| 001000100 | corn |
| 001000101 | cornflower_blue |
| 001000110 | cosmic_latte |
| 001000111 | cream |
| 001001000 | crimson |
| 001001001 | cyan |
| 001001010 | cyan_process |
| 001001011 | dark_blue |
| 001001100 | dark_brown |
| 001001101 | dark_cerulean |
| 001001110 | dark_chestnut |
| 001001111 | dark_coral |
| 001010000 | dark_goldenrod |
| 001010001 | dark_green |
| 001010010 | dark_khaki |
| 001010011 | dark_magenta |
| 001010100 | dark_pastel_green |
| 001010101 | dark_pink |
| 001010110 | dark_scarlet |
| 001010111 | dark_salmon |
| 001011000 | dark_slate_gray |
| 001011001 | dark_spring_green |
| 001011010 | dark_tan |
| 001011011 | dark_turquoise |
| 001011100 | dark_violet |
| 001011101 | deep_carmine_pink |
| 001011110 | deep_cerise |
| | |
| 001011111 | deep_chestnut |
| 001100000 | deep_fuchsia |

(continued)

| colorType | Term ID of color |
|---|---|
| 001100001 | deep_ilac |
| 001100010 | deep_magenta |
| 001100011 | deep_magenta |
| 001100100 | deep_peach |
| 001100101 | deep_pink |
| 001100110 | denim |
| 001100111 | dodger_blue |
| 001101000 | ecru |
| 001101001 | egyptian_blue |
| 001101010 | electric_blue |
| 001101011 | electric_green |
| 001101100 | elctric_indigo |
| 001101101 | electric_lime |
| 001101110 | electric_purple |
| 001101111 | emerald |
| 001110000 | eggplant |
| 001110001 | falu_red |
| 001110010 | fern_green |
| 001110011 | firebrick |
| 001110100 | flax |
| 001110101 | forest_green |
| 001110110 | french_rose |
| 001110111 | fuchsia |
| 001111000 | fuchsia_pink |
| 001111001 | gamboge |
| 001111010 | gold_metallic |
| 001111011 | gold_web_golden |
| 001111100 | golden_brown |
| 001111101 | golden_yellow |
| 001111110 | goldenrod |
| 001111111 | grey-asparagus |
| 010000000 | green_color_wheel_x11_green |
| 010000001 | green_html/ css_green |
| | |
| 010000010 | green_pigment |
| 010000011 | green_ryb |
| 010000100 | green_yellow |

(continued)

| colorType | Term ID of color |
|---|---|
| 010000101 | grey |
| 010000110 | han_purple |
| 010000111 | harlequin |
| 010001000 | heliotrope |
| 010001001 | Hollywood_cerise |
| 010001010 | hot_magenta |
| 010001011 | hot_pink |
| 010001100 | indigo_dye |
| 010001101 | international_klein_blue |
| 010001110 | international_orange |
| 010001111 | Islamic_green |
| 0100100000 | ivory |
| 010010001 | jade |
| 010010010 | kelly_green |
| 010010011 | khaki |
| 010010100 | khaki_x11_light_khaki |
| 010010101 | lavender_floral |
| 010010110 | lavender_web |
| 010010111 | lavender_blue |
| 010011000 | lavender_blush |
| 010011001 | lavender_grey |
| 010011010 | lavender_magenta |
| 010011011 | lavender_pink |
| 010011100 | lavender_purple |
| 010011101 | lavender_rose |
| 010011110 | lawn_green |
| 010011111 | lemon |
| 010100000 | lemon_chiffon |
| 010100001 | light_blue |
| 010100010 | light_pink |
| 010100011 | lilac |
| 010100100 | lime_color_wheel |
| | |
| 010100101 | lime_web_x11_green |
| 010100110 | lime_green |
| 010100111 | linen |
| 010101000 | magenta |
| 010101001 | magenta_dye |

(continued)

| colorType | Term ID of color |
|---|---|
| 010101010 | magenta_process |
| 010101011 | magic_mint |
| 010101100 | magnolia |
| 010101101 | malachite |
| 010101110 | maroon_html/css |
| 010101111 | marron_x11 |
| 010110000 | maya_blue |
| 010110001 | mauve |
| 010110010 | mauve_taupe |
| 010110011 | medium_blue |
| 010110100 | medium_carmine |
| 010110101 | medium_lavender_magenta |
| 010110110 | medum_purple |
| 010110111 | medium_spring_green |
| 010111000 | midnight_blue |
| 010111001 | midnight_green_eagle_green |
| 010111010 | mint_green |
| 010111011 | misty_rose |
| 010111100 | moss_green |
| 010111101 | mountbatten_pink |
| 010111110 | mustard |
| 010111111 | myrtle |
| 011000000 | navajo_white |
| 011000001 | navy_blue |
| 011000010 | ochre |
| 011000011 | office_green |
| 011000100 | old_gold |
| 011000101 | old_lace |
| 011000110 | old_lavender |
| 011000111 | old_rose |
| | |
| 011001000 | olive |
| 011001001 | olive_drab |
| 011001010 | olivine |
| 011001011 | orange_color_wheel |
| 011001100 | orange_ryb |
| 011001101 | orange_web |

(continued)

| colorType | Term ID of color |
|---|---|
| 011001110 | orange_peel |
| 011001111 | orange-red |
| 011010000 | orchid |
| 011010001 | pale_blue |
| 011010010 | pale_brown |
| 011010011 | pale_carmine |
| 011010100 | pale_chestnut |
| 011010101 | pale_cornflower_blue |
| 011010110 | pale_magenta |
| 011010111 | pale_pink |
| 011011000 | pale_red-violet |
| 011011001 | papaya_whip |
| 011011010 | pastel_green |
| 011011011 | pastel_pink |
| 0110111000 | peach |
| 011011101 | peach-orange |
| 011011110 | peach-yellow |
| 011011111 | pear |
| 011100000 | periwinkle |
| 011100001 | persian_blue |
| 011100010 | persian_green |
| 011100011 | persian_indigo |
| 011100100 | persian_orange |
| 011100101 | persian_red |
| 011100110 | persian_pink |
| 011100111 | persian_rose |
| 011101000 | persimmon |
| 011101001 | pine_green |
| 011101010 | pink |
| 100001011 | sapphire |
| 100001100 | scarlet |
| 100001101 | school_bus_yellow |
| | |
| 100001110 | sea_green |
| 100001111 | seashell |
| 100010000 | selective_yellow |
| 100010001 | sepia |
| 100010010 | shamrock_green |

(continued)

| colorType | Term ID of color |
|---|---|
| 100010011 | shocking_pink |
| 100010100 | silver |
| 100010101 | sky_blue |
| 100010110 | slate_grey |
| 100010111 | smalt_dark_powder_blue |
| 100011000 | spring_bud |
| 100011001 | spring_green |
| 100011010 | steel_blue |
| 100011011 | tan |
| 100011100 | tangerine |
| 100011101 | tangerine_yellow |
| 100011110 | taupe |
| 100011111 | tea_green |
| 100100000 | tea_rose_orange |
| 100100001 | tea_rose_rose |
| 100100010 | teal |
| 100100011 | tenne_tawny |
| 100100100 | terra_cotta |
| 100100101 | thistle |
| 100100110 | tomato |
| 100100111 | turquoise |
| 100101000 | tyrian_purple |
| 011101011 | pink-orange |
| 011101100 | platinum |
| 011101101 | plum_web |
| 011101110 | powder_blue_web |
| 011101111 | puce |
| 011110000 | prussian_blue |
| 011110001 | psychedelic_purple |
| 011110010 | pumpkin |
| 011110011 | purple_html/css |
| 011110100 | purple_x11 |
| 011110101 | purple-taupe |
| 011110110 | raw_umber |
| 011110111 | razzmatazz |
| 011111000 | red |
| 011111001 | red_pigment |

(continued)

| colorType | Term ID of color |
|---|---|
| 011111010 | red-ryb |
| 011111011 | red-violet |
| 011111100 | rich_carmine |
| 011111101 | robin_egg_blue |
| 011111110 | rose |
| 011111111 | rose_madder |
| 100000000 | rose_taupe |
| 100000001 | royal_blue |
| 100000010 | royal_purple |
| 100000011 | ruby |
| 100000100 | russet |
| 100000101 | rust |
| 100000110 | safety_orange_blaze_orange |
| 100000111 | saffron |
| 100001000 | salmon |
| 100001001 | sandy_brown |
| 100001010 | sangria |
| 100101001 | ultramarine |
| 100101010 | ultra_pink |
| 100101011 | united_nation_blue |
| 100101100 | vegas_gold |
| 100101101 | vermilion |
| 10010111 | violet |
| 100101111 | violet_web |
| 100110000 | violet_ryb |
| | |
| 100110001 | viridian |
| 100110010 | wheat |
| 100110011 | white |
| 100110100 | wisteria |
| 100110101 | yellow |
| 100110110 | yellow_process |
| 100110111 | yellow_ryb |
| 100111000 | yellow_green |
| 100111001- 111111111 | Reserved |

Table 108 shows descriptor components semantics regarding the light type sensory device.

[Table 108]

| Names | Description |
|---|---|
| LightType | Tool tor describing a command for a lighting device to follow. |
| colorFlag | This field, which is only present in the binary representation, signals the presence of color attribute. A value of "1" means the attribute shall be used and "0" means the attribute shall not be used. |
| intensityFlag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inherit. |
| color | Describes the list of colors which the lighting device can sense as a reference to a classification scheme term or as RGB value. A CS that may be used for this purpose is the ColorCS defined in A.2.3 of ISO/IEC 23005-6 and use the binary representation defined above. |
| intensity | Describes the command value of the light device with respect to the default unit if the unit is not defined. Otherwise, use the unit type defined in the s ens or capability. |

Table 109 shows an XML representation syntax regarding the flash type sensory device.

[Table 109]

```
<!-- ################################################ -->
<!--    Definition of DCV Flash Type                   -->
<!-- ################################################ -->
<complexType name="FlashType">
<complexContent>
        <extension base="dcv:LightType">
                <attribute name="frequency" type="positiveInteger" use="optional"/>
        </extension>
</complexContent>
</complexType>
```

Table 110 shows a binary representation syntax regarding the flash type sensory device.

[Table 110]

| FlashType{ | Number of bits | Mnemonic |
|---|---|---|
| frequencyFlag | 1 | bslbf |
| Light | | LightType |
| if(frequencyFlag) { | | |
| frequency | 8 | uimsbf |
| } | | |
| } | | |

Table 111 shows descriptor components semantics regarding the flash type sensory device.

[Table 111]

| Names | Description |
|---|---|
| FlashType | Tool for describing a flash device command. |
| frequencyFlag | This field, which is only present in the binary representation, signals the presence of color attribute. A value of "1" means the attribute shall be used and "0" means the attribute shall not be used. |
| Light | Describes a command for a lighting device. |
| frequency | Describes the number of flickering in percentage with respect to the maximum frequency that the specific flash device can generate. |

Table 112 shows an XML representation syntax regarding the heating type sensory device.

[Table 112]

```
<!-- ################################################ -->
<!--    Definition of DCV Heating Type                       -->
<!-- ################################################ -->
<complexType name="HeatingType">
        <complexContent>
                <extension base="iidl:DeviceCommandBaseType">
                        <attribute name="intensity" type="integer" use="optional"/>
                </extension>
        </complexContent>
</complexType>
```

Table 113 shows a binary representation syntax regarding the heating type sensory device.

[Table 113]

| HeatingType{ | Number of bits | Mnemonic |
|---|---|---|
| intensityFlag | 1 | bslbf |
| DeviceCommandBase | | DeviceCommandBaseType |
| if(intensityFlag) { | | |
| intensity | 7 | uimsbf |
| } | | |
| } | | |

Table 114 shows descriptor components semantics regarding the heating type sensory device.

[Table 114]

| Names | Description |
|---|---|
| HeatingType | Tool for describing a command for heating device. |
| intensityFlag | This field, which is only present in the binary representation, signals the presence of device command attribute. A value of "1" means the attribute shall be used and "0" moans the attribute shall not be used. |

(continued)

| Names | Description |
|---|---|
| DeviceCommandBase | Provides the topmost type of the base type hierarchy which each individual device command can inherit. |
| intensity | Describes the command value of the light device with |
| | |
| | respect to the default unit if the unit is not defined. Otherwise, use the unit type defined in the sensor capability. |

Table 115 shows an XML representation syntax regarding the cooling type sensory device.

[Table 115]

```
<!-- ################################################ -->
<!--    Definition of DCV Cooling Type                  -->
<!-- ################################################ -->
<complexType name="CoolingType">
        <complexContent>

            <extension base="iidl:DeviceCommandBaseType">
                <attribute name="intensity" type="integer" use="optional"/>
            </extension>
        </complexContent>
</complexType>
```

Table 116 shows a binary representation syntax regarding the cooling type sensory device.

[Table 116]

| CoolingType{ | Number of bits | Mnemonic |
|---|---|---|
| intensityFlag | 1 | bslbf |
| DeviceCommandBase | | DeviceCommandBaseType |
| if(intensityFlag) { | | |
| intensity | 7 | uimsbf |
| } | | |
| } | | |

Table 117 shows descriptor components semantics regarding the cooling type sensory device.

[Table 117]

| Names | Description |
|---|---|
| CoolingType | Tool for describing a command for cooling device. |
| íntensityFlag | This field, which is only present in the binary representation, signals the presence of device command attribute. A value of "1" means the attribute shall be used |
| | |

(continued)

| Names | Description |
|---|---|
| | and "0" means the attribute shall not be used. |
| DeviceCommandBase | Provides the topmost type of the base type hierarchy which each individual device command can inhent. |
| intensity | Describes the command value of the light device with respect to the default unit if the unit is not defined. Otherwise, use the unit type defined in the sensor capability. |

Table 118 shows an XML representation syntax regarding the wind type sensory device.

[Table 118]

```
<!-- ################################################ -->
<!--    Definition of DCV Wind Type                              -->
<!-- ################################################ -->
<complexType name="WindType">
        <complexContent>
                <extension base="iidl:DeviceCommandBaseType">
                        <attribute name="intensity" type="integer" use="optional"/>
                </extension>
        </complexContent>
</complexType>
```

Table 119 shows a binary representation syntax regarding the wind type sensory device.

[Table 119]

| WindType{ | **Number of bits** | **Mnemonic** |
|---|---|---|
| intensityflag | 1 | bslbf |
| DeviceCommandBase | | DeviceCommandBaseType |
| if(intensityFlag) { | | |
| intensity | 7 | uimsbf |
| } | | |
| } | | |

Table 120 shows descriptor components semantics regarding the wind type sensory device.

[Table 120]

| Names | Description |
|---|---|
| | |
| WindType | Tool for describing a wind device command. |
| intensityFlag | This field, which is only present in the binary representation, signals the presence of device command attribute. A value of "1" means the attribute shall be used and "0" means the attribute shall not be used. |

(continued)

| Names | Description |
|---|---|
| DeviceCommandBase | Provides the topmost type of the base type hierarchy which each individual device command can inherit. |
| intensity | Describes the command value of the light device witch respect to the default unit if the unit is not defined. Otherwise, use the unit type defined in the sensor capability. |

Table 121 shows an XML representation syntax regarding the vibration type sensory device.

[Table 121]

```
<!-- ################################################ -->
<!--    Definition of DCV Vibration Type                    -->
<!-- ################################################ -->
<complexType name="VibrationType">
        <complexContent>
                <extension base="iidl:DeviceCommandBaseType">
                        <attribute name="intensity" type="integer" use="optional"/>
                </extension>
        </complexContent>
</complexType>
```

Table 122 shows an XML representation syntax regarding the vibration type sensory device.

[Table 122]

| VibrationType{ | **Number of bits** | **Mnemonic** |
|---|---|---|
| intensityFlag | 1 | bslbf |
| DeviceCommandBase | | DeviceCommandBaseType |
| if(intensityFlag) { | | |
| intensity | 7 | uimsbf |
| } | | |
| } | | |

Table 123 shows descriptor components semantics regarding the vibration type sensory device.

[Table 123]

| Names | Description |
|---|---|
| VibrationType | Tool for describing a vibration device command. |
| intensityFlag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inhent. |
| intensity | Describes the command value of the light device with respect to the default unit if the unit is not defined. Otherwise, use the unit type defined in the sensor capability. |

Table 124 shows an XML representation syntax regarding the scent type sensory device.

[Table 124]

```
<!-- ################################################ -->
<!--    Definition of DCV Scent Type                  -->
<!-- ################################################ -->
<complexType name="ScentType">
        <complexContent>
                <extension base="iidl:DeviceCommandBaseType">
                        <attribute name="scent" type="mpeg7:termReferenceType" use="optional"/>
                        <attribute name="intensity" type="integer" use="optional"/>
                </extension>
        </complexContent>
</complexType>
```

Table 125 shows a binary representation syntax regarding the scent type sensory device.

[Table 125]

| ScentType{ | **Number of bits** | **Mnemonic** |
|---|---|---|
| scentFlag | 1 | bslbf |
| intensityFlag | 1 | bslbf |
| DeviceCommandBase | | DeviceCommandBaseType |
| if(scentFlag) { | | |
| scent | | ScentCSType |
| } | | |
| if(intensityFlag) { | | |
| intensity | 7 | uimsbf |
| } | | |
| } | | |

Table 126 shows a binary representation syntax regarding the scent type.

[Table 126]

| ScentCSType | **Term ID of Spraying** |
|---|---|
| 0000 | rose |
| 0001 | acacia |
| 0010 | chrysanthemum |
| 0011 | hlac |
| 0100 | mint |
| 0101 | jasmine |

(continued)

| ScentCSType | Term ID of Spraying |
|---|---|
| 0110 | pine-tree |
| 0111 | orange |
| 1000 | grape |
| 1001-1111 | Reserved |

Table 127 shows descriptor components semantics regarding the scent type sensory device.

[Table 127]

| Names | Description |
|---|---|
| ScentType | Tool for describing a scent device command. |
| scentFlag | This field, which is only present in the binary representation, signals the presence of device command attribute. A value of "1" means the attribute shall be used and "0" means the attribute shall not be used. |
| intensityFlag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inherit. |
| scent | Describes the scent to use. A CS that may be used for this purpose is the scentes defined in the Annex A.2.4 of ISO/IEC 23005-6. |
| intensity | Describes the command value of the light device with respect to the default unit if the unit is not defined. Otherwise, use the unit type defined in the sensor capability. |

Table 128 shows an XML representation syntax regarding the fog type sensory device.

[Table 128]

```
<!-- ################################################ -->
<!--   Definition of DCV Fog Type                     -->
<!-- ################################################ -->
<complexType name="FogType">
        <complexContent>
                <extension base="iidl:DeviceCommandBaseType">
                        <attribute name="intensity" type="integer" use="optional"/>
                </extension>
        </complexContent>
</complexType>
```

Table 129 shows a binary representation syntax regarding the fog type sensory device.

[Table 129]

| FogType{ | Number of bits | Mnemonic |
|---|---|---|
| intensityFlag | 1 | bslbf |

(continued)

| FogType{ | Number of bits | Mnemonic |
|---|---|---|
| DeviceCommandBase | | DeviceCommandBaseType |
| if(intensityFlag) { | | |
| intensity | 7 | uimsbf |
| } | | |
| } | | |

Table 130 shows descriptor components semantics regarding the fog type sensory device.

[Table 130]

| Names | Description |
|---|---|
| FogType | Tool for describing a fog device command. |
| intensityFlag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inherit. |
| intensity | Describes the command value of the light device with respect to the default unit if the unit is not |
| | |
| | defined. Otherwise, use the unit type defined in the sensor capability. |

Table 131 shows an XML representation syntax regarding the sprayer type sensory device.

[Table 131]

```
<!-- ################################################ -->
<!--   Definition of DCV Sprayer Type                  -->
<!-- ################################################ -->
<complexType name="SprayerType">
        <complexContent>
                <extension base="iidl:DeviceCommandBaseType">
                        <attribute                              name="sprayingType"
    type="mpeg7:termReferenceType"/>
                        <attribute name="intensity" type="integer" use="optional"/>
                </extension>
        </complexContent>
</complexType>
```

Table 132 shows an XML representation syntax regarding the fog type sensory device.

[Table 132]

| SprayerType{ | **Number of bits** | **Mnemonic** |
|---|---|---|
| sprayingFlag | 1 | bslbf |
| intensityFlag | 1 | bslbf |
| DeviceCommandBase | | DeviceCommandBaseType |
| if(sprayingFlag) { | | |
| spraying | | SprayingType |
| } | | |
| if(intensityFlag) { | | |
| intensity | 7 | uimsbf |
| } | | |
| } | | |

Table 133 shows a binary representation syntax regarding the fog type.

[Table 133]

| **SprayingType** | **Term ID of Spraying** |
|---|---|
| 00 | water |
| 01-11 | Reserved |

Table 134 shows descriptor components semantics regarding the fog type sensory device.

[Table 134]

| **Names** | **Description** |
|---|---|
| SprayerType | Tool for describing a liquid sprayins device command. |
| sprayingFlag | This field, which is only present in the binary representation, signals the presence of device command attribute. A value of "1" means the attribute shall be used and "0" means the attribute shall not be used. |
| intensityFlag | This field, which is only present in the binary representation, signals the presence of device command attribute. A value of "1" means the attribute shall be used and "0" means the attribute shall not be used. |
| DeviceCommandBase | Provides the topmost type or tne base type hierarchy which eah individual device command can inherit. |
| spraying | Describes the type of tne sprayed material as a reference to a classification scheme term. A CS that may be used for this purpose is the SprayingTypeCS defined in Annex A.2.7 of ISO/IEC 23005-6. |
| | |
| intensity | Describes the command value of the light device with respect to the default unit if the unit is not defined. Otherwise, use the unit type defined in the sensor capability. |

Table 135 shows an XML representation syntax regarding the color correction type sensory device.

[Table 135]

```
<!-- ################################################ -->
```

```
<!--    Definition of DCV Color Correction Type                -->
<!-- ################################################ -->
<complexType name="ColorCorrectionType">
    <complexContent>
        <extension base="iidl:DeviceCommandBaseType">
            <sequence minOccurs="0" maxOccurs="unbounded">
                <element name="SpatialLocator" type="mpeg7:RegionLocatorType"/>
            </sequence>
        </extension>
    </complexContent>
</complexType>
```

Table 136 shows a binary representation syntax regarding the color correction type sensory device.

[Table 136]

| ColorCorrectionType{ | Number of bits | Mnemonic |
|---|---|---|
| intensityFlag | 1 | bslbf |
| DeviceCommandBase | | DeviceCommandBaseType |
| LoopSpatialLocator | | vluimsbf5 |
| for(k=0;k< LoopSpatialLocator; k++){ | | |
| SpatialLocator[k] | | mpeg7:RegionLocatorType |
| } | | |
| if(intensityFlag) { | | |
| intensity | 7 | uimsbf |
| } | | |
| } | | |

Table 137 shows descriptor components semantics regarding the color correction type sensory device.

[Table 137]

| **Names** | **Description** |
|---|---|
| ColorCorrectionType | Tool for commanding a display device to perform color correction. |
| intensityFlag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inherit. |
| LoopSpatiallocator | This field, which is only present in the binary representation, specifies the number of spatialLocator |

(continued)

| Names | Description |
|---|---|
| Spatialocator | Describes tne spatial localization of the still region using SpatiallocatorType (optional), which indicates the regions in a video segment where the color correction effect is applied. The spatiallocatorType is defined in ISO/IEC 15938-5. |
| intensity | Describes the command value of the light device with respect to the default unit if the unit is not defined. Otherwise, use the unit type defined in the sensor capability. |

Table 138 shows an XML representation syntax regarding the tactile correction type sensory device.

[Table 138]

```
<!-- ################################################ -->
<!--    Definition of DCV Tactile Type                -->
<!-- ################################################ -->
<complexType name="TactileType">
    <complexContent>
        <extension base="iidl:DeviceCommandBaseType">
            <sequence>
                <element                 name="array_intensity"
type="mpeg7:FloatMatrixType"/>
            </sequence>
        </extension>
    </complexContent>
</complexType>
```

Table 139 shows a binary representation syntax regarding the tactile correction type sensory device.

[Table 139]

| TactileType{ | Number of bits | Mnemonic |
|---|---|---|
| DeviceCommandBase | | DeviceCommandBaseType |
| dimX | 16 | uimsbf |
| dimY | 16 | uimsbf |
| array_intensity | dimX*dimY*32 | fsbf |
| } | | |

Table 140 shows descriptor components semantics regarding the tactile correction type sensory device.

[Table 140]

| Names | Description |
|---|---|
| TactileType | Tool for describing array-type tactile device command. A tactile device is composed of an array of actuators. |
| DeviceCommandBase | Provides the topmost type of the base type hierarchy which each individual device command can inherit. |

(continued)

| Names | Description |
|---|---|
| dimX | This field, which is only present in the binary representation, specifies the x-direction size of ArrayIntensity. |
| dimY | This field, which is only present in the binary representation, specifies the y-direction size of ArrayIntensity. |
| array_intensity | Describes the intensities of array actuators in percentage with respect to the maximum intensity described in the device capability. If the intensity is not specified, this command shall be interpreted as turning on at the maximum intensity. |

Table 141 shows an XML representation syntax regarding the kinesthetic correction type sensory device.

[Table 141]

```
<!-- ################################################ -->
<!--    Definition of DCV Kinesthetic Type                    -->
<!-- ################################################ -->
<complexType name="KinestheticType">
        <complexContent>
                <extension base="iidl:DeviceCommandBaseType">
                        <sequence>
                                <element name="Position"
        type="mpegvct:Float3DVectorType" minOccurs="0"/>
                                <element name="Orientation"
        type="mpegvct:Float3DVectorType" minOccurs="0"/>
                                <element name="Force"
        type="mpegvct:Float3DVectorType" minOccurs="0"/>
                                <element name="Torque"
        type="mpegvct:Float3DVectorType" minOccurs="0"/>
                        </sequence>
                </extension>
        </complexContent>
</complexType>
```

Table 142 shows a binary representation syntax regarding the kinesthetic correction type sensory device.

[Table 142]

| KinesthestheticType{ | Number of bits | Mnemonic |
|---|---|---|
| PositionFlag | 1 | bslbf |
| OrientationFlag | 1 | bslbf |
| ForceFlag | 1 | bslbf |
| TorqueFlag | 1 | bslbf |

(continued)

| KinesthestheticType{ | **Number of bits** | **Mnemonic** |
|---|---|---|
| DeviceCommandBase | | DeviceCommandBaseType |
| if(PositionFlag){ | | |
| Position | | Float3DVectorType |
| } | | |
| if(OrientationFlag){ | | |
| Orientation | | Float3DVectorType |
| } | | |
| if(ForceFlag){ | | |
| Force | | Float3DVectorType |
| } | | |
| if(TorqueFlag){ | | |
| Torque | | Float3DVectorType |
| } | | |
| } | | |
| Float3DVectorType { | | |
| X | 32 | fsbf |
| Y | 32 | fsbf |
| z | 32 | fsbf |
| } | | |

Table 143 shows descriptor components semantics regarding the kinesthetic correction type sensory device.

[Table 143]

| **Names** | **Description** |
|---|---|
| KinesthestheticType | Describes a command for a kinesthetic device. |
| PositionFlag | This field, which is only present in the binary representation, signals the presence of device command attribute. A value of "1" means the attribute shall be used and "0" means the attribute shall not be used. |
| OrientationFlag | This field, which is only present in the binary representation, signals the presence of device command attribute. A value of "1" means the attribute shall be used and "0" means the attribute shall not be used. |
| Force Flag | This field, which is only present in the binary representation, signals the presence of device command attribute. A value of "1" means the attribute shall be used and "0" means the attribute shall not be used. |
| TorqueFlag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inherit. |
| Position | Describes the position that a kinesthetic device shall take in millimeters along each axis of X, Y, and Z, with respect to the idle position of the device. |

(continued)

| Names | Description |
|---|---|
| Orientation | Describes the orientation that a kinesthetic device shall take in degrees along each axis of X, Y, and Z, with respect to the idle orientation of the device. |
| | |
| Force | Describes the force of Kinesthetic effect in percentage with respect to the maximum force described in the device capability. If the Force is not specified, this command shall be interpreted as turning on at the maximum force. This element takes FloatsSOVectorType type defined in Part 6 of ISO/IEC 23005. |
| Torque | Describes the torque of kinesthetic effect in percentage |
| | |
| | with respect to the maximum torque described in the device capability. If the Torque is not specified, this command shall be interpreted as turning on at the maximum torque. This element takes Float3DVectorType type defined in Part 6 of ISO/IEC 23005. |
| Float3DVectorType | Tool for describing a 3D vector |
| X | Describes the sensed value in x-axis. |
| Y | Describes the sensed value in y-axis. |
| Z | Describes the sensed value in z-axis |

Table 144 shows an XML representation syntax regarding the rigid body motion correction type sensory device.

[Table 144]

```
<!-- ################################################ -->
<!--    Definition of Rigid Body Motion Type                    -->
<!-- ################################################ -->
<complexType name="RigidBodyMotionType">
    <complexContent>
        <extension base="iidl:DeviceCommandBaseType">
            <sequence>
                <element name="MoveToward" type="dcv:MoveTowardType" minOccurs="0"/>
                <element name="Incline" type="dcv:InclineType" minOccurs="0"/>
            </sequence>
            <attribute name="duration" type="float"/>
        </extension>
    </complexContent>
</complexType>

<complexType name="MoveTowardType">
    <attribute name="directionX" type="float"/>
    <attribute name="directionY" type="float"/>
    <attribute name="directionZ" type="float"/>
    <attribute name="speedX" type="float"/>
    <attribute name="speedY" type="float"/>
    <attribute name="speedZ" type="float"/>
    <attribute name="accelerationX" type="float"/>
    <attribute name="accelerationY" type="float"/>
    <attribute name="accelerationZ" type="float"/>
</complexType>

<complexType name="InclineType">
    <attribute name="PitchAngle" type="mpegvct:InclineAngleType" use="optional"/>
    <attribute name="YawAngle" type="mpegvct:InclineAngleType" use="optional"/>
    <attribute name="RollAngle" type="mpegvct:InclineAngleType" use="optional"/>
```

```
        <attribute name="PitchSpeed" type="float" use="optional"/>
        <attribute name="YawSpeed" type="float" use="optional"/>
        <attribute name="RollSpeed" type="float" use="optional"/>
        <attribute name="PitchAcceleration" type="float" use="optional"/>
        <attribute name="YawAcceleration" type="float" use="optional"/>
        <attribute name="RollAcceleration" type="float" use="optional"/>
    </complexType>
```

Table 145 shows a binary representation syntax regarding the rigid body motion correction type sensory device.

[Table 145]

| RigidBodyMotionType{ | **Number of bits** | **Mnemonic** |
|---|---|---|
| MoveTowardFlag | 1 | bslbf |
| InclineFlag | 1 | bslbf |
| durationFlag | 1 | bslbf |
| DeviceCommandBase | | DeviceCommandBaseType |
| if( MoveTowardFlag ) { | | |
| MoveToward | | MoveTowardTypes |
| } | | |
| if( InclineFlag ) { | | |
| Incline | | InclineType |
| } | | |
| if(durationFlag) { | | |
| duration | 32 | fsbf |
| } | | |
| } | | |
| MoveTowardType{ | | |
| directionXFlag | 1 | bslbf |
| directionYFlag | 1 | bslbf |
| directionZFlag | 1 | bslbf |
| speedXFlag | 1 | bslbf |
| speedYFlag | 1 | bslbf |
| speedZFlag | 1 | bslbf |
| accelerationXFlag | 1 | bslbf |
| accelerationYFlag | 1 | bslbf |
| accelerationZFlag | 1 | bslbf |
| if( directionXFlag){ | | |
| directionX | 32 | fsbf |
| } | | |
| if( directionYFlag){ | | |

(continued)

| RigidBodyMotionType{ | **Number of bits** | **Mnemonic** |
|---|---|---|
| directionY | 32 | fsbf |
| } | | |
| if( directionZFlag){ | | |
| directionZ | 32 | fsbf |
| } | | |
| if(speedXFlag){ | | |
| speedX | 32 | fsbf |
| } | | |
| if(speedYFlag){ | | |
| speedY | 32 | fsbf |
| } | | |
| if(speedZFlag){ | | |
| speedZ | 32 | fsbf |
| } | | |
| if(accelerationXFlag){ | | |
| accelerationX | 32 | fsbf |
| } | | |
| if(accelerationYFlag){ | | |
| accelerationY | 32 | fsbf |
| } | | |
| if(accelerationZFlag){ | | |
| accelerationZ | 32 | fsbf |
| } | | |
| } | | |
| InclineType{ | | |
| PitchAngleFlag | 1 | bslbf |
| YawAngleFlag | 1 | bslbf |
| RollAngleFlag | 1 | bslbf |
| PitchSpeedFlag | 1 | bslbf |
| YawSpeedFlag | 1 | bslbf |
| RollSpeedFlag | 1 | bslbf |
| PitchAccelerationFlag | 1 | bslbf |
| YawAccelerationFlag | 1 | bslbf |
| RollAccelerationFlag | 1 | bslbf |
| if(PitchAngleFlag){ | | |
| PitchAngle | | InclineAngleType |
| } | | |
| if(YawAngleFlag){ | | |

(continued)

| RigidBodyMotionType{ | Number of bits | Mnemonic |
|---|---|---|
| YawAngle | | InclineAngleType |
| } | | |
| if(RollAngleFlag) { | | |
| RollAngle | | InclineAngleType |
| } | | |
| if(PitchSpeedFlag){ | | |
| PitchSpeed | 32 | fsbf |
| } | | |
| if(YawSpeedFlag){ | | |
| YawSpeed | 32 | fsbf |
| } | | |
| if(RollSpeedFlag){ | | |
| RollSpeed | 32 | fsbf |
| } | | |
| if(PitchAccelerationFlag){ | | |
| PitchAcceleration | 32 | fsbf |
| } | | |
| if(YawAccelerationFlag){ | | |
| YawAcceleration | 32 | fsbf |
| } | | |
| if(RollAccelerationFlag){ | | |
| RollAcceleration | 32 | fsbf |
| } | | |
| } | | |

Table 146 shows a binary representation syntax of command information regarding the rigid body motion correction type sensory device according to other example embodiments.

[Table 146]

| RigidBodyMotionType { | Number of bits | Mnemonic |
|---|---|---|
| FirstFlag | 1 | bslbf |
| MoveTowardFlag | 1 | bslbf |
| InclineFlag | 1 | bslbf |
| DeviceCommandBase | | DeviceCommandBaseType |
| if( FirstFlag ){ | 1 | bslbf |
| if( MoveTowardFlag ){ | | |
| MoveToward | | MoveTowardType |
| } | | |
| if( InclineFlag ){ | | |

(continued)

| RigidBodyMotionType { | Number of bits | Mnemonic |
|---|---|---|
| Incline | | InclineType |
| } | | |
| } else { | | |
| if( MoveTowardFlag ){ | | |
| MoveTowardMask | 9 | bslbf |
| NumOfModify | 3 | uimsbf |
| for( k=0;k<NumOfModify;k++) { | | |
| MoveToward | | MoveTowardType |
| } | | |
| } | | |
| if( InclineFlag ){ | | |
| InclineMask | 9 | bslbf |
| NumOfModify | 3 | uimsbf |
| for( k=0;k<NumOfModify;k++) { | | |
| Incline | | InclineType |
| } | | |
| } | | |
| } | | |
| } | | |

Table 147 shows descriptor components semantics of command information regarding the rigid body motion correction type sensory device according to example embodiments.

[Table 147]

| **Names** | **Description** |
|---|---|
| RigidBodyMotionType | Tool for describing a rigid body motion device command. |
| | |
| MoveTowardFlag | This field, which is only present in the binary representation signals the presence of device command attribute. A value of "1" means the attribute shall be used and "0" means the attribute shall not be used. |
| InclineFlag | This field, which is only present in the binary representation, signals the presence of device command attribute. A value of "1" mean the attribute shall be used and "0" means the attribute shall not be used. |
| durationflag | This field, which is only present in the binary representation, signals the presence of device command attribute. A value of "1" means the attribute shall be used and "0" means the attribute shall not be used. |
| DeviceCommandBase | Provides the topmost type of the base type hierarchy which each individual device command can inherit. |
| MoveToward | Describes the destination axis values of move toward effect The type is defined by dcv:MoveTowardType. |
| Incline | Describes the rotation angle of incline effect The type is defined by dcv:InclineType. |

(continued)

| Names | Description |
|---|---|
| Duration | Describes time period during which the rigid body object should continuously move. The object which reaches the destination described by the description of RigidBodyMotionType should stay at the destination until it receives another command with activate= "false". |
| MoveTowardType | Tool for describing MoveToward commands for each axis |
| directionXFlag | This field, which is only present in the binary representation, signals the presence of device command attribute. A value of "1" means the attribute shall be used and "0" means the |
| | |
| | attribute shall not be used. |
| directionYFlag | This field, which is only present in the binary representation, signals the presence of device command attribute. A value of "1" means the attribute shall be used and "0" means the attribute shall not be used. |
| directionZFlag | This field, which is only present in the binary representation, signals the presence of device command attribute. A value of "1" means the attribute shall be used and "0" means the attribute shall not be used. |
| speedXFlag | This field, which is only present in the binary representation, signals the presence of device command attribute. A value of "1" means the attribute shall be used and "0" means the attribute shall not be used. |
| speedYFlag | This field, which is only present in the binary representation, signals the presence of device command attribute. A value of " 1" means the attribute shall be used and "0" means the attribute shall not be used. |
| speedZFlag | This field, which is only present in the binary representation, signals the presence of device command attribute. A value of "1" means the attribute shall be used and "0" means the attribute shall not be used. |
| accelerationXFlag | This field, which is only present in the binary representation, signals the presence of device command attribute. A value of " 1" means the attribute shall be used and "0" means the attribute shall not be used. |
| accelerationYFlag | This field, which is only present in the binary representation, signals the presence of device command attribute A value of "1" means the attribute shall be used and "0" means the attribute shall not be used. |
| | |
| accelerationZFlag | This field, which is only present in the binary representation, signals the presence of device command attribute. A value of "1" means the attribute shall be used and "0" means the attribute shall not be used. |
| directionX | Describes the position command on x-axis in terms of centimeter with respect to the current position. |
| directionY | Describes the position command on y-axis in terms of centimeter with respect to the current position. |
| directionZ | Describes the position command on z-axis in terms of centimeter with respect to the current position. |
| speedX | Describes the desired speed ot the rigid body object on the x-axis in terms of percentage with respect to the maximum speed of the specific device which also be described in the device capability as defined in Part 2 of ISO/IEC 23005. |
| SpeedY | Describes the desired speed of the rigid body object on the y-axis in terms of percentage with respect to the maximum speed of the specific device which also be described in the device capability as defined in Part 2 of ISO/EC 23005. |

(continued)

| Names | Description |
|---|---|
| speedZ | Describes the desired speed of the rigid body object on the z-axis in terms of percentage with respect to the maximum speed of the specific device which also be described in the device capability as defined in Part 2 of ISO/IEC 23005. |
| | Describes the desired acceleration of the rigid body object on the x-axis in terms of percentage with respect to the maximum acceleration of the specific device which may |
| | |
| | be described in the device capability as defined in Part 2 of ISO/IEC 23005. |
| | |
| accelerationY | Describes tne desired acceleration or tne rigid body object on the y-axis in terms of percentage with respect to the maximum acceleration of the specific device which may be described in the device capability as defined in Part 2 of ISO/IEC 23005. |
| accelerationZ | Describes the desired acceleration of the rigid body object on the 2-axis in terms of percentage with respect to the maximum acceleration of the specific device which may be described in the device capability as defined in Part 2 of ISO/IEC 23005. |
| Incline Type | Tool for describing Incline commands for each axis. |
| PitchAngleFlag | This field, which is only present in the binary representation, signals the presence of device command attribute. A value of "1" means the attribute shall be used and "0" means the attribute shall not be used. |
| YawAngleFlag | This field, which is only present in the binary representation, signals the presence of device command attribute. A value of "1" means the attribute shall be used and "0" means the attribute shall not be used. |
| RollAngleFlag | This field, which is only present in the binary representation, signals the presence of device command attribute. A value of "1" means the attribute shall be used and "0" means the attribute shall not be used. |
| PitchSpeedFlag | This field, which is only present in the binary representation, signals the presence of device command attribute. A value of "1" means the attribute shall be used and "0" means the attribute shall not be used. |
| | |
| YawSpeedFlag | This field, which is only present in the binary representation, signals the presence of device command attribute. A value of "1" means the attribute shall be used and "0" means the attribute shall not be used. |
| RollSpeedFlag | This field, which is only present in the binary representation, signals the presence of device command attribute. A value of " 1 " means the attribute shall be used and "0" means the attribute shall not be used. |
| PitchAccelerationFlag | This field, which is only present in the binary representation, signals the presence of device command attribute. A value of "1" means the attribute shall be used and "0" means the attribute shall not be used. |
| YawAccelerationFlag | This field, which is only present in tne binary representation, signals the presence of device command attribute. A value of "1" means the attribute shall be used and "0" means the attribute shall not be used. |
| RollAccelerationFlag | This field, which is only present in the binary representation, signals the presence of device command attribute. A value of "1" means the attribute shall be used and "0" means the attribute shall not be used. |
| PitchAngle | Describes the angle to rotate in y-axis, $\Theta$(pitch) in degrees between -180 and 180. |
| YawAngle | Describes the angle to rotate in 2-axis, $\Psi$(yaw) in degrees between -180 and 180. |

(continued)

| Names | Description |
|---|---|
| RollAngle | Describes the angle to rotate in x-axis, (roll), in degrees between -180 and 180. |
| PitchSpeed | Describes the desired speed (command) of rotation for pitch in terms of percentage with respect to the maximum angular speed of the specific device which may be described in the device capability as defined in Part 2 of |
| | |
| | ISO/IEC 23005. |
| YawSpeed | Describes the desired speed (command) of rotation for yaw in terms of percentage with respect to the maximum angular speed of the specific device which may be described in the device capability as defined in Part 2 of ISO/IEC 23005. |
| RollSpeed | Describes the desired speed (command) of rotation for roll in terms of percentage with respect to the maximum angular speed of the specific device which may be described in the device capability as defined in Part 2 of ISO/IEC 23005. |
| PitchAcceleration | Describes the desired acceleration (command) of rotation for pitch in terms of percentage with respect to the maximum angular acceleration of the specific device which may be described in the device capability as defined in Part 2 of ISO/IEC 23005. |
| YawAcceleration | Describes the desired acceleration (command) of rotation for yaw in terms of percentage with respect to the maximum angular acceleration of the specific device which may be described in the device capability as defined Part 2 of ISO/IEC 23005. |
| RollAcceleration | Describes the desired acceleration (command) of rotation for roll in terms of percentage with respect to the maximum angular acceleration of the specific device which may be described in the device capability as defined in Part 2 of ISO/IEC 23005. |
| FirstFlag | This field, which is only present in the binary representation, signals the presence of device command attribute. A value of "1" means the attribute shall be used and "0" means the attribute shall not be used. |
| | |
| MoveTowardMask | This field, which is only present in the binary syntax, specifies a bit-field that indicates whether a MoveToward is assigned to the corresponding partition. |
| NumOfModify | This field, which is only present in the binary representation, specifies the number of modified elements contained in the description. |
| InclineMask | This field, which is only present in the binary syntax, specifies a bit-field that indicates whether an Incline is assigned to the corresponding partition. |

The color correction type may include an initialize color correction parameter type.

The initialize color correction parameter type may include a tone reproduction curves type, a conversion LUT type, an illuminant type, and an input device color gamut type.

Table 148 shows an XML representation syntax regarding the initialize color correction parameter type.

[Table 148]

```
<!-- ################################################################# -->
<!--   Definition of SDCmd Initialize Color Correction Parameter Type -->
<!-- ################################################################# -->
<complexType name="InitializeColorCorrectionParameterType">
        <complexContent>
```

```
<extension base="iidl:DeviceCommandBaseType">
    <sequence>
        <element name="ToneReproductionCurves" type="mpegvct:ToneReproductionCurvesType" minOccurs="0"/>
        <element name="ConversionLUT" type="mpegvct:ConversionLUTType"/>
        <element name="ColorTemperature" type="mpegvct:IlluminantType" minOccurs="0"/>
        <element name="InputDeviceColorGamut" type="mpegvct:InputDeviceColorGamutType" minOccurs="0"/>
        <element name="IlluminanceOfSurround" type="mpeg7:unsigned12" minOccurs="0"/>
    </sequence>
</extension>
</complexContent>
</complexType>
```

Table 149 shows a binary representation syntax regarding the initialize color correction parameter type.

[Table 149]

| InitializeColorCorrectinParameterType{ | **Number of bits** | **Mnemonic** |
|---|---|---|
| ToneReproductionCurves Flag | 1 | bslbf |
| ConversionLUTFlag | 1 | bslbf |
| ColorTemperatureFlag | 1 | bslbf |
| InputDeviceColorGamutFlag | 1 | bslbf |
| IlluminanceOfSurroundFlag | 1 | bslbf |
| DeviceCommandBase | | DeviceCommandBaseType |
| if(ToneReproductionCurvesFlag) { | | |
| ToneReproductionCurves | | ToneReproductionCurvesType |
| } | | |
| if(ConversionLUTFlag) { | | |
| ConversionLUT | | ConversionLUTType |
| } | | |
| if(ColorTemperatureFlag) { | | |
| ColorTemperature | | IlluminantType |
| } | | |
| if(InputDeviceColorGamutFlag) { | | |
| InputDeviceColorGamut | | InputDeviceColorGamutType |
| } | | |
| if(IlluminanceOfSurroundFlag) { | | |

(continued)

| InitializeColorCorrectinParameterType{ | Number of bits | Mnemonic |
|---|---|---|
| IlluminanceOfSurround | 12 | uimsbf |
| } | | |
| } | | |

Table 150 shows a binary representation syntax of the tone reproduction curves type according to example embodiments.

[Table 150]

| ToneReproductionCurvesType { | Number of bits | Mnemonic |
|---|---|---|
| NumOfRecords | 8 | uimsbf |
| for(i=0;i< NumOfRecords;i++) { | | |
| DAC_Value | 8 | mpeg7: unsigned8 |
| RGB_Value | 32*3 | mpeg7:doubleVector |
| } | | |
| } | | |

Table 151 shows a binary representation syntax of the conversion LUT type according to example embodiments.

[Table 151]

| ConversionLUTType { | Number of bits | Mnemonic |
|---|---|---|
| RGB2XYZ_LUT | 32*3*3 | mpeg7:DoubleMatrixType |
| RGBScalar_Max | 32*3 | mpeg7:doubleVector |
| Offset_Value | 32*3 | mpeg7:doubleVector |
| Gain_Offset_Gamma | 32*3*3 | mpeg7:DoubleMatrixType |
| InverseLUT | 32*3*3 | mpeg7: DoubleMatrixType |
| } | | |

Table 152 shows a binary representation syntax of the illuminant type according to example embodiments.

[Table 152]

| IlluminantType { | Number of bits | Mnemonic |
|---|---|---|
| ElementType | 1 | bslbf |
| if(ElementType==00) { | | |
| XY_Value | 32*2 | dia:ChromaticityType |
| Y_Value | 7 | uimsbf |
| }else if(ElementType==01) { | | |
| Correlated_CT | 8 | uimsbf |
| } | | |
| } | | |

Table 153 shows a binary representation syntax of the input device color gamut type according to example embodiments.

[Table 153]

| InputDeviceColorGamutType { | Number of bits | Mnemonic |
|---|---|---|
| typeLength | | vluimsbf5 |
| IDCG_Type | 8*typeLength | bslbf |
| IDCG_Value | 32*3*2 | mpeg7:DoubleMatrixType |
| } | | |

Table 154 shows descriptor components semantics of the initialize color correction parameter type.

[Table 154]

| Names | Description |
|---|---|
| InitializeColorCorrectinParameterType | Tool for describing an initialize color correction parameter command. |
| ToneReproductionCurvesFlag | This field, which is only present in the binary representation, signals the presence of device command attribute. A value of "1" means the attribute shall be used and "0" means the attribute shall not be used. |
| ConversionLUTFlag | This field, which is only present in the binary representation, signals the presence of device command attribute. A value of "1" means the attribute shall be used and "0" means the attribute shall not be used. |
| ColorTemperatureFlag | This field, which is only present in the binary representation, signals the presence of device command attribute. A value of "1" means the attribute shall be used and "0" means the attribute shall not be used. |
| InputDeviceColorGamutFlag | This field, which is only present in the binary representation, signals the presence of device command attribute. A value of "1" means the attribute shall be used and "0" means the attribute shall not be used. |
| IlluminanceOfSurroundFlag | This field, which is only present in the binary representation, signals the presence of device command attribute. A value of "1" means |
| | |
| | the attribute shall be used and "0" means the attribute shall not be used. |
| | |
| DeviceCommandBase | Provides the topmost type of the base type hierarchy which each individual device command can inherit. |
| ToneReproductionCurves | This curve shows the characteristics (e.g., gamma curves for R, G and B channels) of the input display device. |
| ConversionLUT | A look-up table (matrix) converting an image between an image color space (e.g. RGB) and a standard connection space (e.g. CIE XYZ). |
| ColorTemperature | An element describing a white point setting (e.g., D65, D93) of the input display device. |
| InputDeviceColorGamut | An element describing an input display device color gamut, which is represented by chromaticity values of R, G, and B channels at maximum DAC values. |
| IllummanceOfSurround | An element describing an illummance level of viewing environment. The illuminance is represented by lux. |

Table 155 shows descriptor components semantics of the tone reproduction curves type.

[Table 155]

| Names | Description |
|---|---|
| NumOfRecords | This field, which is only present in the binary representation, specifies the number of record (DAC and RGB value) instances accommodated in the ToneReproductionCurves. |
| DAC_Value | An element describing discrete DAC values of input device. |
| RGB_Value | An element describing normalized gamma curve values with respect to DAC values. The order of describing the RGB_Value is R, G, B. |

Table 156 shows descriptor components semantics of the conversion LUT type.

[Table 156]

| Names | Description |
|---|---|
| RGB2XYZ_LUT | This look-up table (matrix) converts an image from RGB to CIE XYZ. The size of the conversion matrix is 3x3 such as |
| | |
| | $$\begin{bmatrix} R_x & G_x & B_x \\ R_y & G_y & B_y \\ R_z & G_z & B_z \end{bmatrix}.$$ The way of describingthe values in thebinary representation is in the order of [$R_x$, $G_x$, $B_x$; $R_y$, $G_y$, $B_y$; $R_z$, $G_z$, $B_z$]. |
| RGBScalar_Max | An element describing maximum RGB scalar values for GOG transformation. The order of describing the RGBScalar_Max is $R_{max}$, $G_{max}$, $B_{max}$. |
| Offset_Value | An element describing offset values of input display device when the DAC is 0. The value is described in CIE XYZ form. The order of describing the Offset_Value is X, Y, Z. |
| Gain_Offset_Gamma | An element describing the gain, offset, gamma of RGB channels for GOG transformation. The size of the Gain_Offset_Gamma matrix is 3x3 such as $$\begin{bmatrix} Gain_r & Gain_g & Gain_b \\ Offset_r & Offset_g & Offset_b \\ Gamma_r & Gamma_g & Gamma_b \end{bmatrix}.$$ The way of describing thevalues in the binary representation is in the order of [Gain, Gain, Gain; Offset, Offset, Offset ; Gammar, Gamma Gamma]. |
| | |
| InverseLUT | This look-up table (matrix) converts an image form CIE XYZ to RGB. The size of the conversion matrix is 3x3 such as $$\begin{bmatrix} R_x' & G_x' & B_x' \\ R_y' & G_y' & B_y' \\ R_z' & G_z' & B_z' \end{bmatrix}.$$ The way of describingthe values in thebinary representation is in the order of $[R_x', G_x', B_x'; R_y',$ $G_y', B_y'; R_z', G_z', B_z'].$ |

Table 157 shows descriptor components semantics of the illuminant type.

[Table 157]

<table>
<tr><th>Names</th><th>Description</th></tr>
<tr><td>ElementType</td><td>This field, which is only present in the binary representation, describes which Illuminant scheme shall be used.<br><br>In the binary description, the following mapping table is used,
<table>
<tr><td>Illuminant</td><td>IlluminantType</td></tr>
<tr><td>00</td><td>xy and Y value</td></tr>
<tr><td>01</td><td>Correlated_CT</td></tr>
</table></td></tr>
<tr><td>XY_Value</td><td>An element describing the chromaticity of the light source. The ChromaticityType is specified in ISO/IEC 21000-7.</td></tr>
<tr><td>Y_Value</td><td>An element describing the luminance of the light source between 0 and 100.</td></tr>
<tr><td>Correlated_CT</td><td>Indicates the correlated color temperature of the overall illumination. The value expression is obtained through quantizing the range [1667, 25000] into 28 bins in a non-uniform way as specified in ISO/IEC 15938-5.</td></tr>
</table>

Table 158 shows descriptor components semantics of the input device color gamut type.

[Table 158]

| **Names** | **Description** |
|---|---|
| typeLength | This field, which is only present in the binary representation, specifies the length of each IDCG_Type instance in bytes. The value of this element is the size of the largest IDCG_Type instance, aligned to a byte boundary by bit stuffing using 0-7 '1' bits. |
| IDCG_Type | An element describing the type of input device color gamut (e.g., NTSC, SMPTE). |
| IDCG_Value | An element describing the chromaticity values of RGB channels when the DAC values are maximum. The size of the IDCG_Value matrix is 3x2 such as $\begin{bmatrix} x_r & y_r \\ x_g & y_g \\ x_b & y_b \end{bmatrix}$. The way of describing the values in the binary representation is in the order of [$x_r$, $y_r$, $x_g$, $y_g$, $x_b$, $y_b$]. |

FIG. 7A illustrates a structure of a sensory media reproducing device according to example embodiments.

Referring to FIG. 7A, a sensory media reproducing device 710 may include an extracting unit 711, an encoding unit 712, and a transmitting unit 713.

The extracting unit 711 may extract sensory effect information from contents. A sensory device 730 may execute an effect event corresponding to the sensory effect information.

The encoding unit 712 may encode the extracted sensory effect information into sensory effect metadata. That is, the encoding unit 712 may generate the sensory effect metadata by encoding the sensory effect information. The encoding unit 712 may include at least one of an XML encoder or a binary encoder.

The transmitting unit 713 may transmit the encoded sensory effect metadata to a sensory effect controlling device 720.

The sensory effect metadata may include an SEM base type which denotes basic sensory effect information.

Table 159 shows an XML representation syntax regarding the SEM base type according to example embodiments.

[Table 159]

```
<!-- ################################################ -->
<!--  SEM Base type                                   -->
<!-- ################################################ -->
<complexType name="SEMBaseType" abstract="true">
  <complexContent>
    <restriction base="anyType">
      <attribute name="id" type="ID" use="optional"/>
    </restriction>
  </complexContent>
</complexType>
```

Table 160 shows a binary representation syntax regarding the SEM base type according to example embodiments.

[Table 160]

| SEMBaseType { | **Number of bits** | **Mnemonic** |
|---|---|---|
| idFlag | 1 | bslbf |
| If(idFlag) { | | |
| idLength | | vluimsbf5 |
| id | 8 * idLength | bslbf |
| } | | |
| anyAttribute | 100 | bslbf |
| } | | |

A binary representation regarding SEM may include a type of metadata, a type of individual metadata, and a data field type of individual metadata type.

Table 160-2 shows a basic structure of the binary representation according to example embodiments.

[Table 160-2]

| Type of metadata | Type of individual metadata | Individual metadata type |
|---|---|---|
| 4 bits | 5 bits | Depends on the type |

The type of metadata may include metadata regarding sensory device command information, that is, sensory device command metadata, sensory effect metadata, and the like. Table 160-3 shows a binary representation regarding the type of metadata.

[Table 160-3]

| Term of metadata | Binary representation (4 bits) |
|---|---|
| SEM | 0000 |
| InteractionInfo | 0001 |
| ControlInfo | 0010 |
| Virtual World Object Characteristics | 0011 |
| Reserved | 0100-1111 |

Referring to Table 106-3, the type of metadata may include SEM, interaction information metadata, control information metadata, virtual world object characteristics, and reserved metadata.

The type of individual metadata may be a selection regarding a light effect, a flash effect, and the like. Table 106-4 shows identifiers (IDs) regarding effect types of the type of individual metadata.

[Table 160-4]

| ID | Effect |
|---|---|
| 0 | Reserved |
| 1 | Light |
| 2 | Flash |
| 3 | Temperature |
| 4 | Wind |
| 5 | Vibration |
| 6 | Spraying |
| 7 | Scent |
| 8 | Fog |
| 9 | Color correction |
| 10 | Rigid Body Motion |
| 11 | Passive Kinesthetic Motion |
| 12 | Passive Kinesthetic Force |
| 13 | Active kinesthetic |
| 14 | Tactile |
| 15~225 | Reserved |

Table 161 shows descriptor components semantics regarding the SEM base type according to example embodiments.

[Table 161]

| **Names** | **Description** |
|---|---|
| idFlag | This field, which is only present in the binary representation, indicates the presence of the id attribute. If it is 1 then the id attribute is present, otherwise the id attribute is not present. |
| idLength | This field, which is only present in the binary representation, specifies the length of each idLength instance in bytes. The value of this element is the size of the largest idLength instance, aligned to a byte boundary by bit stuffing using 0-7'1' bits. |
| id | Identifies the id of the SEMBaseType. |
| anyAttribute | This field, which is only present in the binary representation is reserved for a future usage. |

The SEM may include SEM base attributes that denote groups regarding common attributes of sensory effect information.

Table 162 shows an XML representation syntax regarding the SEM base attributes type according to example embodiments.

[Table 162]

```
<!-- ################################################ -->
<!--  SEM Base Attributes                            -->
<!-- ################################################ -->
<attributeGroup name="SEMBaseAttributes">
  <attribute name="activate" type="boolean" use="optional" />
  <attribute name="duration" type="positiveInteger" use="optional" />
  <attribute name="fade" type="positiveInteger" use="optional" />
  <attribute name="alt" type="anyURI" use="optional" />
  <attribute name="priority" type="positiveInteger" use="optional" />
  <attribute name="location" type="mpeg7:termReferenceType"
     use="optional"/>
  <attributeGroup ref="sedl:SEMAdaptabilityAttributes"/>
</attributeGroup>
<simpleType name="intensityValueType">
  <restriction base="float"/>
</simpleType>
<simpleType name="intensityRangeType">
  <restriction>
    <simpleType>
      <list itemType="float"/>
    </simpleType>
    <length value="2" fixed="true"/>
  </restriction>
</simpleType>
```

```
<!-- ################################################ -->
<!--  SEM Adaptability Attributes                    -->
<!-- ################################################ -->
<attributeGroup name="SEMAdaptabilityAttributes">
  <attribute name="adaptType" type="sedl:adaptTypeType" use="optional"/>
  <attribute name="adaptRange" type="sedl:adaptRangeType" default="10"
          use="optional"/>
</attributeGroup>
<simpleType name="adaptTypeType">
  <restriction base="NMTOKEN">
    <enumeration value="Strict"/>
    <enumeration value="Under"/>
    <enumeration value="Over"/>
    <enumeration value="Both"/>
  </restriction>
</simpleType>
<simpleType name="adaptRangeType">
  <restriction base="unsignedInt">
    <minInclusive value="0"/>
    <maxInclusive value="100"/>
  </restriction>
</simpleType>
```

Table 163 shows a binary representation syntax regarding the SME base attributes according to example embodiments.

[Table 163]

| SEMBaseAttributes { | **Number of bits** | **Mnemonic** |
|---|---|---|
| activateFlag | 1 | bslbf |
| durationFlag | 1 | bslbf |
| fadeFlag | 1 | bslbf |
| altFlag | 1 | bslbf |
| PriorityFlag | 1 | bslbf |
| locationFlag | 1 | bslbf |
| if(actiavateFlag) { | | |
| activate | 1 | bslbf |
| } | | |
| if(durationFlag) { | | |
| duration | 32 | uimsbf |
| } | | |
| if(fadeFlag) { | | |
| fade | 32 | uimsbf |
| } | | |
| if(altFlag) { | | |
| altLength | | vluimsbf5 |
| alt | 8*altLength | bslbf |
| } | | |
| if(priorityFlag) { | | |
| Priority | 8 | uimsbf |
| } | | |
| if(locationflag) | | |
| location | 7 | bslbf |
| } | | |
| SEMAdaptabilityAttributes | | SEMAdaptabilityAttributes |
| } | | |
| SEMAdaptabilityAttributes | | |
| adaptTypeFlag | 1 | bslbf |
| adaptRangeFlag | 1 | bslbf |
| if(adaptTypeFlag) { | | |
| adaptType | 3 | bslbf |
| } | | |
| if(adaptRangeFlag) { | | |
| adaptRange | 7 | uimsbf |
| } | | |
| } | | |

Table 164 shows descriptor components semantics regarding the SEM base attributes according to example embodiments.

[Table 164]

| Names | Description |
|---|---|
| activateFlag | This field, which is only present in the binary representation, indicates the presence of the activation attribute. If it is 1 then the activation attribute is present, otherwise the activation attribute is not present. |
| durationFlag | This field, which is only present in the binary representation, indicates the presence of the duration attribute. If it is 1 then the duration attribute is present, otherwise the duration attribute is not present. |
| fadeFlag | This field, which is only present in the binary representation, indicates the presence of the fade attribute. If it is 1 then the fade attribute is present, otherwise the fade attribute is not present. |
| altFlag | This field, which is only present in the binary representation, indicates the presence of the alt attribute. If it is 1 then the alt attribute is present, otherwise the alt attribute is not present. |
| priorityFlag | This field, which is only present in the binary representation, indicates the presence of the priority attribute. If it is 1 then the priority attribute is present, otherwise the priority attribute is not present. |
| locationFlag | This field, which is only present in the binary representation, indicates the presence of the location attribute. If it is 1 then the location attribute is present, otherwise the location attribute is not present. |
| activate | Describes whether the effect shall be activated. A value of true (=1) means the effect shall be activated and false (=0) means the effect shall be deactivated. |
| duration | Describes the duration according to the time scheme used. The time scheme used shall be identified by means of the si:absTimeScheme and si:timeScale attributes respectively. |
| fade | Describes the fade time according to the time scheme used within which the Flag intensity shall be reached. The time scheme used shall be identified by means of the si:absTimeScheme and si:timeScale attributes respectively. |
| alt | Describes an alternative effect identified by URI.<br>NOTE 1 The alternative might point to an effect – or list of effects – within the same description or an external description.<br>NOTE 2 The alternative might be used in case the original effect cannot be processed.<br>EXAMPLE 1 The alternative effect is chosen because the original intended effect cannot be processed due to lack of devices supporting this effect. |
| priority | Describes the priority for effects with respect to other effects in the same group of effects sharing the same point in time when they should become available for consumption. A value of one indicates the highest priority and |

| | |
|---|---|
| | larger values indicate lower priorities.<br>NOTE 3 The priority might by used to process effects – Flag within a group of effects – according to the capabilities of the adaptation VR.<br><br>EXAMPLE 2 The adaptation VR processes the individual effects of a group of effects according to their priority in descending order due to its limited capabilities. That is, effects with low priority might get lost. |
| location | Describes the location from where the effect is expected to be received from the user's perspective according to the x-, y-, and z-axis as depicted in . |

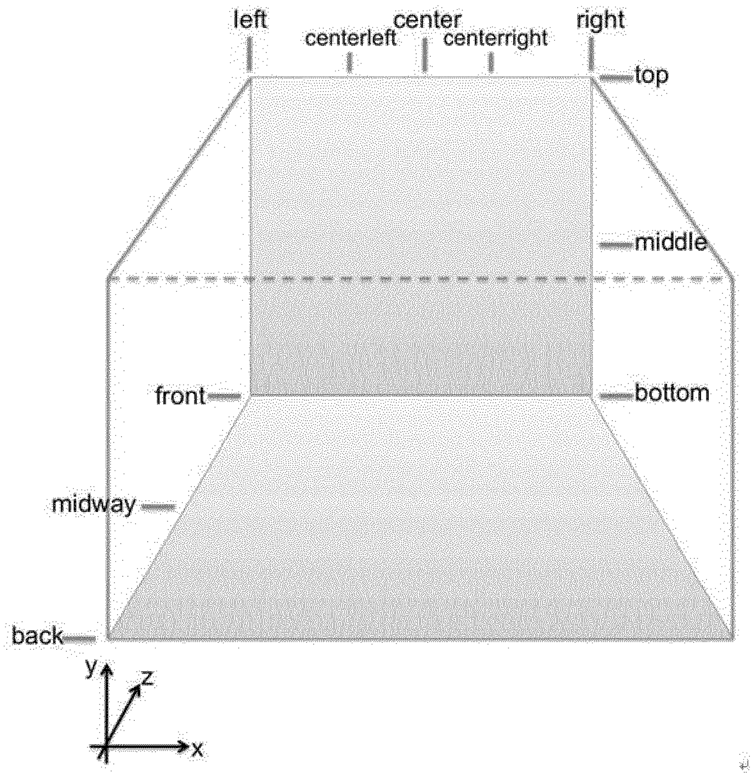


**Figure 3 — Location model for sensory effect metadata.**

A classification scheme that may be used for this purpose is the LocationCS as Flag in Annex A.2.1. The terms from the LocationCS shall be concatenated with the ":" sign in order of the x-, y-, and z-axis to uniquely define a location within the three-dimensional space.

For referring to a group of locations, a wild card mechanism may be employed using the "*" sign.

EXAMPLE 4 urn:mpeg:mpeg-v:01-SI-LocationCS-NS:center:middle:front defines the location as follows: center on the x-axis, middle on the y-axis, and front on the z-axis. That is, it describes all effects at the center, middle, front side of the user.

EXAMPLE 5 `urn:mpeg:mpeg-v:01-SI-LocationCS-NS:left:*:midway` defines the location as follows: left on the x-axis, any location on the y-axis, and midway on the z-axis. That is, it describes all effects at the left, midway side of the user.

EXAMPLE 6 `urn:mpeg:mpeg-v:01-SI-LocationCS-NS:*:*:back` defines the location as follows: any location on the x-axis, any location on the y-axis, and back on the z-axis. That is, it describes all effects at the back of the user.

In the binary description, the following mapping table is used,

| location | term of location |
|---|---|
| 0000000 | *:*:* |
| 0000001 | left:*:* |
| 0000010 | centerleft:*:* |
| 0000011 | center:*:* |
| 0000100 | centerright:*:* |
| 0000101 | right:*:* |
| 0000110 | *:bottom:* |
| 0000111 | *:middle:* |
| 0001000 | *:top:* |
| 0001001 | *:*:back |
| 0001010 | *:*:midway |
| 0001011 | *:*:front |
| 0001100 | left:bottom:* |
| 0001101 | centerleft:bottom:* |
| 0001110 | center:bottom:* |
| 0001111 | centerright:bottom:* |
| 0010000 | right:bottom:* |

| | | | |
|---|---|---|---|
| | 0010001 | left:middle:* | |
| | 0010010 | centerleft:middle:* | |
| | 0010011 | center:middle:* | |
| | 0010100 | centerright:middle:* | |
| | 0010101 | right:middle:* | |

| | | | |
|---|---|---|---|
| | 0010110 | left:top:* | |
| | 0010111 | centerleft:top:* | |
| | 0011000 | center:top:* | |
| | 0011001 | centerright:top:* | |
| | 0011010 | right:top:* | |
| | 0011011 | left:*:back | |
| | 0011100 | centerleft:*:back | |
| | 0011101 | center:*:back | |
| | 0011110 | centerright:*:back | |
| | 0011111 | right:*:back | |
| | 0100000 | left:*:midway | |
| | 0100001 | centerleft:*:midway | |
| | 0100010 | center:*:midway | |
| | 0100011 | centerright:*:midway | |
| | 0100100 | right:*:midway | |
| | 0100101 | left:*:front | |
| | 0100110 | centerleft:*:front | |
| | 0100111 | center:*:front | |
| | 0101000 | centerright:*:front | |
| | 0101001 | right:*:front | |
| | 0101010 | *:bottom:back | |
| | 0101011 | *:middle:back | |
| | 0101100 | *:top:back | |

| | | |
|---|---|---|
| 0101101 | *:bottom:midway | |
| 0101110 | *:middle:midway | |
| 0101111 | *:top:midway | |
| 0110000 | *:bottom:front | |
| 0110001 | *:middle:front | |
| 0110010 | *:top:front | |
| 0110011 | left:bottom:back | |
| 0110100 | centerleft:bottom:back | |
| 0110101 | center:bottom:back | |
| 0110110 | centerright:bottom:back | |
| 0110111 | right:bottom:back | |
| 0111000 | left:middle:back | |
| 0111001 | centerleft:middle:back | |
| 0111010 | center:middle:back | |
| 0111011 | centerright:middle:back | |
| 0111100 | right:middle:back | |
| 0111101 | left:top:back | |
| 0111110 | centerleft:top:back | |
| 0111111 | center:top:back | |
| 1000000 | centerright:top:back | |
| 1000001 | right:top:back | |
| 1000010 | left:bottom:midway | |
| 1000011 | centerleft:bottom:midway | |
| 1000100 | center:bottom:midway | |
| 1000101 | centerright:bottom:midway | |
| 1000110 | right:bottom:midway | |
| 1000111 | left:middle:midway | |

| | | |
|---|---|---|
| | 1001000 | centerleft:middle:midway |
| | 1001001 | center:middle:midway |
| | 1001010 | centerright:middle:midway |
| | 1001011 | right:middle:midway |
| | 1001100 | left:top:midway |
| | 1001101 | centerleft:top:midway |
| | 1001110 | center:top:midway |
| | 1001111 | centerright:top:midway |
| | 1010000 | right:top:midway |
| | 1010001 | left:bottom:midway |
| | 1010010 | centerleft:bottom:midway |
| | 1010011 | center:bottom:midway |
| | 1010100 | centerright:bottom:midway |
| | 1010101 | right:bottom:midway |
| | 1010110 | left:middle:midway |
| | 1010111 | centerleft:middle:midway |
| | 1011000 | center:middle:midway |
| | 1011001 | centerright:middle:midway |
| | 1011010 | right:middle:midway |
| | 1011011 | left:top:midway |
| | 1011100 | centerleft:top:midway |
| | 1011101 | center:top:midway |
| | 1011110 | centerright:top:midway |
| | 1011111 | right:top:midway |
| | 1100000~1111111 | Reserved |
| SEMAdaptabilityAttributes | Describes a group of attributes for the adaptability attributes of effects. | |

Table 165 shows descriptor components semantics regarding SEM adaptability attributes according to example embodiments.

[Table 165]

| Names | Description |
|---|---|
| adaptTypeFlag | This field, which is only present in the binary representation, indicates the presence of the adaptType attribute. If it is 1 then the adaptType attribute is present, otherwise the adaptType attribute is not present. |
| adaptRangeFlag | This field, which is only present in the binary representation, indicates the presence of the adaptRange attribute. If it is 1 then the adaptRange attribute is present, otherwise the adaptRange attribute is not present. |

| | |
|---|---|
| adaptType | Describes the preferred type of adaptation with the following possible instantiations:<br>— Strict: An adaptation by approximation may not be performed.<br>— Under: An adaptation by approximation may be performed with a smaller effect value than the specified effect value.<br>NOTE 1 (1 – adaptRange) x intensity ~ intensity.<br>— Over: An adaptation by approximation may be performed with a greater effect value than the specified effect value.<br>NOTE 2 intensity ~ (1 + adaptRange) x intensity.<br>— Both: An adaptation by approximation may be performed between the upper and lower bound specified by adaptRange.<br>NOTE 3 (1 – adaptRange) x intensity ~ (1 + adaptRange) x intensity.<br>In the binary description, the following mapping table is used,<br>adaptType \| adaptTypeType<br>000 \| Reserved<br>001 \| Strict<br>010 \| Under<br>011 \| Over<br>100 \| Both<br>101~111 \| Reserved |
| adaptRange | Describes the upper and lower bound in percentage for the adaptType. If the adaptType is not present, adaptRange shall be ignored. |

Table 166 shows an XML representation syntax regarding an si attributes list according to example embodiments. [Table 166]

```xml
<?xml version="1.0"?>
<!-- Digital Item Adaptation ISO/IEC 21000-7 Second Edition -->
<!-- Schema for XML Streaming Instructions -->
<schema
  version="ISO/IEC 21000-7 2nd"
  id="XSI-2nd.xsd"
  xmlns="http://www.w3.org/2001/XMLSchema"
  xmlns:si="urn:mpeg:mpeg21:2003:01-DIA-XSI-NS"
  targetNamespace="urn:mpeg:mpeg21:2003:01-DIA-XSI-NS"
  elementFormDefault="qualified">

  <annotation>
    <documentation>
      Declaration of attributes used for XML streaming instructions
    </documentation>
  </annotation>

  <!-- The following attribute defines the process units -->
  <attribute name="anchorElement" type="boolean"/>

  <!-- The following attribute indicates that the PU shall be encoded as Random
Access Point -->
  <attribute name="encodeAsRAP" type="boolean"/>

  <attribute name="puMode" type="si:puModeType"/>
  <simpleType name="puModeType">
    <restriction base="string">
      <enumeration value="self"/>
      <enumeration value="ancestors"/>
      <enumeration value="descendants"/>
      <enumeration value="ancestorsDescendants"/>
      <enumeration value="preceding"/>
      <enumeration value="precedingSiblings"/>
      <enumeration value="sequential"/>
    </restriction>
  </simpleType>

  <!-- The following attributes define the time properties -->
  <attribute name="timeScale" type="unsignedInt"/>
  <attribute name="ptsDelta" type="unsignedInt"/>
  <attribute name="absTimeScheme" type="string"/>
  <attribute name="absTime" type="string"/>
  <attribute name="pts" type="nonNegativeInteger"/>

</schema>
```

Table 167 shows a binary representation syntax regarding the si attributes list according to example embodiments.

[Table 167]

| siAtributeList { | **Number of bits** | **Mnemonic** |
|---|---|---|
| anchorElementFlag | 1 | bslbf |
| encodeAsRAPFlag | 1 | bslbf |
| puModeFlag | 1 | bslbf |
| timeScaleFlag | 1 | bslbf |
| ptsDeltaFlag | 1 | bslbf |
| absTimeSchemeFlag | 1 | bslbf |
| absTimeFlag | 1 | bslbf |
| ptsFlag | 1 | bslbf |
| absTimeSchemeLength | | vluimsbf5 |
| absTimeLength | | vluimsbf5 |
| if(anchorElementFlag) { | | |
| anchorElement | 1 | bslbf |
| } | | |
| if(encodeAsRAPFlag) { | | |
| encodeAsRAP | 1 | bslbf |
| } | | |
| if(puModeFlag) { | | |
| puMode | 3 | bslbf |
| } | | |
| if(puModeFlag) { | | |
| timeScale | 32 | uimsbf |
| } | | |
| if(ptsDeltaFlag) { | | |
| ptsDelta | 32 | uimsbf |
| } | | |
| if(absTimeSchemeFlag) { | | |
| absTimeScheme | 8*absTimeSchemeLength | bslbf |
| } | | |
| if(absTimeFlag) { | | |
| absTime | 8*absTimeLength | bslbf |
| } | | |
| if(ptsFlag) { | | |
| pts | | vluimsbf5 |
| } | | |

Table 168 shows descriptor components semantics regarding the description metadata type according to example embodiments.

[Table 168]

| Names | Description |
|---|---|
| anchorElementFlag | This field, which is only present in the binary representation, indicates the presence of the anchorElement attribute. If it is 1 then the anchorElement attribute is present, otherwise the anchorElement attribute is not present. |
| encodeAsRAPFlag | This field, which is only present in the binary representation, indicates the presence of the encodeAsRAP attribute. If it is 1 then the encodeAsRAP attribute is present, otherwise the encodeAsRAP attribute is not present. |
| puModeFlag | This field, which is only present in the binary representation, indicates the presence of the puMode attribute. If it is 1 then the puMode attribute is present, otherwise the puMode attribute is not present. |
| timeScaleFlag | This field, which is only present in the binary representation, indicates the presence of the timeScale attribute. If it is 1 then the timeScale attribute is present, otherwise the timeScale attribute is not present. |
| ptsDeltaFlag | This field, which is only present in the binary representation, indicates the presence of the ptsDelta attribute. If it is 1 then the ptsDelta attribute is present, otherwise the ptsDelta attribute is not present. |
| absTimeSchemeFlag | This field, which is only present in the binary representation, indicates the presence of the activation attribute. If it is 1 then the activation attribute is present, otherwise the activation attribute is not present. |
| absTimeFlag | This field, which is only present in the binary representation, indicates the presence of the absTimeScheme attribute. If it is 1 then the absTimeScheme attribute is present, otherwise the absTimeScheme attribute is not present. |
| ptsFlag | This field, which is only present in the binary representation, indicates the presence of the pts attribute. If it is 1 then the pts attribute is present, otherwise the pts attribute is not present. |

| | |
|---|---|
| absTimeSchemeLength | This field, which is only present in the binary representation, specifies the length of each absTimeSchemeLength instance in bytes. The value of this element is the size of the largest absTimeSchemeLength instance, aligned to a byte boundary by bit stuffing using 0-7 '1' bits. |
| absTimeLength | This field, which is only present in the binary representation, specifies the length of each absTimeLength instance in bytes. The value of this element is the size of the largest absTimeLength instance, aligned to a byte boundary by bit stuffing using 0-7 '1' bits. |
| anchorElement | Describes whether the element shall be anchor element. A value of true (=1) means the element shall be anchor element and false (=0) means the element shall be not anchor element.<br>The anchorElement allows one to indicate whether an XML element is an anchor element, i.e., the starting point for composing the process unit. |
| encodeAsRAP | Describes property indicates that the process unit shall be encoded as a random access point. A value of true (=1) means the process unit shall be encoded as a random access point and false (=0) means the process unit shall be not encoded as a random access point. |
| puMode | The puMode specifies how elements are aggregated to the anchor element to compose the process unit. For detailed information the reader is referred to ISO/IEC JTC 1/SC 29/WG 11/N9899, subclause 8.6.2.2.<br><br>**Figure 1** shows an example for puMode = descendants which means that the process unit contains the anchor element and its descendant elements. Note that the anchor elements are pictured in white.<br><br>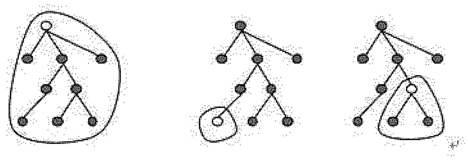<br>**Figure 1. Examples of process units** – puMode = descendants.<br><br>In the binary description, the following mapping table is used,<br>puMode: puModeType<br>000: self<br>001: ancestors<br>010: descendants<br>011: ancestorsDescendants<br>100: preceding<br>101: precedingSiblings<br>110: sequential<br>111: Reserved |
| timeScale | Describes a time scale. |
| ptsDelta | Describes a processing time stamp delta. |
| absTimeScheme | Describes an absolute time scheme. |
| absTime | Describes an absolute time. |
| pts | Describes a processing time stamp (PTS). |

Table 169 shows an XML representation syntax regarding SEM root elements according to example embodiments.

[Table 169]

```
<!-- ################################################ -->
<!--  Definition of the SEM root element            -->
<!-- ################################################ -->
<element name="SEM">
  <complexType>
    <sequence>
      <element name="DescriptionMetadata" type="sedl:DescriptionMetadataType"
          minOccurs="0" maxOccurs="1"/>
      <choice maxOccurs="unbounded">
        <element ref="sedl:Declarations" />
        <element ref="sedl:GroupOfEffects" />
        <element ref="sedl:Effect" />
        <element ref="sedl:ReferenceEffect" />
      </choice>
    </sequence>
    <attribute name="autoExtraction" type="sedl:autoExtractionType"/>
    <anyAttribute namespace="##other" processContents="lax"/>
  </complexType>
</element>

<simpleType name="autoExtractionType">
  <restriction base="string">
    <enumeration value="audio"/>
    <enumeration value="visual"/>
    <enumeration value="both"/>
  </restriction>
</simpleType>
```

Table 170 shows a binary representation syntax regarding the SEM root elements according to example embodiments.

[Table 170]

| SEM{ | Number of bits | Mnemonic |
|---|---|---|
| DescFlag | 1 | bslbf |
| ElementType | 2 | bslbf |
| EffectID | 8 | bslbf |
| NumOfElements | 32 | uimsbf |
| if(DescFlag) { | | |
| DescriptionMetadata | | DescriptionMetadataType |
| } | | |
| for(i=1;i< NumOfElements;i++) { | | |
| if(ElementType==00) { | | |
| Declarations | | DeclarationsType |
| }else if(ElementType==01) { | | |
| GroupOfEffects | | GroupOfEffectsType |
| }else if(ElementType==10) { | | |

(continued)

| SEM{ | Number of bits | Mnemonic |
|---|---|---|
| Effect | | effect instance specified by EffectID |
| }else if(ElementType==11) { | | |
| ReferenceEffect | | ReferenceEffectType |
| } | | |
| } | | |
| autoExtraction | 3 | bslbf |
| anyAttribute | 100 | siAttributeList |
| } | | |

Table 171 shows descriptor components semantics regarding the SEM according to example embodiments.

[Table 171]

<table>
<tr><th>Names</th><th>Description</th></tr>
<tr><td>DescFlag</td><td>This field, which is only present in the binary representation, indicates the presence of the DescriptionMetadata element. If it is 1 then the DescriptionMetadata element is present, otherwise the DescriptionMetadata element is not present.</td></tr>
<tr><td>ElementType</td><td>This field, which is only present in the binary representation, describes which SEM scheme shall be used.<br><br>In the binary description, the following mapping table is used,<br><table><tr><td>Element</td><td>ElementType</td></tr><tr><td>00</td><td>Declarations</td></tr><tr><td>01</td><td>GroupOfEffects</td></tr><tr><td>10</td><td>Effect</td></tr><tr><td>11</td><td>ReferenceEffect</td></tr></table></td></tr>
<tr><td>EffectID</td><td>This field, which is only present in the binary representation, specifies a descriptor identifier. The descriptor identifier indicates the descriptor type accommodated in the Effect.<br><br>The assignment of IDs to the effect is specified in Table 1.<br>Table 1. Assignment of IDs to effect<br><table><tr><td>ID</td><td>Effect</td></tr><tr><td>0</td><td>Reserved</td></tr><tr><td>1</td><td>Light</td></tr><tr><td>2</td><td>Flash</td></tr><tr><td>3</td><td>Temperature</td></tr><tr><td>4</td><td>Wind</td></tr><tr><td>5</td><td>Vibration</td></tr><tr><td>6</td><td>Spraying</td></tr></table></td></tr>
</table>

| | |
|---|---|
| | 7 \| Scent<br>8 \| Fog<br>9 \| Color correction<br>10 \| Rigid Body Motion<br>11 \| Passive Kinesthetic Motion<br>12 \| Passive Kinesthetic Force<br>13 \| Active Kinesthetic<br>14 \| Tactile<br>15~255 \| Reserved |
| NumOfElements | This field, which is only present in the binary representation, specifies the number of Element instances accommodated in the SEM. |

| | |
|---|---|
| DescriptionMetadata | Describes general information about the sensory effects metadata.<br>EXAMPLE Creation information or Classification Scheme Alias. |
| Declarations | Describes a declaration of sensory effects, group of sensory effects, or parameters.<br>NOTE 1 The declarations may be used by reference using the `ReferenceEffect` element. |
| GroupOfEffects | Describes a group of sensory effects.<br>NOTE 2 The purpose of grouping is to remove some redundancy from its child elements. All attributes included here are inherited to its child elements. |
| Effect | Describes a sensory effect. |
| ReferenceEffect | Describes a reference to a sensory effect, group of sensory effects, or parameter.<br>NOTE 3 The reference may point to a sensory effect, group of sensory effects, or parameter as Flag within the same description or an external description by means of the `Declarations` element. |

| | |
|---|---|
| autoExtraction | Describes whether an automatic extraction of sensory effects from the media resource, which is described by this sensory effect metadata, is preferable. The following values are available:<br>— audio: the automatic extraction of sensory effects from the audio part of the media resource, which is described by this sensory effect metadata, is preferable.<br>— visual: the automatic extraction of sensory effects from the visual part of the media resource, which is described by this sensory effect metadata, is preferable.<br>both: the automatic extraction of sensory effects from both the audio and visual part of the media resource, which is described by this sensory effect metadata, is preferable.<br><br>In the binary description, the following mapping table is used,<br><table><tr><td>autoExtraction</td><td>autoExtractionType</td></tr><tr><td>00</td><td>audio</td></tr><tr><td>01</td><td>visual</td></tr><tr><td>10</td><td>both</td></tr><tr><td>11</td><td>Reserved</td></tr></table> |
| anyAttribute | Provides an extension mechanism for including attributes from namespaces other than the target namespace. Attributes that shall be included are the XML streaming instructions as Flag in ISO/IEC 21000-7 for the purpose of identifying process units and associating time information to them.<br>EXAMPLE si:pts describes the point in time when the associated information shall become available to the application for processing. |

Table 172 shows an XML representation syntax regarding description metadata according to example embodiments.

[Table 172]

```
<!-- ################################################ -->
<!--  Definition of Description Metadata Type        -->
<!-- ################################################ -->
<complexType name="DescriptionMetadataType">
  <complexContent>
    <extension base="mpeg7:DescriptionMetadataType">
      <sequence>
        <element name="ClassificationSchemeAlias" minOccurs="0"
           maxOccurs="unbounded">
          <complexType>
            <complexContent>
              <extension base="sedl:SEMBaseType">
                <attribute name="alias" type="NMTOKEN" use="required"/>
                <attribute name="href" type="anyURI" use="required"/>
              </extension>
            </complexContent>
          </complexType>
        </element>
      </sequence>
    </extension>
  </complexContent>
</complexType>
```

Table 173 shows a binary representation syntax regarding the description metadata according to example embodiments.

[Table 173]

| DescriptionMetadataType { | **Number of bits** | **Mnemonic** |
|---|---|---|
| NumOfCSA | 32 | uimsbf |
| aliasLength | | vluimsbf5 |
| hrefLength | | vluimsbf5 |
| DescriptionMetadata | | Mpeg7:DescriptionMetadataType |
| for(i=0; i< NumOfCSA; i++){ | | |
| SEMBase[i] | | SEMBaseType |
| alias[i] | 8*aliasLength | bslbf |
| href[i] | 8*hrefLength | bslbf |
| } | | |
| } | | |

Table 174 shows descriptor components semantics regarding the description metadata type according to other example embodiments.

[Table 174]

| **Names** | **Description** |
|---|---|
| NumOfCSA | This field, which is only present in the binary representation, specifies the number of Classification Scheme Alias instances accommodated in the description metadata. |

(continued)

| Names | Description |
|---|---|
| aliasLength | This field, which is only present in the binary representation, specifies the length of each alias instance in bytes. The value of this element is the size of the largest alias instance, aligned to a byte boundary by bit stuffing using 0-7 '1' bits. |
| hrefLength | This field, which is only present in the binary representation, specifies the length of each href instance in bytes. The value of this element is the size of the largest href instance, aligned to a byte boundary by bit stuffing using 0-7 '1' bits. |
| DescriptionMetadata | Describes a Description Metadata extends mpeg7:DescriptionMetadataType and provides a sequence of classification schemes for usage in the SEM description. |
| SEMBase | Describes a base type of a Sensory Effect Metadata. |
| alias | Describes the alias assigned to the ClassificationScheme. The scope of the alias assigned shall be the entire description regardless of where the classificationSchemeAliasappears in the description |
| href. | Describes a reference to the classification scheme that is being aliased using a URI. The classification schemes Flag in this part of the ISO/IEC 22005, whether normative of informative, shall be referenced by the uri attribute of the classificationsScheme for that classification scheme. |

Table 175 shows an XML representation syntax regarding a declaration type according to example embodiments.

[Table 175]

```
<!-- ################################################ -->
<!--  Declarations type                            -->
<!-- ################################################ -->
<complexType name="DeclarationsType">
  <complexContent>
    <extension base="sedl:SEMBaseType">
      <choice maxOccurs="unbounded">
        <element ref="sedl:GroupOfEffects" />
        <element ref="sedl:Effect" />
        <element ref="sedl:Parameter" />
      </choice>
    </extension>
  </complexContent>
</complexType>
```

Table 176 shows a binary representation syntax regarding the declaration type according to example embodiments.

[Table 176]

| DeclarationType { | Number of bits | Mnemonic |
|---|---|---|
| SEMBase | 32 | SEMBaseType |
| NumOfElements | | uimsbf |
| for(i=1; i< NumOfElements; i++){ | | |
| ElementType | 2 | bslbf |
| if(ElementType==00) { | | |

(continued)

| DeclarationType { | **Number of bits** | **Mnemonic** |
|---|---|---|
| GroupOfEffects | | GroupOfEffectsType |
| }else if(ElementType==01) { | | |
| EffectID | 8 | bslbf |
| Effect | | effect instance specified by EffectID |
| }else if(ElementType==10) { | | |
| ReferenceEffect | | ReferenceEffectType |
| } | | |
| } | | |
| } | | |

Table 177 shows descriptor components semantics regarding the declaration type according to other example embodiments.

[Table 177]

| Names | Description |
|---|---|
| SEMBase | Describes a base type of a Sensory Effect Metadata. |
| ElementType | This field, which is only present in the binary representation, describes which Declarations scheme shall be used.<br><br>In the binary description, the following mapping table is used,<br>Element / ElementType:<br>00 – GroupOfEffects<br>01 – Effect<br>10 – ReferenceEffect<br>11 – Reserved |
| EffectID | This field, which is only present in the binary representation, specifies a descriptor identifier. The descriptor identifier indicates the descriptor type accommodated in the Effect.<br><br>The assignment of IDs to the effect is specified in Table 1.<br>Table 1. Assignment of IDs to effect<br>ID / Effect:<br>0 – Reserved<br>1 – Light<br>2 – Flash<br>3 – Temperature<br>4 – Wind<br>5 – Vibration<br>6 – Spraying<br>7 – Scent<br>8 – Fog<br>9 – Color correction<br>10 – Rigid Body Motion<br>11 – Passive Kinesthetic Motion<br>12 – Passive Kinesthetic Force<br>13 – Active Kinesthetic<br>14 – Tactile<br>15~255 – Reserved |
| NumOfElements | This field, which is only present in the binary representation, specifies the number of Element instances accommodated in the Declarations. |
| GroupOfEffects | Describes a group of sensory effects.<br>NOTE 2 The purpose of grouping is to remove some redundancy from its child elements. All attributes included here are inherited to its child elements. |
| Effect | Describes a sensory effect. |
| ReferenceEffect | Describes a reference to a sensory effect, group of sensory effects, or parameter.<br>NOTE 3 The reference may point to a sensory effect, group of sensory effects, or parameter as Flag within the same description or an external description by means of the Declarations element. |

Table 178 shows an XML representation syntax regarding a group of effect type according to example embodiments.

[Table 178]

```
<!-- ################################################ -->
  <!--  Group of Effects type                       -->
  <!-- ################################################ -->
  <complexType name="GroupOfEffectsType">
    <complexContent>
      <extension base="sedl:SEMBaseType">
        <choice minOccurs="2" maxOccurs="unbounded">
          <element ref="sedl:Effect"/>
          <element ref="sedl:ReferenceEffect"/>
        </choice>
        <attributeGroup ref="sedl:SEMBaseAttributes"/>
        <anyAttribute namespace="##other" processContents="lax"/>
      </extension>
    </complexContent>
  </complexType>
```

Table 179 shows a binary representation syntax regarding the group of effect type according to example embodiments.

[Table 179]

| GroupOfEffectsType { | **Number of bits** | **Mnemonic** |
|---|---|---|
| SEMBase | | SEMBaseType |
| NumOfElements | 32 | uimsbf |
| for(i=1; i< NumOfElements; i++){ | | |
| ElementType | 2 | bslbf |
| if(ElementType==00) { | | |
| EffectID | 8 | bslbf |
| Effect | | effect instance specified by EffectID |
| }else if(ElementType==01) { | | |
| ReferenceEffect | | ReferenceEffectType |
| } | | |
| } | | |
| SEMBaseAttributes | | SEMBaseAttributes |
| anyAttribute | 100 | siAttributeList |
| } | | |

Table 180 shows descriptor components semantics regarding the effect type according to other example embodiments.

[Table 180]

| Names | Description |
|---|---|
| SEMBase | Describes a base type of a Sensory Effect Metadata. |
| ElementType | This field, which is only present in the binary representation, describes which GroupOfEffects scheme shall be used.<br><br>In the binary description, the following mapping table is used,<br><table><tr><td>Element</td><td>ElementType</td></tr><tr><td>00</td><td>Effect</td></tr><tr><td>01</td><td>ReferenceEffect</td></tr></table> |
| EffectID | This field, which is only present in the binary representation, specifies a descriptor identifier. The descriptor identifier indicates the descriptor type accommodated in the Effect.<br><br>The assignment of IDs to the effect is specified in Table 1.<br>Table 1. Assignment of IDs to effect<br><table><tr><td>ID</td><td>Effect</td></tr><tr><td>0</td><td>Reserved</td></tr><tr><td>1</td><td>Light</td></tr><tr><td>2</td><td>Flash</td></tr><tr><td>3</td><td>Temperature</td></tr><tr><td>4</td><td>Wind</td></tr><tr><td>5</td><td>Vibration</td></tr><tr><td>6</td><td>Spraying</td></tr><tr><td>7</td><td>Scent</td></tr><tr><td>8</td><td>Fog</td></tr><tr><td>9</td><td>Color correction</td></tr><tr><td>10</td><td>Rigid Body Motion</td></tr><tr><td>11</td><td>Passive Kinesthetic Motion</td></tr><tr><td>12</td><td>Passive Kinesthetic Force</td></tr><tr><td>13</td><td>Active Kinesthetic</td></tr><tr><td>14</td><td>Tactile</td></tr><tr><td>15~255</td><td>Reserved</td></tr></table> |
| NumOfElements | This field, which is only present in the binary representation, specifies the number of Element instances accommodated in the GroupOfEffects. |
| Effect | Describes a sensory effect. |
| ReferenceEffect | Describes a reference to a sensory effect, group of sensory effects, or parameter.<br>NOTE 3 The reference may point to a sensory effect, group of sensory effects, or parameter as Flag within the same description or an external description by means of the GroupOfEffects element. |
| anyAttribute | Provides an extension mechanism for including attributes from namespaces other than the target namespace. Attributes that shall be included are the XML streaming instructions as Flag in ISO/IEC 21000-7 for the purpose of identifying process units and associating time information to them.<br>EXAMPLE si:pts describes the point in time when the associated information shall become available to the application for processing. |

Table 181 shows an XML representation syntax regarding an effect base type according to example embodiments.

[Table 181]

```
<!-- ################################################ -->
  <!--  Effect base type                              -->
  <!-- ################################################ -->
  <complexType name="EffectBaseType" abstract="true">
    <complexContent>
      <extension base="sedl:SEMBaseType">
        <sequence minOccurs="0">
          <element name="SupplementalInformation"
type="sedl:SupplementalInformationType" minOccurs="0"/>
        </sequence>
        <attribute name="autoExtraction" type="sedl:autoExtractionType"/>
        <attributeGroup ref="sedl:SEMBaseAttributes"/>
        <anyAttribute namespace="##other" processContents="lax"/>
      </extension>
    </complexContent>
  </complexType>
  <complexType name="SupplementalInformationType">
    <sequence>
      <element name="ReferenceRegion" type="mpeg7:SpatioTemporalLocatorType"/>
      <element name="Operator" type="sedl:OperatorType" minOccurs="0"/>
    </sequence>
  </complexType>
  <simpleType name="OperatorType">
    <restriction base="NMTOKEN">
      <enumeration value="Average"/>
      <enumeration value="Dominant"/>
    </restriction>
  </simpleType>
<simpleType name="autoExtractionType">
    <restriction base="string">
      <enumeration value="audio"/>
      <enumeration value="visual"/>
      <enumeration value="both"/>
    </restriction>
  </simpleType>
```

Table 182 shows a binary representation syntax regarding the effect base type according to example embodiments.

[Table 182]

| EffectBaseType { | Number of bits | Mnemonic |
|---|---|---|
| SEMBase | | SEMBaseType |
| supplimentalInfoFlag | 1 | bslbf |
| if(supplimentalInfoflag) { | | |

(continued)

| EffectBaseType { | Number of bits | Mnemonic |
|---|---|---|
| supplimentalInformation | | SupplementalInformationType |
| } | | |
| autoExtraction | 3 | bslbf |
| SEMBaseAttributes | | SEMBaseAttributes |
| anyAttribute | 100 | siAttributeList |
| } | | |
| | | |
| SupplementalInformationType { | **Number of bits** | **Mnemonic** |
| operatorFlag | 1 | bslbf |
| ReferenceRegion | | mpeg7:SpatioTemporalLocatorType |
| if(operatorFlag) { | | |
| Operation | 3 | bslbf |
| } | | |
| } | | |

Table 183 shows descriptor components semantics regarding the effect base type according to example embodiments.

[Table 183]

| **Names** | **Description** |
|---|---|
| EffectBaseType | EffectBaseType extends SEMBaseType and provides a base abstract type for a subset of types Flag as part of the sensory effects metadata types. |
| SEMBaseAttributes | Describes a group of attributes for the effects. |
| anyAttribute | Provides an extension mechanism for including attributes from namespaces, other than the target namespace. Attributes that shall be included are the XML streaming instructions as Flag in ISO/IEC 21000-7 for the purpose of identifying process units and associating time information to them.<br>EXAMPLE si:pits describes the point in time when the associated information shall become available to the application for processing. |
| supplimentalInfoFlag | This field, which is only present in the binary representation, indicates the presence of the supplementalInformation element If it is 1 then the SupplimentalInformation element is present, otherwise the SupplimentalInformation is not present. |
| SEMBase | Describes a base type of a Sensory Effect Metadata. |

Table 184 shows descriptor components semantics regarding a supplemental information type according to example embodiments.

[Table 184]

| Names | Description |
| --- | --- |
| SupplimentalInformationType | |
| operatorFlag | This field, which is only present in the binary representation, indicates the presence of the operator element. If it is 1 then the operator element is present, otherwise the operator element is not present. |
| ReferenceRegion | Describes the reference region for automatic extraction from video. If the autoExtraction is not present or is not equal to video, this element shall be ignored. The localization scheme used is identified by means of the mpeg7:SpatioTemporalLocatorType that is Flag in ISO/IEC 15938-5. |
| Operator | Describes the preferred type of operator for extracting sensory effects from the reference region of video with the following possible instantiations.<br>— Average: extracts sensory effects from the reference region by calculating average value.<br>— Dominant: extracts sensory effects from the reference region by calculating dominant value.<br>In the binary description, the following mapping table is used,<br><table><tr><td>Operator</td><td>Operator type</td></tr><tr><td>000</td><td>Reserved</td></tr><tr><td>001</td><td>Average</td></tr><tr><td>010</td><td>Dominant</td></tr><tr><td>011~111</td><td>Reserved</td></tr></table> |

Table 185 shows an XML representation syntax regarding a reference effect type according to example embodiments.

[Table 185]

```
<!-- ################################################ -->
 <!--  Reference Effect type                         -->
 <!-- ################################################ -->
 <complexType name="ReferenceEffectType">
   <complexContent>
     <extension base="sedl:SEMBaseType">
       <attribute name="uri" type="anyURI" use="required" />
       <attributeGroup ref="sedl:SEMBaseAttributes"/>
       <anyAttribute namespace="##other" processContents="lax" />
     </extension>
   </complexContent>
 </complexType>
```

Table 186 shows a binary representation syntax regarding the reference effect base type according to example embodiments.

[Table 186]

| ReferenceEffectType { | Number of bits | Mnemonic |
| --- | --- | --- |
| SEMBase | | SEMBaseType |

(continued)

| ReferenceEffectType { | Number of bits | Mnemonic |
|---|---|---|
| uriLength | | vluimsbf5 |
| uri | 8*uriLength | bslbf |
| SEMBaseAttributes | | SEMBaseAttributes |
| anyAttribute | 100 | siAttributeList |
| } | | |

Table 187 shows descriptor components semantics regarding the reference effect base type according to example embodiments.

[Table 187]

| **Names** | **Description** |
|---|---|
| SEMBase | Describes a base type of a Sensory Effect Metadata. |
| uriLength | This field, which is only present in the binary representation, specifies the length of each uri instance in bytes. The value of this element is the size of the largest uri instance, aligned to a byte boundary by bit stuffing using 0-7 '1' bits. |
| uri | Describes a reference to a sensory effect, group of sensory effects, or parameter by an Uniform Resource Identified (URI) Its target type must be one or derived - of sedl: EffectBaseType, sedl:GroupOfEffectType, or sedl:ParameterBaseType. |
| SEMBaseAttributes | Describes a group of attributes for the effects. |
| anyAttribute. | Provides an extension mechanism for including attributes from namespaces other than the target namespace. Attributes that shall be included are the XML streaming instructions as Flag in ISO/IEC 21000-7 for the purpose of identifying process units and associating time information to them.<br>EXAMPLE si:pts describes the point in time when the associated information shall become available to the application for processing. |

Table 188 shows an XML representation syntax regarding a parameter base type according to example embodiments.

[Table 188]

```
<!-- ################################################ -->
<!--  Parameter Base type                          -->
<!-- ################################################ -->
<complexType name="ParameterBaseType" abstract="true">
  <complexContent>
    <extension base="sedl:SEMBaseType"/>
  </complexContent>
</complexType>
```

Table 189 shows a binary representation syntax regarding the parameter base type according to example embodiments.

[Table 189]

| ParameterBaseType { | Number of bits | Mnemonic |
|---|---|---|
| SEMBase | | SEMBaseType |
| } | | |

Table 190 shows descriptor components semantics regarding the parameter base type according to example embodiments.

[Table 190]

| Names | Description |
|---|---|
| SEMBase | Describes a base type of a Sensory Effect Metadata. |

Table 191 shows an XML representation syntax regarding a color correction parameter type according to example embodiments.

[Table 191]

```
<!-- ################################################ -->
<!-- Definition of Color Correction Parameter type -->
<!-- ################################################ -->
<complexType name="ColorCorrectionParameterType">
  <complexContent>
    <extension base="sedl:ParameterBaseType">
      <sequence>
        <element name="ToneReproductionCurves"
          type="sedl:ToneReproductionCurvesType" minOccurs="0"/>
        <element name="ConversionLUT" type="sedl:ConversionLUTType"/>
        <element name="ColorTemperature" type="sedl:IlluminantType"
minOccurs="0"/>
        <element name="InputDeviceColorGamut"
          type="sedl:InputDeviceColorGamutType" minOccurs="0"/>
        <element name="IlluminanceOfSurround" type="mpeg7:unsigned12"
          minOccurs="0"/>
      </sequence>
    </extension>
  </complexContent>
</complexType>

<complexType name="ToneReproductionCurvesType">
  <sequence maxOccurs="256">
    <element name="DAC_Value" type="mpeg7:unsigned8"/>
    <element name="RGB_Value" type="mpeg7:doubleVector"/>
  </sequence>
</complexType>

<complexType name="ConversionLUTType">
  <sequence>
    <element name="RGB2XYZ_LUT" type="mpeg7:DoubleMatrixType"/>
    <element name="RGBScalar_Max" type="mpeg7:doubleVector"/>
    <element name="Offset_Value" type="mpeg7:doubleVector"/>
    <element name="Gain_Offset_Gamma" type="mpeg7:DoubleMatrixType"/>
    <element name="InverseLUT" type="mpeg7:DoubleMatrixType"/>
  </sequence>
</complexType>

<complexType name="IlluminantType">
  <choice>
    <sequence>
      <element name="XY_Value" type="dia:ChromaticityType"/>
      <element name="Y_Value" type="mpeg7:unsigned7"/>
    </sequence>
    <element name="Correlated_CT" type="mpeg7:unsigned8"/>
  </choice>
</complexType>

<complexType name="InputDeviceColorGamutType">
  <sequence>
    <element name="IDCG_Type" type="string"/>
    <element name="IDCG_Value" type="mpeg7:DoubleMatrixType"/>
  </sequence>
</complexType>
```

Table 192 shows a binary representation syntax regarding the color correction parameter type according to example embodiments.

[Table 192]

| ColorCorrectionParameterType { | **Number of bits** | **Mnemonic** |
|---|---|---|
| ParameterBaseType | | ParameterBaseType |
| ToneReproductionFlag | 1 | bslbf |
| ColorTemperatureFlag | 1 | bslbf |
| InputDeviceColorGamutFlag | 1 | bslbf |
| IllummanceOfSurroundFlag | 1 | bslbf |
| if(ToneReproductionFlag) { | | |
| ToneReproductionCurves | | ToneReproductionCurvesType |
| } | | |
| ConvertionLUT | | Conversion LUTType |
| if(ColorTemperatureFlag) { | | |
| ColorTemperature | | IlluminantType |
| } | | |
| if(InputDeviceColorGamutFlag) { | | |
| InputDeviceColorGamut | | InputDeviceColorGamutType |
| } | | |
| if(IlluminanceOfSurroundFlag) { | | |
| IlluminanceOfSurround | 12 | uimsbf |
| } | | |
| | | |
| ToneReproductionCurvesType { | **Number of bits** | **Mnemonic** |
| NumOfRecords | 8 | uimsbf |
| for(i=0; i< NumOfRecords; i++){ | | |
| DAC_Value<br>RGB_Value | 8<br>32*3 | mpeg7:unsigned8<br>mpeg7:doubleVector |
| } | | |
| } | | |
| | | |
| ConvertionLUTType { | **Number of bits** | **Mnemonic** |
| RGB2XYZ_LUT<br>RGBScalar Max | 32*3*3<br>32*3 | mpeg7:DoubleMatrixType<br>mpeg7:doubleVector |
| Offset_Value | 32*3 | mpeg7:doubleVector |
| Gain_Offiset_Gamma<br>InverseLUT | 32*3*3<br>32*3*3 | mpeg7:DoubleMatrixType<br>mpeg7:DoubleMatrixType |
| } | | |
| | | |
| IlluminantType { | **Number of bits** | **Mnemonic** |
| ElementType | 1 | bslbf |

(continued)

| IlluminantType { | **Number of bits** | **Mnemonic** |
|---|---|---|
| if(ElementType==00) { | | |
| XY Value | 32*2 | dia:ChromaticityType |
| Y_Value | 7 | uimsbf |
| } else if(ElementType==01) {<br>Correlated CT | 8 | uimsbf |
| } | | |
| } | | |
| | | |
| InputDeviceColorGamutType { | **Number of bits** | **Mnemonic** |
| typeLength | | vluimsbf5 |
| IDCG Type | 8*typeLength | bslbf |
| IDCG_Value | 32*3*2 | mpeg7:DoubleMatrixType |
| } | | |

Table 193 shows descriptor components semantics regarding the color correction parameter type according to example embodiments.

[Table 193]

| **Names** | **Description** |
|---|---|
| ParameterBaseType | Describes a base type of a Parameter Metadata |
| ToneReproductionFlag | This field, which is only present in the binary representation, indicates the presence of the ToneReproductionCurves element. If it is 1 then the TonerReproductionCurves element is present, otherwise the TonerReproductionCurves element is not present |
| ColorTemperatureFlag | This field which is only present in the binary representation indicates the presence of the ColorTemperature element. If it is 1 then the ColorTemperature element is present, otherwise the |
| InputDeviceColorGamutFlag | This field, which is only present in the binary representation, indicates the presence of the InputDeviceColorGamut element. If it is 1 then the InputDeviceColorantGamut element is present otherwise the InputDeviceColorantGamut element is not present |
| IlluminanceOfSurroundFlag | This field, which is only present in the binary representation, indicates the presence of the IlluminanceOfSurround element. If it is 1 then the IlluminanceOfSurround element is present, otherwise the IlluminanceOfSurround element is not present. |
| ConversionI.UT | This curve shows the characteristics (e.g. gamma curves for R.G. and B channels) of the input display device,<br>A look-up table (matrix) converting an image between an image color space (e.g. RGB) and standard connaction space (e.g. CIE XYZ) |
| ColorTemperature | An element describing a white point setting (e.g., D65, D93) of the input display device. |
| InputDeviceColorantGamut | An element describing an input display device color gamut, which is represented by chromaticity values of R, G, and B channels at maximum DAC values. |
| IlluminanceOfSurround | An element describing an illuminance level of viewing environment. The illumance is represented by lux. |

The color correction parameter type may include a tone reproduction curves type, a convention LUT type, an illuminant type, and an input device color gamut type.

Table 194 shows descriptor components semantics regarding the tone reproduction curves type according to example embodiments.

[Table 194]

| Names | Description |
|---|---|
| NumOfRecords | This field, which is only present in the binary representation, specifies the number of record (DAC and RGB value) instance accomodated in the |
| DAC_Value | An element describing discrete DAC values of input device. |
| RGB Value | An element describing normalized gamma curve values with respect to DAC values. The order of describing the RGB_Value is $R_n$, $G_n$, $B_n$, |

Table 195 shows descriptor components semantics regarding the convention LUT type according to example embodiments.

[Table 195]

| Names | Description |
|---|---|
| RGB2XYZ_IUT | This look-up table (matrix) converts an image from RGB to CIE XYZ. Thesize of the conversion matrix is 3x3 such as $\begin{bmatrix} R_x & G_x & B_x \\ R_y & G_y & B_y \\ R_z & G_z & B_z \end{bmatrix}$. The way ofdescribing the values in the binary representation is in order of [$R_z$, $G_x$, $E_x$; $R_y$, $G_y$, $B_y$; $R_z$ $G_z$, $E_z$\|. |
| RGBScalar_Max | An element describing maximum RGB scalar values for GOG transformation. The order of describing the RGBScalar_Max is $R_{max}$, $G_{max}$, $B_{max}$. |
| Offset_Value | An element describing offset values of input display device when the DAC is 0. The value is described in CIE XYZ form. The order of describing the Offset Value is X, Y, Z. |
| Gain_Offset_Gamma | An element describing the gain. offset, gamma of RGB channels for GOG transformation. The size of the Gain_Offset_Gamma matrix is 3x3 such as $\begin{bmatrix} Gain_r & Gain_g & Gain_b \\ Offset_r & Offset_g & Offset_b \\ Gamma_r & Gamma_g & Gamma_b \end{bmatrix}$. The way of describing the values in the binary representation is in the order of \|Gain, Gain, Offset, Offset, Offset, Gamma, Gamma, Gamma. |
| InverseLUT | This look-up table (mat $\begin{bmatrix} R_x' & G_x' & B_x' \\ R_y' & G_y' & B_y' \\ R_z' & G_z' & B_z' \end{bmatrix}$. 1 image form CIE XYZ to RGB.The size of the conversion matrix is 3x3 such as The way of describing the values in the binary representation in the ( e order of [$R_x'$, $G_x'$, $B_x'$; $R_y'$, $G_y'$, $B_y'$; $R_z'$, $G_z'$, $B_z'$]. |

Table 196 shows descriptor components semantics regarding the illuminant type according to example embodiments.

[Table 196]

| Names | Description |
|---|---|
| ElementType | This field, which is only present in the binary representation, describes which Illuminant scheme shall be used.<br><br>In the binary description, the following mapping table is used.<br><table><tr><td>Illuminant</td><td>IlluminantType</td></tr><tr><td>00</td><td>xy and Y value</td></tr><tr><td>01</td><td>Correlated_CT</td></tr></table> |
| XY_Value | An element describing the chromaticity of the light source. The ChromaticityType is specified in ISO/IEC 21000-7. |
| Y_Value | An element describing the luminance of the light source between 0 and 100. |
| Correlated_CT | Indicates the correlated color temperature of the overall illumination. The value expression is obtained through quantizing the range [1667, 25000] into 28 bins in a non-uniform way as specified in ISO/IEC 15938-5. |

Table 197 shows descriptor components semantics regarding the input device color gamut type according to example embodiments.

[Table 197]

| Names | Description |
|---|---|
| typeLength | This field, which is only present in the binary representation, species the length of each IDCG_Type instance in bytes. The value of this element is the size of the largest IDCG_Type instance, aligned to a byte boundary by bit stuffing using 0-7 '1' bits. |
| IDCG_Type | An element describing the type of input device color gamut (e.g. NTSC, SMPTE).<br>An element describing the chromaticity values of RGB channels when the DAC values maximum. The size of the IDCG_Value matrix is 3x2 such as $\begin{bmatrix} x_r & y_r \\ x_g & y_g \\ x_b & y_b \end{bmatrix}$. The way of describing the values in the binaryrepresentation is in the order of [$x_r$, $y_r$, $x_g$, $y_g$, $x_b$, $y_b$ \|. |

Table 198 shows an XML representation syntax regarding sensory effect information that is implemented by the light type sensory device according to example embodiments.

[Table 198]

```
<!-- ################################################ -->
  <!--  SEV Light type                              -->
  <!-- ################################################ -->
  <complexType name="LightType">
    <complexContent>
      <extension base="sedl:EffectBaseType">
        <attribute name="color" type="sev:colorType" use="optional"/>
        <attribute name="intensity-value" type="sedl:intensityValueType"
           use="optional"/>
        <attribute name="intensity-range" type="sedl:intensityRangeType"
           use="optional"/>
      </extension>
    </complexContent>
  </complexType>

  <simpleType name="colorType">
                    <union memberTypes="mpeg7:termReferenceType sev:colorRGBType"/>
  </simpleType>

  <simpleType name="colorRGBType">
    <restriction base="NMTOKEN">
      <whiteSpace value="collapse"/>
      <pattern value="#[0-9A-Fa-f]{6}"/>
    </restriction>
  </simpleType>
```

```
<!-- Definition of termReference datatype  -->
<simpleType name="termReferenceType">
      <union>
            <simpleType>
                  <restriction base="NMTOKEN">
                        <pattern value=":[^:]+:[^:]+"/>
                        <whiteSpace value="collapse"/>
                  </restriction>
            </simpleType>
            <simpleType>
                  <restriction base="anyURI"/>
            </simpleType>
      </union>
</simpleType>
```

Table 199 shows a binary representation syntax regarding the sensory effect information that is implemented by the light type sensory device according to example embodiments.

[Table 199]

| LightType{ | **Number of bits** | **Mnemonic** |
|---|---|---|
| EffectBase | | EffectBaseType |
| ColorFlag | 1 | bslbf |
| intensityValueFlag | 1 | bslbf |
| intensityRangeFlag | 1 | bslbf |
| if(colorFlag) { | | |
| color | | colorType |
| } | | |

(continued)

| LightType{ | **Number of bits** | **Mnemonic** |
|---|---|---|
| if(intensityValueFlag) { | | |
| Intensity-value | 32 | fsbf |
| } | | |
| if(intensityRangeFlag) { | | |
| Intensity-range | 64 | fsbf |
| } | | |
| } | | |
| | | |
| colorType { | **Number of bits** | **Mnemonic** |
| colorDescChoice | 1 | bslbf |
| if(colorDescChoice) {<br>colorRGB | 8 | bslbf |
| } | | |
| else { | | |
| colorRGB | 56 | colorRGBType (bslbf?) |
| } | | |
| } | | |

Table 200 shows descriptor components semantics regarding the sensory effect information that is implemented by the light type sensory device according to example embodiments.

[Table 200]

| Names | Description |
|---|---|
| LightType | Tool for describing a light effect. |
| EffectBase | Describes a base type of an effect. |
| colorFlag | This field, which is only present in the binary representation, indicates the presence of the color attribute. If it is 1 then the color attribute is present, otherwise the color attribute is not present. |
| intensityValueFlag | This field, which is only present in the binary representation, indicates the presence of the intensity-value attribute. If it is 1 then the intensity-value attribute is present, otherwise the intensity-value attribute is not present. |
| intensityRangeFlag | This field, which is only present in the binary representation, indicates the presence of the intensityRange attribute. If it is 1 then the intensity-range attribute is present, otherwise the intensity-range attribute is not present. |
| color | Describes the color of the light effect as a reference to a classification scheme term or as RGB value. A CS that may be used for this purpose is the ColorCS Flag in Annex A.2.1.<br>EXAMPLE urn:mpeg:mpeg-v:01-SI-ColorCS-NS:alice_blue would describe the color Alice blue. |

In the binary description, the following mapping table is used,

| colorType | Term ID of color |
|---|---|
| 000000000 | alice_blue |
| 000000001 | alizarin |
| 000000010 | amaranth |
| 000000011 | amaranth_pink |
| 000000100 | amber |
| 000000101 | amethyst |
| 000000110 | apricot |
| 000000111 | aqua |
| 000001000 | aquamarine |
| 000001001 | army_green |
| 000001010 | asparagus |
| 000001011 | atomic_tangerine |
| 000001100 | auburn |
| 000001101 | azure_color_wheel |
| 000001110 | azure_web |
| 000001111 | baby_blue |
| 000010000 | beige |
| 000010001 | bistre |

| | | |
|---|---|---|
| | 000010010 | black |
| | 000010011 | blue |
| | 000010100 | blue pigment |
| | 000010101 | blue_ryb |
| | 000010110 | blue_green |
| | 000010111 | blue-green |
| | 000011000 | blue violet |
| | 000011001 | bondi_blue |
| | 000011010 | brass |
| | 000011011 | bright_green |
| | 000011100 | bright_pink |
| | 000011101 | bright_turquoise |
| | 000011110 | brilliant_rose |
| | 000011111 | brink_pink |
| | 000100000 | bronze |
| | 000100001 | brown |
| | 000100010 | buff |
| | 000100011 | burgundy |
| | 000100100 | burnt_orange |
| | 000100101 | burnt_sienna |
| | 000100110 | burnt_umber |
| | 000100111 | camouflage_green |
| | 000101000 | caput_mortuum |
| | 000101001 | cardinal |
| | 000101010 | carmine |
| | 000101011 | carmine_pink |
| | 000101100 | carnation_pink |
| | 000101101 | Carolina_blue |
| | 000101110 | carrot_orange |
| | 000101111 | celadon |
| | 000110000 | cerise |
| | 000110001 | cerise_pink |
| | 000110010 | cerulean |
| | 000110011 | cerulean_blue |
| | 000110100 | champagne |
| | 000110101 | charcoal |
| | 000110110 | chartreuse traditional |
| | 000110111 | chartreuse_web |
| | 000111000 | cherry_blossom_pink |
| | 000111001 | chestnut |
| | 000111010 | chocolate |

| | | |
|---|---|---|
| | 000111011 | cinnabar |
| | 000111100 | cinnamon |
| | 000111101 | cobalt |
| | 000111110 | Columbia_blue |
| | 000111111 | copper |
| | 001000000 | copper_rose |
| | 001000001 | coral |
| | 001000010 | coral_pink |
| | 001000011 | coral_red |
| | 001000100 | corn |
| | 001000101 | cornflower_blue |
| | 001000110 | cosmic_latte |
| | 001000111 | cream |
| | 001001000 | crimson |
| | 001001001 | cyan |
| | 001001010 | cyan_process |
| | 001001011 | dark_blue |
| | 001001100 | dark_brown |
| | 001001101 | dark_cerulean |
| | 001001110 | dark_chestnut |
| | 001001111 | dark_coral |
| | 001010000 | dark_goldenrod |
| | 001010001 | dark_green |
| | 001010010 | dark_khaki |
| | 001010011 | dark_magenta |
| | 001010100 | dark_pastel_green |
| | 001010101 | dark_pink |
| | 001010110 | dark_scarlet |
| | 001010111 | dark_salmon |
| | 001011000 | dark_slate_gray |
| | 001011001 | dark_spring_green |
| | 001011010 | dark_tan |
| | 001011011 | dark_turquoise |
| | 001011100 | dark_violet |
| | 001011101 | deep_carmine_pink |
| | 001011110 | deep_cerise |
| | 001011111 | deep_chestnut |
| | 001100000 | deep_fuchsia |
| | 001100001 | deep_lilac |
| | 001100010 | deep_magenta |
| | 001100011 | deep_magenta |

| | | |
|---|---|---|
| | 001100100 | deep_peach |
| | 001100101 | deep_pink |
| | 001100110 | denim |
| | 001100111 | dodger_blue |
| | 001101000 | ecru |
| | 001101001 | egyptian_blue |
| | 001101010 | electric_blue |
| | 001101011 | electric_green |
| | 001101100 | eletric indigo |
| | 001101101 | electric_lime |
| | 001101110 | electric_purple |
| | 001101111 | emerald |
| | 001110000 | eggplant |
| | 001110001 | falu_red |
| | 001110010 | fern_green |
| | 001110011 | firebrick |
| | 001110100 | flax |
| | 001110101 | forest_green |
| | 001110110 | french_rose |
| | 001110111 | fuchsia |
| | 001111000 | fuchsia_pink |
| | 001111001 | gamboge |
| | 001111010 | gold_metallic |
| | 001111011 | gold_web_golden |
| | 001111100 | golden_brown |
| | 001111101 | golden_yellow |
| | 001111110 | goldenrod |
| | 001111111 | grey asparagus |
| | 010000000 | green_color_wheel_x11_green |
| | 010000001 | green_html/css_green |
| | 010000010 | green_pigment |
| | 010000011 | green_ryb |
| | 010000100 | green_yellow |
| | 010000101 | grey |
| | 010000110 | han_purple |
| | 010000111 | harlequin |
| | 010001000 | heliotrope |
| | 010001001 | Hollywood_cerise |
| | 010001010 | hot_magenta |
| | 010001011 | hot_pink |
| | 010001100 | indigo_dye |

| | | |
|---|---|---|
| | 010001101 | international_klein_blue |
| | 010001110 | international_orange |
| | 010001111 | Islamic_green |
| | 010010000 | ivory |
| | 010010001 | jade |
| | 010010010 | kelly_green |
| | 010010011 | khaki |
| | 010010100 | khaki_x11_light_khaki |
| | 010010101 | lavender_floral |
| | 010010110 | lavender_web |
| | 010010111 | lavender_blue |
| | 010011000 | lavender_blush |
| | 010011001 | lavender_grey |
| | 010011010 | lavender_magenta |
| | 010011011 | lavender_pink |
| | 010011100 | lavender_purple |
| | 010011101 | lavender_rose |
| | 010011110 | lawn_green |
| | 010011111 | lemon |
| | 010100000 | lemon_chiffon |
| | 010100001 | light_blue |
| | 010100010 | light_pink |
| | 010100011 | lilac |
| | 010100100 | lime_color_wheel |
| | 010100101 | lime_web_x11_green |
| | 010100110 | lime_green |
| | 010100111 | linen |
| | 010101000 | magenta |
| | 010101001 | magenta_dye |
| | 010101010 | magenta_process |
| | 010101011 | magic_mint |
| | 010101100 | magnolia |
| | 010101101 | malachite |
| | 010101110 | maroon_html/css |
| | 010101111 | marron_x11 |
| | 010110000 | maya_blue |
| | 010110001 | mauve |
| | 010110010 | mauve_taupe |
| | 010110011 | medium_blue |
| | 010110100 | medium_carmine |
| | 010110101 | medium_lavender_magenta |

| | | |
|---|---|---|
| | 010110110 | medum_purple |
| | 010110111 | medium_spring_green |
| | 010111000 | midnight_blue |
| | 010111001 | midnight_green_eagle_green |
| | 010111010 | mint_green |
| | 010111011 | misty_rose |
| | 010111100 | moss_green |
| | 010111101 | mountbatten_pink |
| | 010111110 | mustard |
| | 010111111 | myrtle |
| | 011000000 | navajo_white |
| | 011000001 | navy_blue |
| | 011000010 | ochre |
| | 011000011 | office_green |
| | 011000100 | old_gold |
| | 011000101 | old_lace |
| | 011000110 | old_lavender |
| | 011000111 | old_rose |
| | 011001000 | olive |
| | 011001001 | olive_drab |
| | 011001010 | olivine |
| | 011001011 | orange_color_wheel |
| | 011001100 | orange_ryb |
| | 011001101 | orange_web |
| | 011001110 | orange_peel |
| | 011001111 | orange-red |
| | 011010000 | orchid |
| | 011010001 | pale_blue |
| | 011010010 | pale_brown |
| | 011010011 | pale_carmine |
| | 011010100 | pale_chestnut |
| | 011010101 | pale_cornflower_blue |
| | 011010110 | pale_magenta |
| | 011010111 | pale_pink |
| | 011011000 | pale_red_violet |
| | 011011001 | papaya_whip |
| | 011011010 | pastel_green |
| | 011011011 | pastel_pink |
| | 011011100 | peach |
| | 011011101 | peach-orange |
| | 011011110 | peach_yellow |

| | | |
|---|---|---|
| | 011011111 | pear |
| | 011100000 | periwinkle |
| | 011100001 | persian_blue |
| | 011100010 | persian_green |
| | 011100011 | persian_indigo |
| | 011100100 | persian_orange |
| | 011100101 | persian_red |
| | 011100110 | persian_pink |
| | 011100111 | persian_rose |
| | 011101000 | persimmon |
| | 011101001 | pine_green |
| | 011101010 | pink |
| | 011101011 | pink_orange |
| | 011101100 | platinum |
| | 011101101 | plum_web |
| | 011101110 | powder_blue_web |
| | 011101111 | puce |
| | 011110000 | prussian_blue |
| | 011110001 | psychedelic_purple |
| | 011110010 | pumpkin |
| | 011110011 | purple_html/css |
| | 011110100 | purple_x11 |
| | 011110101 | purple_taupe |
| | 011110110 | raw_umber |
| | 011110111 | razzmatazz |
| | 011111000 | red |
| | 011111001 | red_pigment |
| | 011111010 | red_ryb |
| | 011111011 | red-violet |
| | 011111100 | rich_carmine |
| | 011111101 | robin_egg_blue |
| | 011111110 | rose |
| | 011111111 | rose_madder |
| | 100000000 | rose_taupe |
| | 100000001 | royal_blue |
| | 100000010 | royal_purple |
| | 100000011 | ruby |
| | 100000100 | russet |
| | 100000101 | rust |
| | 100000110 | safety_orange_blaze_orange |
| | 100000111 | saffron |

| | | |
|---|---|---|
| | 100001000 | salmon |
| | 100001001 | sandy_brown |
| | 100001010 | sangria |
| | 100001011 | sapphire |
| | 100001100 | scarlet |
| | 100001101 | school_bus_yellow |
| | 100001110 | sea_green |
| | 100001111 | seashell |
| | 100010000 | selective_yellow |
| | 100010001 | sepia |
| | 100010010 | shamrock_green |
| | 100010011 | shocking_pink |
| | 100010100 | silver |
| | 100010101 | sky_blue |
| | 100010110 | slate_grey |
| | 100010111 | smalt_dark_powder_blue |
| | 100011000 | spring_bud |
| | 100011001 | spring_green |
| | 100011010 | steel_blue |
| | 100011011 | tan |
| | 100011100 | tangerine |
| | 100011101 | tangerine_yellow |
| | 100011110 | taupe |
| | 100011111 | tea_green |
| | 100100000 | tea_rose_orange |
| | 100100001 | tea_rose_rose |
| | 100100010 | teal |
| | 100100011 | tenné_tawny |
| | 100100100 | terra_cotta |
| | 100100101 | thistle |
| | 100100110 | tomato |
| | 100100111 | turquoise |
| | 100101000 | tyrian_purple |
| | 100101001 | ultramarine |
| | 100101010 | ultra_pink |
| | 100101011 | united_nation_blue |
| | 100101100 | vegas_gold |
| | 100101101 | vermilion |
| | 100101110 | violet |
| | 100101111 | violet_web |
| | 100110000 | violet_ryb |
| | 100110001 | viridian |
| | 100110010 | wheat |
| | 100110011 | white |
| | 100110100 | wisteria |
| | 100110101 | yellow |
| | 100110110 | yellow_process |
| | 100110111 | yellow_ryb |
| | 100111000 | yellow_green |
| | 100111001 ~ 111111111 | Reserved |
| intensity-value | Describes the intensity of the light effect in terms of illumination in lux. | |
| intensity-range | Describes the domain of the intensity value.<br>EXAMPLE [$10.0^{-5}$ lux, 130.0 klx]. | |

Table 201 shows descriptor components semantics regarding a color type according to example embodiments.

[Table 201]

| Names | Description |
|---|---|
| colorDescChoice | This field which is only present in the binary representation, indicates a choice of the color descriptions. If it is 1 then the color is described by mpe.g7: termReferenceType, otherwise the color is described by colorRGBType. |
| colorRGB | This field, which is only present in the binary representation, describes color in terms of ColorCS Flag in Annex A.2.1 or in terms of colorRGBType. |

Table 202 shows descriptor components semantics regarding a color RGB type according to example embodiments.

[Table 202]

| *Name* | *Definition* |
|---|---|
| colorRGBType | Tool for describing a color as RGB.<br>EXAMPLE #FOFBFF would describe the color Alice blue. |

Table 203 shows an XML representation syntax regarding sensory effect information that is implemented by the flash type sensory device according to example embodiments.

[Table 203]

```
<!-- ################################################ -->
  <!--  SEV Flash type                               -->
  <!-- ################################################ -->
  <complexType name="FlashType">
    <complexContent>
      <extension base="sev:LightType">
        <attribute name="frequency" type="positiveInteger" use="optional"/>
      </extension>
    </complexContent>
  </complexType>
```

Table 204 shows a binary representation syntax regarding the sensory effect information that is implemented by the flash type sensory device according to example embodiments.

[Table 204]

| FlashType { | Number of bits | Mnemonic |
|---|---|---|
| LightBase | | LightType |
| frequencyFlag | 1 | bslbf |
| If(frequencyFlag) { | | |
| frequency | 5 | uimsbf |
| } | | |
| } | | |

Table 204 shows descriptor components semantics regarding the sensory effect information that is implemented by the flash type sensory device according to example embodiments.

[Table 204]

| Names | Description |
|---|---|
| FlashType | Tool for describing a flash effect. |
| LightBase | Describes a base type of a light effect. |
| frequency | Describes the member of flickering in times per second.<br>EXAMPLE The value 10 means it will flicker 10 times for each second. |

The sensory device 730 may further include a temperature type.

Table 205 shows an XML representation syntax regarding sensory effect information that is implemented by the temperature type sensory device according to example embodiments.

[Table 205]

```
<!-- ################################################ -->
  <!--  SEV Temperature type                          -->
  <!-- ################################################ -->
  <complexType name="TemperatureType">
    <complexContent>
      <extension base="sedl:EffectBaseType">
        <attribute name="intensity-value" type="sedl:intensityValueType"
           use="optional"/>
        <attribute name="intensity-range" type="sedl:intensityRangeType"
           use="optional"/>
      </extension>
    </complexContent>
  </complexType>
```

Table 206 shows a binary representation syntax regarding the sensory effect information that is implemented by the temperature type sensory device according to example embodiments.

[Table 206]

| Temperature Type { | Number of bits | Mnemonic |
|---|---|---|
| EffectBase<br>intensityValueFlag | <br>1 | EffectBaseType<br>bslbf |
| intensityRangeFlag | 1 | bslbf |
| if(intensityValueFlag) { | | |
| Intensity Value | 32 | fsbf |
| } | | |
| if(intensityRangeFlag) {<br>Intensity-range | <br>64 | <br>fsbf |
| } | | |
| } | | |

Table 207 shows descriptor components semantics regarding the sensory effect information that is implemented by the temperature type sensory device according to example embodiments.

[Table 207]

| Names | Description |
|---|---|
| TemperatureType | Tool for describing a temperature effect. |

(continued)

| Names | Description |
|---|---|
| EffectBase | Describes a base type of an effect. |
| intensityValueFlag | This field, which is only present in the binary representation, indicates the presence of the intensity Value attribute. If it is 1 then the intensity-value attribute is present, otherwise the intensity-value attribute is not present. |
| intensityRangeFlag | This field, which is only present in the binary representation indicates the presence of the intensityRange attribute. If it is 1 then the intensity range attribute is present. Otherwise the intensity range attribute is not present. |
| intensity-value | Describes the intensity of the light effect in terms of heating/cooling in Celsius. |
| intensity-range | Describes the domain of the intensity value.<br>**EXAMPLE [0.0, 100.0] on the Celsius scale or [32.0, 212.0] on the Fahrenheit scale.** |

Table 208 shows an XML representation syntax regarding sensory effect information that is implemented by the wind type sensory device according to example embodiments.

[Table 208]

```
<!-- ################################################ -->
  <!--  SEV Wind type                                -->
  <!-- ################################################ -->
  <complexType name="WindType">
    <complexContent>
      <extension base="sedl:EffectBaseType">
        <attribute name="intensity-value" type="sedl:intensityValueType"
           use="optional"/>
        <attribute name="intensity-range" type="sedl:intensityRangeType"
           use="optional"/>
      </extension>
    </complexContent>
  </complexType>
```

Table 209 shows a binary representation syntax regarding the sensory effect information that is implemented by the wind type sensory device according to example embodiments.

[Table 209]

| WindType { | **Number of bits** | **Mnemonic** |
|---|---|---|
| EffectBase | | EffectBaseType |
| intensityValueFlag | 1 | bslbf |
| intensityRangeFlag | 1 | bslbf |
| if(intensityValueFlag) { | | |
| Intensity-value | 32 | fsbf |
| } | | |
| if(intensityRangeFlag) { | | |
| Intensity-range | 64 | fsbf |
| } | | |
| } | | |

Table 210 shows descriptor components semantics regarding the sensory effect information that is implemented by the wind type sensory device according to example embodiments.

[Table 210]

| Names | Description |
|---|---|
| WindType | Tool for describing a wind effect. |
| EffectBase | Describes a base type of an effect. |
| intensityValueFlag | This field, which is only present in the binary representation, indicates the presence of the invensity Value attribute. If it is 1 then the intensity-value attribute is present, otherwise the intensity-value attribute is not present. |
| intensityRangeFlag | This field, which is only present in the binary representation indicates the presence of the intensity Range attribute. If it is 1 then the intensity range attribute is present, otherwise the intensity range attribute is not present. |
| intensity-value | Describes the intensity of the light effect in terms of heating/cooling in Celsius. |
| intensity-range | Describes the domain of the intensity value,<br>**EXAMPLE [0.0, 100.0] on the Celsius scale or [32.0, 212.0] on the Fahrenheit scale.** |

Table 211 shows an XML representation syntax regarding sensory effect information that is implemented by the vibration type sensory device according to example embodiments.

[Table 211]

```
<!-- ################################################ -->
  <!--  SEV Vibration type                            -->
  <!-- ################################################ -->
  <complexType name="VibrationType">
    <complexContent>
      <extension base="sedl:EffectBaseType">
        <attribute name="intensity-value" type="sedl:intensityValueType"
          use="optional"/>
        <attribute name="intensity-range" type="sedl:intensityRangeType"
          use="optional"/>
      </extension>
    </complexContent>
  </complexType>
```

Table 212 shows a binary representation syntax regarding the sensory effect information that is implemented by the vibration type sensory device according to example embodiments.

[Table 212]

| VibrationType { | **Number of bits** | **Mnemonic** |
|---|---|---|
| EffectBase intensityValueFlag | 1 | EffectBaseType bslbf |
| intensityRangeFlag | 1 | bslbf |
| if(intensityValueFlag) { | | |
| Intensity value | 32 | fsbf |
| } | | |
| if(intensityRangeFlag) {<br>Intensity-range | 64 | fsbf |
| } | | |
| } | | |

Table 213 shows descriptor components semantics regarding the sensory effect information that is implemented by the vibration type sensory device according to example embodiments.

[Table 213]

| Names | Description |
|---|---|
| VibrationType | Tool for describing a vibration effect. |
| EffectBase | Describes a base type of an effect. |
| intensityValueFlag | The field, which is only present in the binary representation, indicates the presence of the intensity Value attribute. If it is 1 then the intensity-value attribute is present, otherwise the intensity-value attribute is not present. |
| intensityRangeFlag | This field, which is only present in the binary representation, indicates the presence of the intensityRange attribute. If it is 1 then the intensity range attribute is present, otherwise the intensity range attribute is not present. |
| intensity-value | Describes the intensity of the vibration effect in terms of strength according to the Richter scale. |
| intensity-range range | Describes the domain of the intensity value.<br>**EXAMPLE [0.0, 10.0] of the Richter magnitude scale** |

Table 214 shows an XML representation syntax regarding sensory effect information that is implemented by the spraying type sensory device according to example embodiments.

[Table 214]

```
<!-- ################################################ -->
  <!--  Definition of Spraying type                  -->
  <!-- ################################################ -->
  <complexType name="SprayingType">
    <complexContent>
      <extension base="sedl:EffectBaseType">
        <attribute name="intensity-value" type="sedl:intensityValueType"
          use="optional"/>
        <attribute name="intensity-range" type="sedl:intensityRangeType"
          use="optional"/>
        <attribute name="sprayingType" type="mpeg7:termReferenceType"/>
      </extension>
    </complexContent>
  </complexType>
```

Table 215 shows a binary representation syntax regarding the sensory effect information that is implemented by the spraying type sensory device according to example embodiments.

[Table 215]

| SprayingType { | **Number of bits** | **Mnemonic** |
|---|---|---|
| EffectBase | | EffectBaseType |
| intensityValueFlag | 1 | bslbf |
| intensityRangeFlag | 1 | bslbf |
| sprayingType | 2 | bslbf |
| if(intensityValueFlag) { | | |
| Intensity-value | 32 | fsbf |

(continued)

| SprayingType { | Number of bits | Mnemonic |
|---|---|---|
| } | | |
| if(intensityRangeFlag) { | | |
| Intensity-range | 64 | fsbf |
| } | | |
| } | | |

Table 216 shows descriptor components semantics regarding the sensory effect information that is implemented by the spraying type sensory device according to example embodiments.

[Table 216]

| Names | Description |
|---|---|
| SprayingType | Tool for describing a vibration effect. |
| EffectBase | Describes a base type of an effect. |
| intensityValueFlag | This field, which is only present in the binary representation, indicates the presence of the intensityValue attribute. If it is 1 then the intensity-value attribute is present, otherwise the intensity-value attribute is not present. |
| intensityRangeFlag | This field, which is only present in the binary representation, indicates the presence of the intensityRange attribute. If it is 1 then the intensity-range attribute is present, otherwise the intensity-range attribute is not present. |
| sprayingType | Describes the type of the spraying effect as a reference to a classification scheme term. A CS that may be used for this purpose is the SprayingTypeCSFlag in Annex A.2.6.<br><br>In the binary description, the following mapping table is used,<br>spraying: spraying / sprayingType<br>00: water<br>01~11: Reserved |
| intensity-value | Describes the intensity of the spraying effect in terms in ml/h. |
| intensity-range | Describes the domain of the intensity value.<br>EXAMPLE [0.0, 10.0] ml/h. |

Table 217 shows an XML representation syntax regarding sensory effect information that is implemented by the scent type sensory device according to example embodiments.

[Table 217]

```
<!-- ################################################ -->
  <!--  Definition of Scent type                      -->
  <!-- ################################################ -->
  <complexType name="ScentType">
    <complexContent>
      <extension base="sedl:EffectBaseType">
        <attribute name="scent" type="mpeg7:termReferenceType"
          use="optional"/>
        <attribute name="intensity-value" type="sedl:intensityValueType"
           use="optional"/>
        <attribute name="intensity-range" type="sedl:intensityRangeType"
           use="optional"/>
      </extension>
    </complexContent>
  </complexType>
```

Table 218 shows a binary representation syntax regarding the sensory effect information that is implemented by the scent type sensory device according to example embodiments.

[Table 218]

| ScentType { | **Number of bits** | **Mnemonic** |
|---|---|---|
| EffectBase<br>intensityValueFlag | <br>1 | EffectBaseType<br>bslbf |
| intensityRangeFlag | 1 | bslbf |
| scentType | 4 | |
| if(intensityValueFlag) { | | |
| Intensity value | 32 | fsbf |
| }<br>if(intensityRangeFlag) { | | |
| Intensity-range | 64 | fsbf |
| } | | |
| } | | |

Table 219 shows descriptor components semantics regarding the sensory effect information that is implemented by the scent type sensory device according to example embodiments.

[Table 219]

| Names | Description |
|---|---|
| ScentType | Tool for describing a scent effect. |
| EffectBase | Describes a base type of an effect. |
| intensityValueFlag | This field, which is only present in the binary representation, indicates the presence of the intensityValue attribute. If it is 1 then the intensity-value attribute is present, otherwise the intensity-value attribute is not present. |
| intensityRangeFlag | This field, which is only present in the binary representation, indicates the presence of the intensityRange attribute. If it is 1 then the intensity-range attribute is present, otherwise the intensity-range attribute is not present. |
| scent | Describes the scent to use. A CS that may be used for this purpose is the ScentCSFlag in Annex A.2.3.<br><br>In the binary description, the following mapping table is used,<br>scent: 0000 = rose; 0001 = acacia; 0010 = chrysanthemum; 0011 = lilac; 0100 = mint; 0101 = jasmine; 0110 = pine_tree; 0111 = orange; 1000 = grape; 1001~1111 = Reserved |
| intensity-value | Describes the intensity of the scent effect in ml/h |
| intensity-range | Describes the domain of the intensity value.<br>EXAMPLE [0.0, 10.0] ml/h. |

| scent | scentType |
|---|---|
| 0000 | rose |
| 0001 | acacia |
| 0010 | chrysanthemum |
| 0011 | lilac |
| 0100 | mint |
| 0101 | jasmine |
| 0110 | pine_tree |
| 0111 | orange |
| 1000 | grape |
| 1001~1111 | Reserved |

Table 220 shows an XML representation syntax regarding sensory effect information that is implemented by the fog type sensory device according to example embodiments.

[Table 220]

```
<!-- ################################################ -->
<!-- Definition of Fog type                       -->
<!-- ################################################ -->
<complexType name="FogType">
  <complexContent>
    <extension base="sedl:EffectBaseType">
      <attribute name="intensity-value" type="sedl:intensityValueType"
         use="optional"/>
      <attribute name="intensity-range" type="sedl:intensityRangeType"
         use="optional"/>
    </extension>
  </complexContent>
</complexType>
```

Table 221 shows a binary representation syntax regarding the sensory effect information that is implemented by the fog type sensory device according to example embodiments.

[Table 221]

| FogType { | Number of bits | Mnemonic |
|---|---|---|
| EffectBase<br>intensityValueFlag | <br>1 | EffectBaseType<br>bslbf |
| intensityRangeFlag | 1 | bslbf |
| if(intensityValueFlag) { | | |
| Intensity value | 32 | fsbf |
| } | | |
| if(intensityRangeFlag) {<br>Intensity-range | <br>64 | <br>fsbf |
| } | | |
| } | | |

Table 222 shows descriptor components semantics regarding the sensory effect information that is implemented by the fog ype sensory device according to example embodiments.

[Table 222]

| Names | Description |
|---|---|
| FogType | Tool for describing a log effect. |
| EffectBase | Describes a base type of an effect. |
| intensityValueFlag | This Field, which is only present in the binary representation, indicates the present of the intensityValue attribute. If it is 1 then the intensity-value attribute is present, otherwise the intensity-value attribute is not present. |
| intensityRangeFlag | This field, which is only present in the binary representation, indicates the presence of the intensityRange attribute. If it is 1 then the intensity range attribute is present, otherwise the intensity range attribute is not present. |
| intensity-value | Describes the intensity of the fog effect in ml/h. |
| intensity-rangs | Describes the domain of the intensity value. .<br>**EXAMPLE [0.0, 10.0] ml/h.** |

Table 223 shows an XML representation syntax regarding sensory effect information that is implemented by the color correction type sensory device according to example embodiments.

[Table 223]

```
<!-- ################################################ -->
  <!--  Definition of Color Correction type          -->
  <!-- ################################################ -->
  <complexType name="ColorCorrectionType">
    <complexContent>
      <extension base="sedl:EffectBaseType">
        <choice minOccurs="0">
          <element name="SpatioTemporalLocator"
type="mpeg7:SpatioTemporalLocatorType"/>
          <element name="SpatioTemporalMask" type="mpeg7:SpatioTemporalMaskType"/>
        </choice>
        <attribute name="intensity-value" type="sedl:intensityValueType"
          use="optional"/>
        <attribute name="intensity-range" type="sedl:intensityRangeType"
          use="optional" fixed="0 1"/>
      </extension>
    </complexContent>
  </complexType>
```

Table 224 shows a binary representation syntax regarding the sensory effect information that is implemented by the color correction type sensory device according to example embodiments.

[Table 224]

| ColorCorrectionType { | **Number of bits** | **Mnemonic** |
|---|---|---|
| EffectBase | | EffectBaseType |
| intensityValueFlag | 1 | bslbf |
| intensityRangeFlag | 1 | bslbf |
| regionTypeChoice | 1 | bslbf |
| if(regionTypeChoice) { | | |
| SpatioTemporalLocator | | mpeg7: SpatioTemporalLocatorType |
| } | | |
| else{ | | |
| SpatioTemporalMask | | mpeg7:SpatioTemporalMaskType |
| } | | |
| if(intensityValueFlag) { | | |
| Intensity-value | 32 | fsbf |
| } | | |
| if(intensityRangeFlag) { | | |
| Intensity-range | 64 | fsbf |
| } | | |
| } | | |

Table 225 shows descriptor components semantics regarding the sensory effect information that is implemented by the color correction type sensory device according to example embodiments.

[Table 225]

| Names | Description |
|---|---|
| FogType | Tool for describing a log effect. |
| EffectBase | Describes a base type of an effect. |
| IntensityValueFlag | This field, which is only present in the binary representant, indicates the presence of the intensityValue attribute, if it is 1 then the intensity-value attribute is present, otherwise the intensity-value attribute is not present, |
| intensityRangeFlag | This field, which is only present in the binary representation indicates the presence of the intensityRange attribute. If it is 1 then the intensity range attribute is present, otherwise the intensity range attribute is not present. |
| regionTypeChoice | This field, which is only present in the binary representation, specifies the choice of the spatio-temporal region types. If it is 1 then the SpatioTemporalLocator is present, otherwise the SpatioTemporalMask is present. |
| intensity-value | Describes the intensity of the color correction effect in terms of "on" and "off" whith respect to 1(on) and 0(off). |
| intensity-range | Describes the domain of the intensity value i.e., 1 (on) and O.(off). |
| SpatioTemporalLocator | Describes the spatio-temporal localization of the moving region using mpeg/: SpatioTemporalLocatorType (optional), which indicates the regions in a video segment where the color correction effect is applied. The mpeg7 : SpatioTemporalLocatorType is Flag in ISO/IEC 15938-5. |
| SpatioTemporalMask | Describes a spatio-temporal mask that defines the spatio-temporal composition of the moving region (optional), which indicates the masks in a video segment where the color correction effect is applied. The mpeg 7:SpatioTemporalMaskType is Flag in ISO/IEC 15938-5. |

Table 226 shows an XML representation syntax regarding sensory effect information that is implemented by the rigid body motion type sensory device according to example embodiments.

[Table 226]

```
<!-- ################################################ -->
  <!--  Definition of Rigid Body Motion type          -->
  <!-- ################################################ -->
  <complexType name="RigidBodyMotionType">
    <complexContent>
      <extension base="sedl:EffectBaseType">
        <sequence>
          <element name="MoveToward" type="sev:MoveTowardType"
                  minOccurs="0"/>
          <element name="TrajectorySamples" type="mpeg7:FloatMatrixType"
                  minOccurs="0" maxOccurs="unbounded"/>
          <element name="Incline" type="sev:InclineType" minOccurs="0"/>
          <element name="Shake" type="sev:ShakeType" minOccurs="0"/>
          <element name="Wave" type="sev:WaveType" minOccurs="0"/>
          <element name="Spin" type="sev:SpinType" minOccurs="0"/>
          <element name="Turn" type="sev:TurnType" minOccurs="0"/>
          <element name="Collide" type="sev:CollideType" minOccurs="0"/>
        </sequence>
      </extension>
    </complexContent>
  </complexType>

  <!-- ################################################ -->
  <!--  Definition of Move Toward type                -->
  <!-- ################################################ -->
  <complexType name="MoveTowardType">
    <choice minOccurs="0">
      <element name="Speed" type="float"/>
      <element name="Acceleration" type="float"/>
    </choice>
    <attribute name="directionV" type="MoveTowardAngleType" use="optional"
default="0"/>
    <attribute name="directionH" type="MoveTowardAngleType" use="optional"
default="0"/>
    <attribute name="distance" type="float" use="optional"/>
  </complexType>

  <!-- ################################################ -->
```

```
  <!--  Definition of Incline type                        -->
  <!-- ################################################ -->
  <complexType name="InclineType">
    <sequence>
      <choice minOccurs="0">
        <element name="PitchSpeed" type="float"/>
        <element name="PitchAcceleration" type="float"/>
      </choice>
      <choice minOccurs="0">
        <element name="rollSpeed" type="float"/>
        <element name="rollAcceleration" type="float"/>
      </choice>
      <choice minOccurs="0">
        <element name="yawSpeed" type="float"/>
        <element name="yawAcceleration" type="float"/>
      </choice>
    </sequence>
    <attribute name="pitch" type="sev:InclineAngleType" use="optional"
default="0"/>
    <attribute name="roll" type="sev:InclineAngleType" use="optional" default="0"/>
    <attribute name="yaw" type="sev:InclineAngleType" use="optional" default="0"/>
  </complexType>

  <!-- ################################################ -->
  <!--  Definition of Shake type                          -->
  <!-- ################################################ -->
  <complexType name="ShakeType">
    <attribute name="direction" type="mpeg7:termReferenceType"
            use="optional"/>
    <attribute name="count" type="float" use="optional"/>
    <attribute name="distance" type="float" use="optional"/>
  </complexType>

  <!-- ################################################ -->
  <!--  Definition of Wave type                           -->
  <!-- ################################################ -->
  <complexType name="WaveType">
    <attribute name="direction" type="mpeg7:termReferenceType"
            use="optional"/>
    <attribute name="startDirection" type="mpeg7:termReferenceType"
            use="optional"/>
    <attribute name="count" type="float" use="optional"/>
```

```
  <attribute name="distance" type="float" use="optional"/>
</complexType>

<!-- ################################################ -->
<!--  Definition of Spin type                       -->
<!-- ################################################ -->
<complexType name="SpinType">
  <attribute name="direction" type="mpeg7:termReferenceType"
          use="optional"/>
  <attribute name="count" type="float" use="optional"/>
</complexType>

<!-- ################################################ -->
<!--  Definition of Turn type                       -->
<!-- ################################################ -->
<complexType name="TurnType">
  <attribute name="direction" type="sev:TurnAngleType" use="optional"/>
  <attribute name="speed" type="float" use="optional"/>
</complexType>

<!-- ################################################ -->
<!--  Definition of Collide type                     -->
<!-- ################################################ -->
<complexType name="CollideType">
  <attribute name="directionH" type="sev:MoveTowardAngleType"
          use="optional" default="0"/>
  <attribute name="directionV" type="sev:MoveTowardAngleType"
          use="optional" default="0"/>
  <attribute name="speed" type="float" use="optional"/>
</complexType>

<!-- ################################################ -->
<!--  Definition of Rigid Body Motion base type      -->
<!-- ################################################ -->
<simpleType name="TurnAngleType">
  <restriction base="integer">
    <minInclusive value="-180"/>
    <maxInclusive value="180"/>
  </restriction>
</simpleType>
<simpleType name="InclineAngleType">
  <restriction base="integer">
    <minInclusive value="-359"/>
    <maxInclusive value="359"/>
  </restriction>
</simpleType>
<simpleType name="MoveTowardAngleType">
  <restriction base="integer">
    <minInclusive value="0"/>
    <maxInclusive value="359"/>
  </restriction>
</simpleType>
```

Table 227 shows a binary representation syntax regarding the sensory effect information that is implemented by the rigid body motion type sensory device according to example embodiments.

[Table 227]

| RigidBodyMotionType { | Number of bits | Mnemonic |
|---|---|---|
| EffectBase | | EffectBaseType |
| MoveTowardFlag | 1 | bslbf |
| TrajectorySamplesFlag | 1 | bslbf |
| IncfineFlag | 1 | bslbf |
| ShakeFlag | 1 | bslbf |
| WaveFlag | 1 | bslbf |
| SpinFlag | 1 | bslbf |
| TurnFlag | 1 | bslbf |
| CollideFlag | 1 | bslbf |
| NumOfTrajSamples | 32 | uimsbf |
| Dimension | 8 | uimsbf |
| if(MoveTowardFlag) { | | |
| MoveToward | | MoveTowardType |
| } | | |
| if(MoveTowardFlag) { | | |
| for(j=0;j< NumOfTrajSamples;j++) { | | |
| TrajectorySamples[j]; | Dimension*32 | fsbf |
| }<br>} | | |
| if(InclineFlag) { | | |
| Incline | | InclineType |
| } | | |
| if(ShakeFlag) { | | |
| Shake<br>} | | ShakeType |
| if(WaveFlag) { | | |
| Wave | | WaveType |
| } | | |
| if(Spinflag) { | | |
| Spin | | SpinType |
| } | | |
| if(TurnFlag) { | | |
| Turn<br>} | | TurnType |
| if(CollideFlag) { | | |
| Collide<br>} | | CollideType |
| } | | |

(continued)

| RigidBodyMotionType { | **Number of bits** | **Mnemonic** |
|---|---|---|
| | | |
| MoveTowardType { | **Number of bits** | **Mnemonic** |
| moveTowardInfoChoice | 1 | bslbf |
| distanceFlag | 1 | bslbf |
| if(moveTowardInfochoice) { | | |
| Speed | 32 | fsbf |
| } | | |
| else{ | | |
| Acceleration | 32 | fsbf |
| } | | |
| directionV | 9 | uimsbf |
| direction | 9 | uimsbf |
| if(distanceFlag) { | | |
| distance | 32 | fsbf |
| } | | |
| } | | |
| | | |
| InclineType { | **Number of bits** | **Mnemonic** |
| pitchInfochoice | 1 | bslbf |
| rollInfoChoice<br>yawInfoChoice | 1<br>1 | bslbf<br>bslbf |
| if(pitchInfoChoice) { | | |
| PitchSpeed | 32 | fsbf |
| } | | |
| else{ | | |
| PitchAcceleration<br>} | 32 | fsbf |
| if(rollInfoChoice) { | | |
| RollSpeed | 32 | fsbf |
| } | | |
| else{ | | |
| RollAcceleration<br>} | 32 | fsbf |
| if(yawInfoChoice) { | | |
| YawSpeed | 32 | fsbf |
| } | | |
| else{ | | |

(continued)

| InclineType { | **Number of bits** | **Mnemonic** |
|---|---|---|
| YawAcceleration<br>} | 32 | fsbf |
| Pitch | 10 | simsbf |
| Roll | 10 | simsbf |
| Yaw | 10 | simsbf |
| } | | |
| | | |
| ShakeType { | **Number of bits** | **Mnemonic** |
| directionFlag | 1 | bslbf |
| countFlag | 1 | bslbf |
| distanceFlag | 1 | bslbf |
| if(directionFlag) { | | |
| direction | 2 | bslbf |
| } | | |
| if(countflag) { | | |
| count | 32 | fsbf |
| } | | |
| if(distanceFlag) { | | |
| distance | 32 | fsbf |
| } | | |
| } | | |
| | | |
| WaveType { | **Number of bits** | **Mnemonic** |
| directionFlag | 1 | bslbf |
| startDirectionFlag | 1 | bslbf |
| countFlag | 1 | bslbf |
| distanceFlag | 1 | bslbf |
| if(directionFlag) { | | |
| direction<br>} | 2 | bslbf |
| if(startDirectionFlag) { | | |
| startDirection | 2 | bslbf |
| } | | |
| If(countFlag) { | | |
| count<br>} | 32 | fsbf |

(continued)

| WaveType { | Number of bits | Mnemonic |
|---|---|---|
| if(distanceFlag) { | | |
| distance<br>} | 32 | fsbf |
| } | | |
| | | |
| SpinType { | Number of bits | Mnemonic |
| directionFlag | 1 | bslbf |
| countFlag<br>if(directionFlag) { | 1 | bslbf |
| direction | 3 | bslbf |
| } | | |
| if(countFlag) {<br>count | 32 | fsbf |
| } | | |
| } | | |
| | | |
| TurnType { | Number of bits | Mnemonic |
| directionFlag | 1 | bslbf |
| speedFlag | 1 | bslbf |
| if(directionFlag) { | | |
| direction | 9 | simsbf |
| } | | |
| if(speedFlag) { | | |
| speed | 32 | fsbf |
| } | | |
| } | | |
| | | |
| CollideType { | Number of bits | Mnemonic |
| speedFlag | 1 | bslbf |
| directionV | 9 | uimsbf |
| directionH | 9 | uimsbf |
| if(speedflag) { | | |
| speed | 32 | fsbf |
| }<br>} | | |

Table 228 shows descriptor components semantics regarding the sensory effect information that is implemented by the rigid body motion type sensory device according to example embodiments.

[Table 228]

| Names | Description |
|---|---|
| RigidBodyMotionType | Tool for describing a rigid body motion effect. |
| EffectBase | Describes a base type of an effect. |
| MoveTowardFlag | This field, which is only present in the binary representation, indicates the presence of the MoveToward element. If it is 1 then the MoveToward element is present, otherwise the MoveToward element is not present. |
| TrajectorySamplesFlag | This field, which is only present in the binary representation, indicates the presence of the TrajectorySamples element. If it is 1 then the TrajectorySamples are present, otherwise the TrajectorySamples are not present. |
| InclineFlag | This field, which is only present in the binary representation, indicates the presence of the Incline element. If it is 1 then the Incline element is present, otherwise the Incline element is not present. |
| ShakeFlag | This field, which is only present in the binary representation, indicates the presence of the Shake element. If it is 1 then the Shake element is present, otherwise the Shake element is not present. |
| WaveFlag | This field, which is only present in the binary representation, indicates the presence of the Wave element. If it is 1 then the Wave element is present, otherwise the Wave element is not present. |
| SpinFlag | This field, which is only present in the binary representation, indicates the presence of the Spin element. If it is 1 then the Spin element is present, otherwise the Spin element is not present. |
| TurnFlag | This field, which is only present in the binary representation, indicates the presence of the Turn element. If it is 1 then the Turn element is present, otherwise the Turn element is not present. |
| CollideFlag | This field, which is only present in the binary representation, indicates the presence of the Collide element. If it is 1 then the Collide element is present, otherwise the Collide element is not present. |
| NumOfTrajSamples | This field, which is only present in the binary representation, specifies the number of trajectory sample instances accommodated in the rigid body motion. |
| Dimension | This field, which is only present in the binary representation, specifies the number of coordinate element accommodated in a trajectory sample instance.<br>EXAMPLE if the Dimension is 3, a trajectory sample instance is composed of 3 coordinate values such as 15.0 0 20.0. |
| MoveTorward | This pattern covers three dimensional movement of 6DoF (cf. Figure 3), which means changing the location without rotation. The type is sev:MoveTorwardType. |

| | |
|---|---|
| | 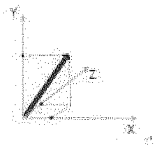  Figure 3 — MoveTorward pattern. |
| TrajectorySamples | This pattern describes a set of position and orientation samples that the rigid body will follow (cf. Figure 4). The type is [redacted]. 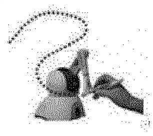 Figure 4 — TrajectorySamples pattern. |
| Incline | This pattern covers pitching, yawing, and rolling motion of 6 DoF, which means changing the rotation without changing the location (cf. Figure 5). The type is sev:InclineType. 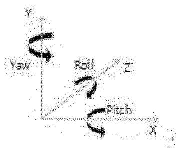  Figure 5 — Incline pattern. |
| Shake | This pattern is a continuous motion moving from one side to opposite side repeatedly (cf. Figure 6). This is an abstracted motion pattern which can be alternatively expressed by repetition of Move pattern. The type is sev:ShakeType. 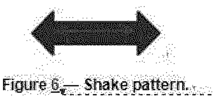 Figure 6 — Shake pattern. |

| | |
|---|---|
| | 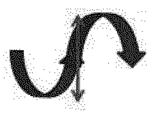 Figure 7 — Wave pattern. |
| Spin | This pattern is a continuous turning based on a central point inside without change the place (cf. Figure 8). This is an abstracted motion pattern which can be alternatively expressed by repetition of yawing of Incline pattern. The type is sev:SpinType 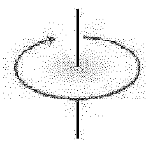 Figure 8 — Spin pattern. |
| Turn | This pattern is a motion of moving towards some direction (cf. Figure 9). This is an abstracted motion pattern which can be alternatively expressed by repetition of Move and Incline pattern. The type is sev:TurnType. 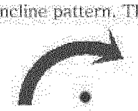 Figure 9 — Turn pattern. |

Table 229 shows descriptor components semantics regarding the move toward type according to example embodiments.

[Table 229]

| **Names** | **Description** |
|---|---|
| moveTowardInfoChoice | This field, which is only present in the binary representation specifies the choise of the moveToward characterics. If it is 1 then the Speed element is present, otherwise the Acceleration element is present |
| distanceFlag | This field, which is only present in the binary representation, indicates the presence of the distance attribute. If it is 1 then the distance attribute is present, otherwise the distance attribute is not present. |
| Speed | Describes the moving speed in terms of centimeter per second. |
| Acceleration | Describes the acceleration in terms of centimeter per square second. |
| direction H | Describes the horizontal direction of moving in terms of angle. The type is sev:MoveTowardAngleType. The angle starts from the front-center of the rigid body and increases turning right as depicted in Figure 19.<br>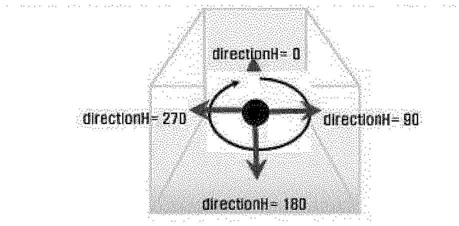<br><br>**Figure 10 — Horizontal direction model for MoveTaoward pattern.** |
| directionV | Describes the vertical direction of moving in terms of angle. The type is sev:MoveTowardAngleType. The angle starts from the front-center of the rigid body and increases turning up as depicted in Figure 20.<br>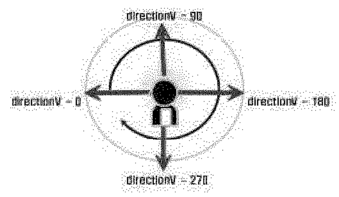<br><br>**Figure 11 — Vertical direction model for MoveToward pattern.** |
| distance | Describes the distance between the origin and destination in terms of centimeter. |

Table 230 shows descriptor components semantics regarding the incline type according to example embodiments.

[Table 230]

| **Names** | **Description** |
|---|---|
| pitchInfoChoice | This field, which is only present in the binary representation, specifies the choise of the pitch characteries. If it is 1 then the PitchSpeed element is present, otherwise the PitchAcceleration element is present |
| rollInfoChoice | This field, which is only present in the binary representation, specifies the choise of the roll characteries. If it is 1 then the RollSpeed element is present, otherwise the RollAcceleration element is present |

(continued)

| Names | Description |
|---|---|
| yawInfoChoice | This field, which is only present in the binary representation, specifies the choice of the yaw characterics. If it is 1 then the YawSpeed element is present, otherwise the YawAcceleration element is present |
| PitchSpeed | Describes the rotation speed based on X axis in terms of degree per second. |
| PitchAcceleration | Describes the acceleration based on X-axis in terms of degree per square second. |
| RollSpeed | Describes the rotation speed based on Z-axis in terms of degree per second. |
| RollAcceleration | Describes the acceleration based on Z axis in terms of degree per square second. |
| | Describes the rotation speed based on Y-axis in terms of degree per second. |
| YawAcceleration | Describes the acceleration based on Y-axis in terms of degree per square second. |
| pitch | Describes the rotation based on X axis in terms of angle. Positive value means the rotation angle in the direction of pitch arrow as depicted in the Figure 12.<br>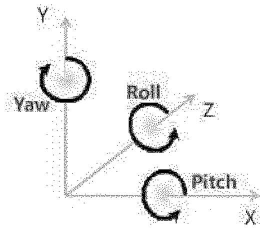<br><br>Figure 12 — Direction model for Incline pattern. |
| roll | Describes the rotation based on Z axis in terms of angle. Positive value means the rotation angle in the direction of roll arrow as depicted in the Figure 12. |
| yaw | Describes the rotation based on Y-axis in terms of angle. Positive value means the rotation angle in the direction of yaw arrow as depicted in the |
| | Figure 12. |

Table 231 shows descriptor components semantics regarding the shake type according to example embodiments.

[Table 231]

<table>
<tr><td></td><td>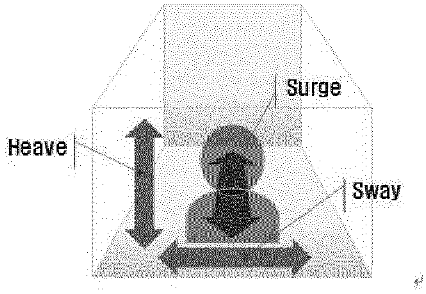

Figure 15 — Direction model for Shake pattern.<br>
In the binary description, the following mapping table is used,
<table>
<tr><th>Shake direction</th><th>direction</th></tr>
<tr><td>00</td><td>heave</td></tr>
<tr><td>01</td><td>sway</td></tr>
<tr><td>10</td><td>surge</td></tr>
<tr><td>11</td><td>Reserved</td></tr>
</table></td></tr>
<tr><td>count</td><td>Describes the times to shake during the durationtime.</td></tr>
<tr><td>distance</td><td>Describes the distance between the two ends of the shaking motion in terms of centimeter (cf. Figure 16).
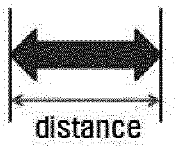

Figure 16 — Distance for shaking motion.</td></tr>
</table>

Table 232 shows descriptor components semantics regarding the wave type according to example embodiments.

[Table 232]

<table>
<tr><th>Names</th><th>Description</th></tr>
<tr><td>directionFlag</td><td>This field, which is only present in the binary representation, indicates the presence of the direction attribute. If it is 1 then the direction attribute is present, otherwise the direction attribute is not present.</td></tr>
<tr><td>startDirectionFlag</td><td>This field, which is only present in the binary representation, indicates the presence of the startDirection attribute. If it is 1 then the startDirection attribute is present, otherwise the startDirection attribute is not present.</td></tr>
<tr><td>countFlag</td><td>This field, which is only present in the binary representation, indicates the presence of the count attribute. If it is 1 then the count attribute is present, otherwise the count attribute is not present.</td></tr>
<tr><td>distanceFlag</td><td>This field, which is only present in the binary representation, indicates the presence of the distance attribute. If it is 1 then the distance attribute is present, otherwise the distance attribute is not present.</td></tr>
<tr><td>direction</td><td>Describes the direction of the wave motion (cf. Figure 17). A CS that may be used for this purpose is the WaveDirectionCS Flag in Annex A.2.8.<br>
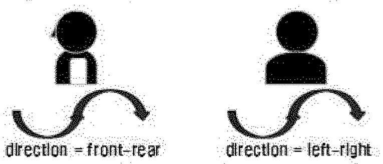

<br>Figure 17 — Direction for waving motion.<br>
In the binary description, the following mapping table is used,
<table>
<tr><th>wave direction</th><th>direction</th></tr>
<tr><td>00</td><td>left_right</td></tr>
<tr><td>01</td><td>front _rear</td></tr>
</table>
</td></tr>
</table>

<table>
<tr><td></td><td><table><tr><td>10~11</td><td>Reserved</td></tr></table></td></tr>
<tr><td>startDirection</td><td>Describes whether it starts towards up direction or down direction (cf. Figure 18). A CS that may be used for this purpose is the WaveStartDirectionCS Flag in Annex A.2.9.<br>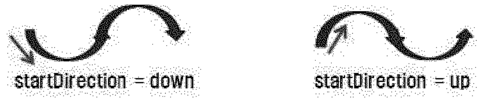<br><br>Figure 18 — Start direction for waving motion.<br><br>In the binary description, the following mapping table is used,<table><tr><th>wave<br>start direction</th><th>direction</th></tr><tr><td>00</td><td>up</td></tr><tr><td>01</td><td>down</td></tr><tr><td>10~11</td><td>Reserved</td></tr></table></td></tr>
<tr><td>count</td><td>Describes the times to wave during the duration time.</td></tr>
<tr><td>distance</td><td>Describes the distance between the top and the bottom of the wave motion in centimeter (cf. Figure 19).<br>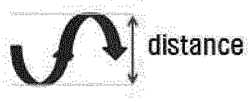<br><br>Figure 19 — Distance for waving motion.</td></tr>
</table>

Table 233 shows descriptor components semantics regarding the spin type according to example embodiments.

[Table 233]

<table>
<tr><th>Names</th><th>Description</th></tr>
<tr><td>directionFlag</td><td>This field, which is only present in the binary representation, indicates the presence of the direction attribute. If it is 1 then the direction attribute is present, otherwise the direction attribute is not present.</td></tr>
<tr><td>countFlag</td><td>This field, which is only present in the binary representation, indicates the presence of the count attribute. If it is 1 then the count attribute is present, otherwise the count attribute is not present.</td></tr>
<tr><td>direction</td><td>Describes the direction of the spinning based on the 3 axes. A CS that may be used for this purpose is the SpinDirectionCSFlag in Annex A.2.5.<br>NOTE 1 Forward-spin based on x axis (which is "xf" in the classification scheme) indicates the spinning direction by the pitch arrow depicted in the Figure 2. Otherwise, backward-spin based on x axis (which is "xb" in the classification scheme) indicates the opposite spinning direction of "xf".<br><br>In the binary description, the following mapping table is used,<table><tr><th>spin direction</th><th>direction</th></tr><tr><td>000</td><td>xf</td></tr><tr><td>001</td><td>xb</td></tr><tr><td>010</td><td>yf</td></tr><tr><td>011</td><td>yb</td></tr><tr><td>100</td><td>zf</td></tr><tr><td>101</td><td>zb</td></tr><tr><td>110~111</td><td>Reserved</td></tr></table></td></tr>
<tr><td>count</td><td>Describes the times to spin during the duration time.</td></tr>
</table>

Table 234 shows descriptor components semantics regarding the turn type according to example embodiments.

[Table 234]

<table>
<tr><th>Names</th><th>Description</th></tr>
<tr><td>directionFlag</td><td>This field, which is only present in the binary representation, indicates the presence of the direction attribute. If it is 1 then the direction attribute is present, otherwise the direction attribute is not present.</td></tr>
<tr><td>speedFlage</td><td>This field, which is only present in the binary representation, indicates the presence of the speed attribute. If it is 1 then the speed attribute is present, otherwise the speed attribute is not present.</td></tr>
<tr><td>direction</td><td>Describes the turning direction in terms of angle. The type is</td></tr>
<tr><td colspan="2"></td></tr>
<tr><td><br>speed</td><td>sev:TurnAngleType. (cf. Figure 20).<br>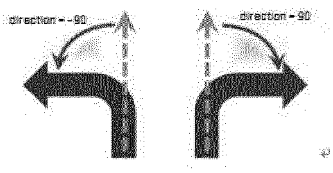<br><br>Figure 20 — Direction for turn pattern.<br>Describes the turning speed in degree per second.</td></tr>
</table>

Table 235 shows descriptor components semantics regarding the collide type according to example embodiments.

[Table 235]

| Names | Description |
|---|---|
| speedFlag | This field, which is only present in the binary representation, indicates the presence of the speed attribute. If it is 1 then the speed attribute is present, otherwise the speed attribute is not present. |
| directionH | Describes the horizontal direction of receiving impact in terms of angle. The type is sev:MoveTowardAngleType. The angle starts from the front-center of the rigid body and increases turning right as depicted in Figure 21.<br>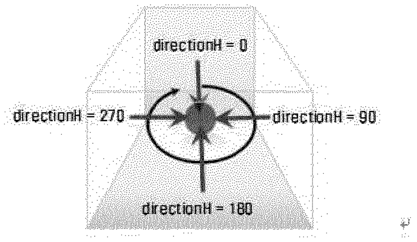<br>**Figure 21 — Horizontal direction model for collide pattern.** |
| directionV | Describes the vertical direction of receiving impact in terms of angle. The type is sev:TowarAngleType. The angle starts from the front-center of rigid body and increases turning up as depicted in Figure 22.<br>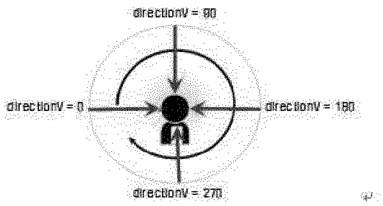<br>**Figure 22 — Vertical direction model for collide pattern.** |
| speed | Describes the speed of colliding object in terms of centimeter per second. |

The kinesthetic type sensory device may include a passive kinesthetic motion type, a passive kinesthetic force type, and an active kinesthetic type.

Table 236 shows an XML representation syntax regarding sensory effect information that is implemented by the passive kinesthetic motion type sensory device according to example embodiments.

[Table 236]

```
<!-- ################################################ -->
  <!--  SEV Passive Kinesthetic Motion type          -->
  <!-- ################################################ -->
  <complexType name="PassiveKinestheticMotionType">
    <complexContent>
      <extension base="sev:RigidBodyMotionType">
        <attribute name="updateRate" type="positiveInteger" use="required"/>
      </extension>
    </complexContent>
  </complexType>
```

Table 237 shows a binary representation syntax regarding the sensory effect information that is implemented by the passive kinesthetic motion type sensory device according to example embodiments.

[Table 237]

| PassiveKinestheticMotionType { | **Number of bits** | **Mnemonic** |
|---|---|---|
| RigidBodyMotion | | RigidBodyMotionType |

(continued)

| PassiveKinestheticMotionType { | **Number of bits** | **Mnemonic** |
|---|---|---|
| updateRate | 16 | uimsbf |
| } | | |

Table 238 shows descriptor components semantics regarding the sensory effect information that is implemented by the passive kinesthetic motion type sensory device according to example embodiments.

[Table 238]

| **Names** | **Description** |
|---|---|
| PassiveKinesheticMotionType | Tool for describing a passive kinesthetic motion effect. This type defines a passive kinesthetic motion mode. In this mode, a user holds the kinesthetic device softly and the kinesthetic device guides the user's hand according to the recorded motion trajectories that are specified by three positions and three orientations. |
| TrajectorySamples | Tool for describing a passive kinesthetic interaction. The passive kinesthetic motion data is comprised with 6 by m matrix, where 6 rows constain three positions (Px, Py, Pz in millimeters) and three orientations (Ox, Oy, Oz in degrees). These six data are updated with the same updaterate. |
| updateRate | Describes a number of data update times per second.<br>EXAMPLE The value 20 means the kinesthetic device will move to 20 different positions and orientations for each second. |

Table 238-2 shows an XML representation syntax regarding sensory effect information that is implemented by the passive kinesthetic force type sensory device according to example embodiments.

[Table 238-2]

```
<!-- ################################################ -->
<!--  SEV Passive Kinesthetic Force type            -->
<!-- ################################################ -->
<complexType name="PassiveKinestheticForceType">
  <complexContent>
    <extension base="sedl:EffectBaseType">
      <sequence>
        <element name="[redacted]assive[redacted]inesthetic[redacted]orce"
                 type="mpeg7:FloatMatrixType"/>
      </sequence>
      <attribute name="update[redacted]ate" type="positiveInteger" use="required"/>
    </extension>
  </complexContent>
</complexType>
```

Table 238-3 shows a binary representation syntax regarding the sensory effect information that is implemented by the passive kinesthetic force type sensory device according to example embodiments.

[Table 238-3]

| PassiveKinestheticForceType { | **Number of bits** | **Mnemonic** |
|---|---|---|
| EffectBase | | EffectBaseType |
| PassiveKinestheticForce | 6*3*32 | fsbf |
| updateRate | 16 | uimsbf |

(continued)

| PassiveKinestheticForceType { | **Number of bits** | **Mnemonic** |
|---|---|---|
| } | | |

Table 238-4 shows descriptor components semantics regarding the sensory effect information that is implemented by the passive kinesthetic force type sensory device according to example embodiments.

[Table 238-4]

| **Names** | **Description** |
|---|---|
| EffectBase | Describes a base type of an effect. |
| PassiveKinestheticForceType | Tool for describing a passive kinesthetic force/torque effect. This type defines a passive kinesthetic force/torque mode. In this mode, a user holds the kinesthetic device softly and the kinesthetic device guides the user's hand according to the recorded force/toque histories. |
| PassiveKinestheticForce | Describes a passive kinesthetic force/torque sensation. The passive kinesthetic force/torque data are comprised with 6 by m matrix, where 6 rows contain three forces (Fx, Fy, Fz in Newton) and three torques (Tx, Ty, Tz in Newton-millimeter) for force/torque trajectories. These six data are updated with the same updaterate. |
| updateRate | Describes a number of data update times per second. |

Table 239 shows an XML representation syntax regarding sensory effect information that is implemented by the active kinesthetic type sensory device according to example embodiments.

[Table 239]

```
<!-- ################################################ -->
  <!-- SEV Active Kinesthetic type                  -->
  <!-- ################################################ -->
  <complexType name="ActiveKinestheticType">
    <complexContent>
      <extension base="sedl:EffectBaseType">
        <sequence>
          <element name="[redacted]ctive[redacted]inesthetic"
                type="sev:ActiveKinestheticForceType"/>
        </sequence>
      </extension>
    </complexContent>
  </complexType>
  <complexType name="ActiveKinestheticForceType">
    <attribute name="[redacted]x" type="float"/>
    <attribute name="[redacted]y" type="float"/>
    <attribute name="[redacted]z" type="float"/>
    <attribute name="[redacted]x" type="float" use="optional"/>
    <attribute name="[redacted]y" type="float" use="optional"/>
    <attribute name="[redacted]z" type="float" use="optional"/>
  </complexType>
```

Table 240 shows a binary representation syntax regarding the sensory effect information that is implemented by the active kinesthetic type sensory device according to example embodiments.

[Table 240]

| PassiveKinestheticForceType { | Number of bits | Mnemonic |
|---|---|---|
| EffectBase | | EffectBaseType |
| ActiveKinesthetic | | ActiveKinestheticForceType |
| } | | |
| | | |
| ActiveKinestheticType { | **Number of bits** | **Mnemonic** |
| txFlag | 1 | bslbf |
| tyFlag | 1 | bslbf |
| tzFlag | 1 | bslbf |
| fx | 32 | fsbf |
| fy | 32 | fsbf |
| fz | 32 | fsbf |
| if(txFlag) { | | |
| tx | 32 | fsbf |
| } | | |
| if(tyFlag) { | | |
| ty | 32 | fsbf |
| } | | |
| if(tzFlag) {<br>tz | 32 | fsbf |
| } | | |
| } | | |

Table 241 shows descriptor components semantics regarding the sensory effect information that is implemented by the active kinesthetic type sensory device according to example embodiments.

[Table 241]

| Names | Description |
|---|---|
| EffectBase | Describes a base type or an effect |
| ActiveKinestheticType | Tool for describing an active kinesthetic effect. This type defines an active kinesthetic interaction mode. In this mode, when a user touches an object by his/her will, then the computed contact forces and torques are provided. |
| ActiveKinestheticForceType | Describes three forces (Fx, Fy, Fz) and torques (Tx, Ty, Tz) for each axis in an active kinesthetic mode. Force is represented in the unit of N(Newton) and torque is represented in the unit of Nmm(Newton-millimeter). |
| activekinesthetic | Tool for describing an active kinesthetic interaction. |
| txFlag | This field, which is only present in the binary representation. indicates the presence of the tx attribute. If it is 1 then the tx attribute is present, otherwise the tx attribute is not present. |
| tyFlag | This field, which is only present in the binary representation, indicates the presence of the ty attribute. If it is 1 then the ty attribute is present, otherwise the ty attribute is not present. |

(continued)

| Names | Description |
|---|---|
| tzFlag | This field, which is only present in the binary representation, indicates the presence of the tz attribute. If it is 1 then the tz attribute is present, otherwise the tz attribute is not present. |

Table 242 shows an XML representation syntax regarding sensory effect information that is implemented by the tactile type sensory device according to example embodiments.

[Table 242]

```
<!-- ################################################ -->
  <!--  SEV Tactile type                           -->
  <!-- ################################################ -->
  <complexType name="TactileType">
    <complexContent>
      <extension base="sedl:EffectBaseType">
        <sequence>
          <choice>
            <element name="ArrayIntensity" type="mpeg7:FloatMatrixType"/>
            <element name="TactileVideo" type="anyURI"/>
          </choice>
        </sequence>
        <attribute name="tactileEffect" type="mpeg7:termReferenceType"
use="optional"/>
        <attribute name="update[redacted]ate" type="positiveInteger" use="optional"/>
      </extension>
    </complexContent>
  </complexType>
```

Table 243 shows a binary representation syntax regarding the sensory effect information that is implemented by the tactile type sensory device according to example embodiments.

[Table 243]

| Tactile effect { | Number of bits | Mnemonic |
|---|---|---|
| EffectBase | | EffectBaseType |
| tactileSourceChoice | 1 | bslbf |
| tactileEffectFlag | 1 | bslbf |
| updataRateFlag | 1 | bslbf |
| if (tactileSourceChoice) { | | |
| dimX | 16 | uimsbf |
| dimY | 16 | uimsbf |
| ArrayIntensity | dimX*dimY*32 | fsbf |
| } | | |
| else{ | | |
| TactileVideoLength | | vluimsbf5 |
| TactileVideo | 8*TactileVideoLength | bslbf |
| } | | |

(continued)

| Tactile effect { | Number of bits | Mnemonic |
|---|---|---|
| if(tactileEffectFlag){ | | |
| tactileEffect | 3 | bslbf |
| } | | |
| if(tactileRateFlag){ | | |
| updateRate<br>} | 16 | uimsbf |
| } | | |

Table 244 shows descriptor components semantics regarding the sensory effect information that is implemented by the tactile sensory device according to example embodiments.

[Table 244]

<table>
<tr><th>Names</th><th>Description</th></tr>
<tr><td>EffectBase</td><td>Describes a base type of an effect.</td></tr>
<tr><td>TactileType</td><td>Tool for describing a tactile effect. Tactile effects can provide vibrations, pressures, temperature, etc, directly onto some areas of human skin through many types of actuators such as vibration motors, air-jets, piezo-actuators, thermal actuators. A tactile effect may effectively be represented by an ArrayIntensity or by a TactileVideo, all of which can be composed of m by n matrix that is mapped to m by n actuators in a tactile device. A Tactile Video is Flag as a grayscale video formed with m-by-n pixels matched to the m-by-n tactile actuator array.</td></tr>
<tr><td>ArrayIntensity</td><td>Describes intensities in terms of physical quantities for all elements of m by n matrix of the tactile actuators. For temperature tactile effect, for example, intensity is specified in the unit of Celsius. For vibration tactile effect, intensity is specified in the unit of mm (amplitude). For pressure tactile effect, intensity is specified in the unit of Newton/$mm^2$.</td></tr>
<tr><td>TactileVideo</td><td>Describes intensities in terms of grayscale(0-255) video of tactile information. This grayscale value(0-255) can be divided into several levels according to the number of levels that a device produces.</td></tr>
<tr><td>[redacted]</td><td>[redacted]<br>In the binary description, the following mapping table is used,
<table>
<tr><th>TactileEffect</th><th>TactileEffectType</th></tr>
<tr><td>000</td><td>vibration</td></tr>
<tr><td>001</td><td>temperature</td></tr>
<tr><td>010</td><td>pressure</td></tr>
<tr><td>011~111</td><td>Reserved</td></tr>
</table></td></tr>
<tr><td>updateRate</td><td>Describes a number of data update times per second.</td></tr>
<tr><td>updateRate</td><td>Describes a number of data update times per second.</td></tr>
<tr><td>tactileSourceChoice</td><td>This field, which is only present in the binary representation, specifies the choice of the tectile effect source. If it is 1 then the ArrayIntensity is present, otherwise the TactileVideo is present.</td></tr>
<tr><td>tactileEffectFlag</td><td>This field, which is only present in the binary representation, indicates the presence of the tactileEffect attribute. If it is 1 then the tactileEffect attribute is present, otherwise the tactileEffect attribute is not present.</td></tr>
<tr><td>updateRateFlag</td><td>This field, which is only present in the binary representation, indicates the presence of the updateRate attribute. If it is 1 then the updateRate attribute is present, otherwise the updateRate attribute is not present.</td></tr>
<tr><td>dimX</td><td>This field, which is only present in the binary representation, specifies the x-direction size of ArrayIntensity.</td></tr>
<tr><td>dimY</td><td>This field, which is only present in the binary representation, specifies the y-direction size of ArrayIntensity.</td></tr>
</table>

Table 245 shows mnemonics according to example embodiments.

[Table 245]

| | |
|---|---|
| bslbf | Bit string, left bit first, where "left" is the order in which bits are written in ISO/IEC 15938-3. Hit strings are generally written as a string of 1s and 0s within single quote marks, e.g. ’1000 0001’. Blanks within a bit string are for ease of reading and have no significance. For convenience, large strings are occasionally written in hexadecimal, in which case conversion to a binary in the conventional manner will yield the value of the bit string. Thus, the left-most hexadecimal digit is first and in each hexadecimal digit the most significant of the four digits is first. |
| UTF 8 | Binary string encoding Flag in ISO 10646/IETF RFC 2279. |
| vluimsbf5 | Variable length unsigned integer most significant bit first representation consisting of two parts. The first part defines the number n of 4-bit bit fields used for the value representation, encoded by a sequence of n-1 "1" bits, followed by a "0" bit signaling its end. The second part contains the value of the integer encoded using the number of bit fields specified in the first part. |
| uimsbf | Unsigned integer, most significant bit first. |
| fsbf | Float (32 bit), sign bit first. The semantics of the bits within a float are specified in the IEEE Standard for Binary Floating Point Arithmetic (ANSI/IEEE Std 754 1985). |

FIG. 7B illustrates a method of operating a sensory effect processing system according to example embodiments.

Referring to FIG. 7B, the sensory media reproducing device 710 of FIG. 7A may reproduce contents containing at least one sensory effect information.

The sensory media reproducing device 710 may extract the sensory effect information from the contents.

In operation 741, the sensory media reproducing device 710 may encode the sensory effect information into SEM. In other words, the sensory media reproducing device 710 may generate the SEM by encoding the sensory effect information.

The sensory media reproducing device 710 may transmit the generated SEM to a sensory effect controlling device 720.

The sensory device 730 may encode capability information regarding capability of the sensory device 730 into SDCap metadata in operation 742. In other words, the sensory device 730 may generate the SDCap metadata by encoding the capability information.

In addition, the sensory device 730 may transmit the generated SDCap metadata to the sensory effect controlling device 720.

The sensory effect controlling device 720 may decode the SEM and the SDCap metadata in operation 743.

The sensory effect controlling device 720 may extract the sensory effect information by decoding the SEM. In addition, the sensory effect controlling device 720 may extract the capability information of the sensory device 730 by decoding the SDCap metadata.

The sensory effect controlling device 720 may generate command information for controlling the sensory device 730 based on the decoded SEM and the decoded SDCap metadata, in operation 744.

The sensory effect controlling device 720 may encode the generated command information into SDCmd metadata in operation 745. In other words, the sensory effect controlling device 720 may generate the SDCmd metadata by encoding the generated command information.

In addition, the sensory effect controlling device 720 may transmit the SDCmd metadata to the sensory device 730.

The sensory device 730 may receive the SDCmd metadata from the sensory effect controlling device 720 and decode the received SDCmd metadata in operation 746. That is, the sensory device 730 may extract the sensory effect information by decoding the SDCmd metadata.

Here, the sensory device 730 may execute an effect event corresponding to the sensory effect information in operation 747.

The sensory device 730 may extract the command information by decoding the SDCmd metadata. The sensory device 730 may execute the effect event corresponding to the sensory effect information based on the command information.

According to other example embodiments, the sensory device 730 may encode preference information, that is, information on a user preference with respect to the sensory effect, into USP metadata in operation 751. In other words, the sensory device 730 may generate the USP metadata by encoding the preference information.

Also, the sensory device 730 may transmit the generated USP metadata to the sensory effect controlling device 720.

The sensory effect controlling device 720 may receive the SDCap metadata and the USP metadata from the sensory device 730 in operation 752.

Here, the sensory effect controlling device 720 may extract the preference information by decoding the USP metadata in operation 753.

Additionally, the sensory effect controlling device 720 may generate the command information based on the decoded SEM, the decoded SDCap metadata, and the decoded USP metadata. Depending on embodiments, the command information may include the sensory effect information.

A method of controlling the sensory effect according to example embodiments may perform operations S743 and S745 by the sensory effect controlling device 720.

Also, the method of operating the sensory device may perform the operations S746 and S745 by the sensory device 730.

The methods according to the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. The media may be transfer media such as optical lines, metal lines, or waveguides including a carrier wave for transmitting a signal designating the program command and the data construction. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa.

Although example embodiments have been shown and described, it would be appreciated by those skilled in the art that changes may be made in these example embodiments without departing from the principles and spirit of the disclosure, the scope of which is defined in the claims and their equivalents.

## Claims

1. A sensory media reproducing device that reproduces contents containing sensory effect information, the device comprising:

   an extracting unit to extract the sensory effect information from the contents;
   an encoding unit to encode the extracted sensory effect information into sensory effect metadata; and
   a transmitting unit to transmit the sensory effect metadata to a sensory effect controlling device.

2. The device of claim 1, wherein the encoding unit generates the sensory effect metadata by encoding the sensory effect information into extensible mark-up language (XML) metadata.

3. The device of claim 1, wherein the encoding unit generates the sensory effect metadata by encoding the sensory effect information into binary metadata.

4. The device of claim 1, wherein the encoding unit generates first metadata by encoding the sensory effect information into XML metadata, and generates the sensory effect metadata by encoding the first metadata into binary metadata.

5. The device of claim 3, wherein the generated sensory effect metadata comprises a binary representation syntax, a number of bits of attributes of the binary representation syntax, and mnemonics of the attributes.

6. A sensory effect media reproducing method of reproducing contents containing sensory effect information, the method comprising:

   extracting the sensory effect information from the contents;
   encoding the extracted sensory effect information into sensory effect metadata; and

transmitting the sensory effect metadata to a sensory effect controlling device.

**7.** The method of claim 6, wherein the encoding comprises generating the sensory effect metadata by encoding the sensory effect information into extensible mark-up language (XML) metadata.

**8.** The method of claim 6, wherein the encoding comprises generating the sensory effect metadata by encoding the sensory effect information into binary metadata.

**9.** The method of claim 6, wherein the encoding comprises generating first metadata by encoding the sensory effect information into XML metadata, and generating the sensory effect metadata by encoding the first metadata into binary metadata.

**10.** The method of claim 8, wherein the generated sensory effect metadata comprises a binary representation syntax, a number of bits of attributes of the binary representation syntax, and mnemonics of the attributes.

**11.** A non-transitory computer-readable medium comprising a program for instructing a computer to perform the method of any one of claims 6 to 10.

FIG. 1

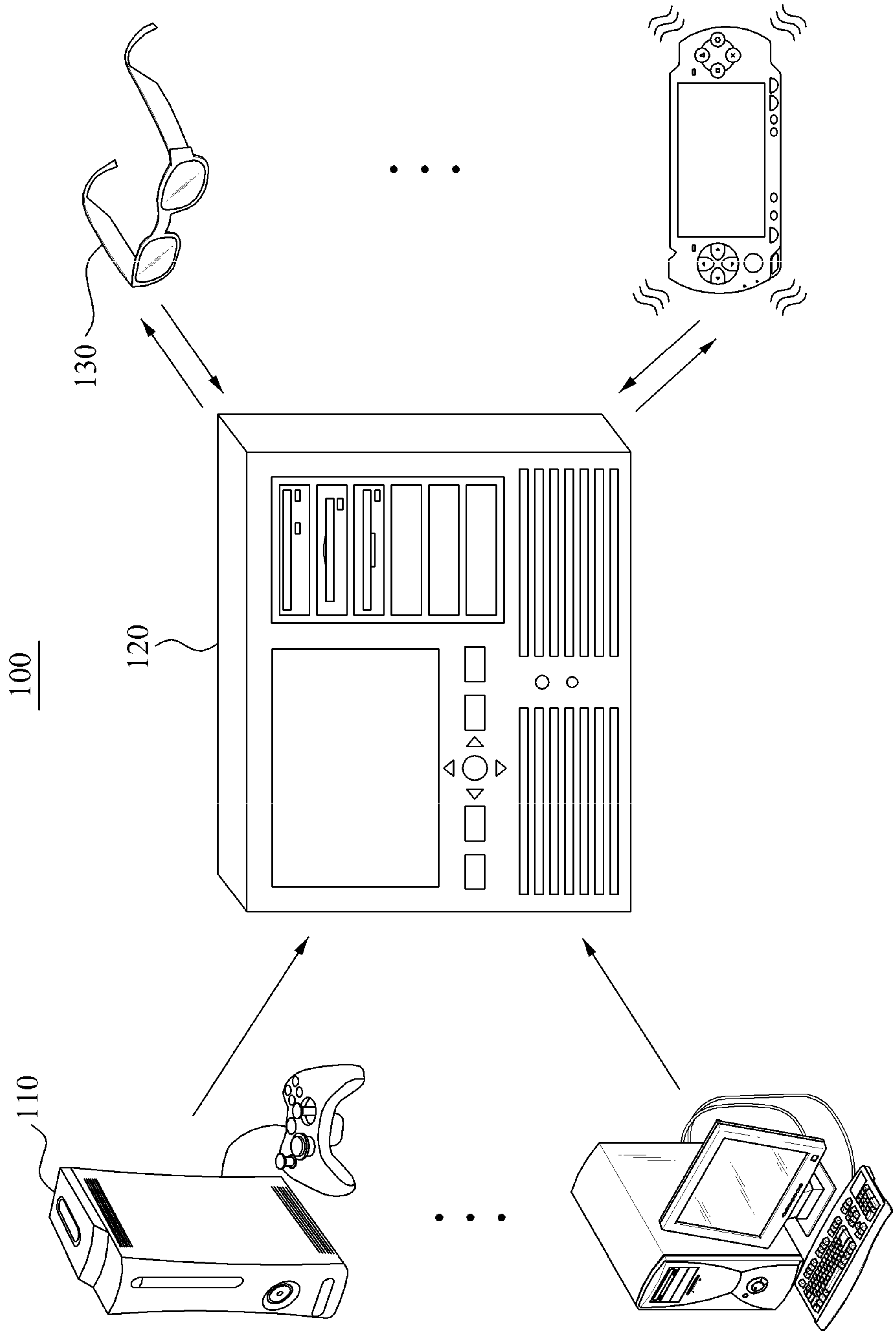

FIG. 2

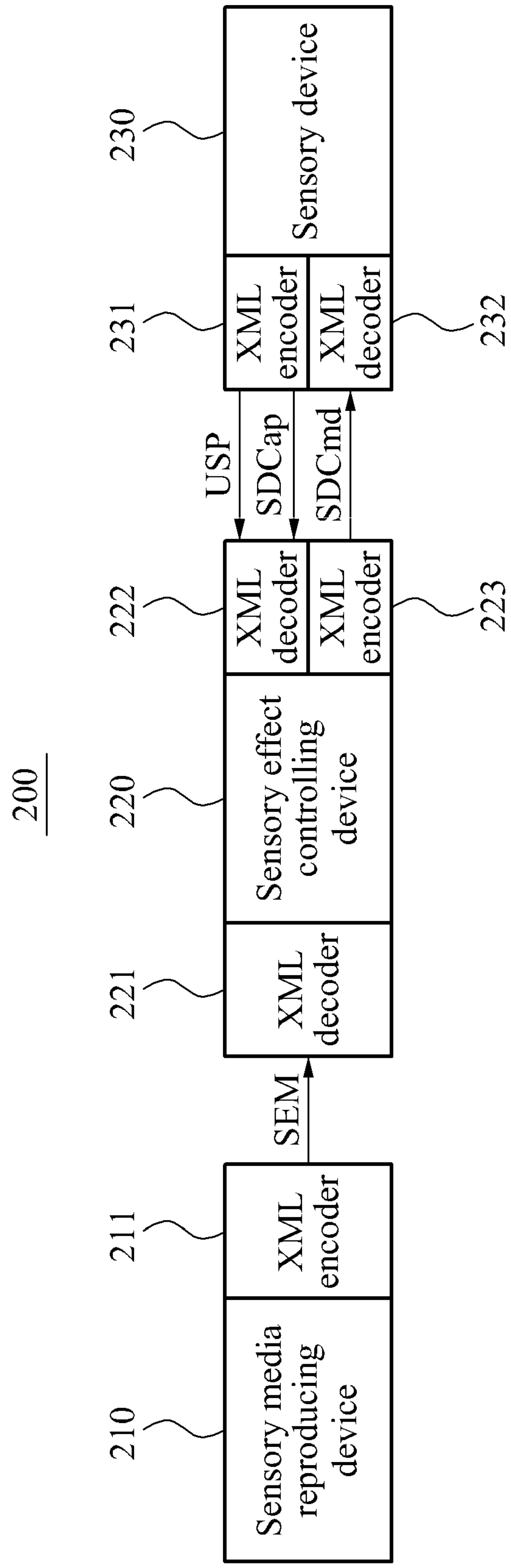
200
210
Sensory media reproducing device
211
XML encoder
SEM
221
XML decoder
220
Sensory effect controlling device
222
XML decoder
223
XML encoder
USP
SDCap
SDCmd
231
XML encoder
232
XML decoder
230
Sensory device

# FIG. 3

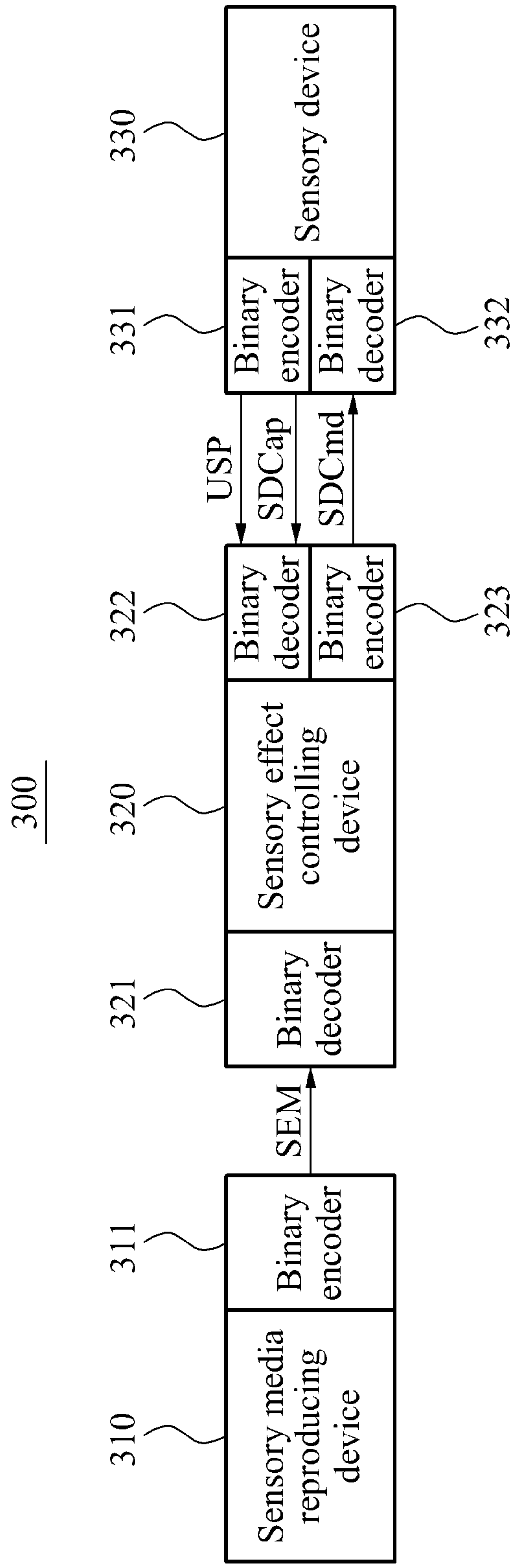
300
310
Sensory media reproducing device
311
Binary encoder
SEM
321
Binary decoder
320
Sensory effect controlling device
322
Binary decoder
323
Binary encoder
USP
SDCap
SDCmd
331
Binary encoder
332
Binary decoder
330
Sensory device

FIG. 4

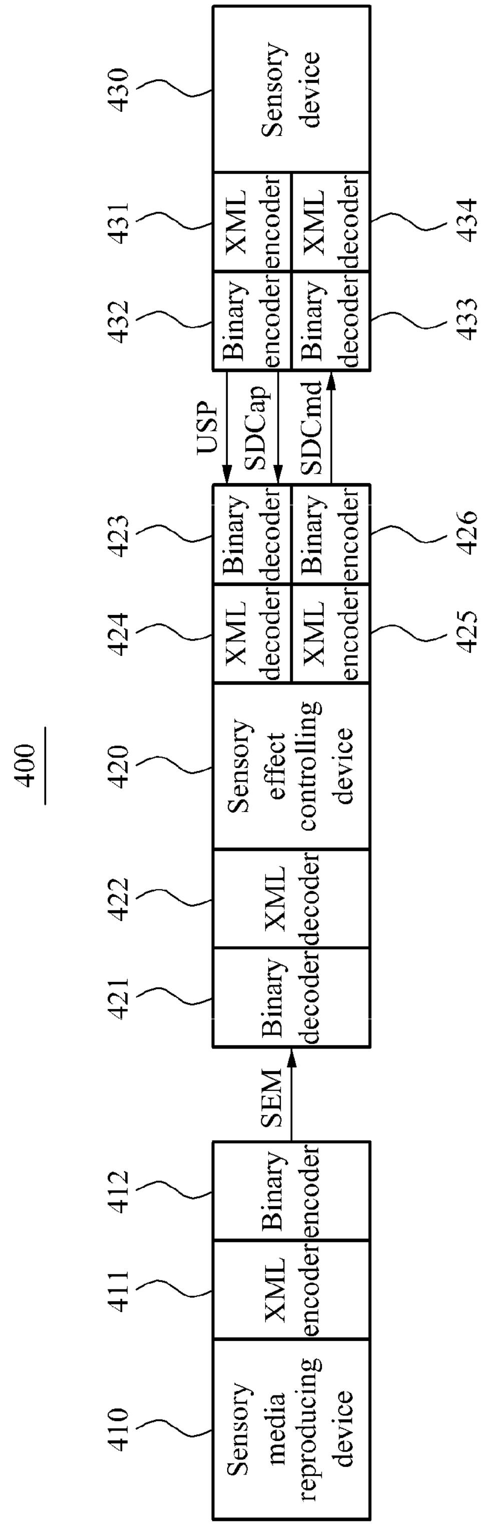
400
410
Sensory media reproducing device
411
XML encoder
412
Binary encoder
SEM
421
Binary decoder
422
XML decoder
420
Sensory effect controlling device
424
XML decoder
425
XML encoder
423
Binary decoder
426
Binary encoder
USP
SDCap
SDCmd
432
Binary encoder
433
Binary decoder
431
XML encoder
434
XML decoder
430
Sensory device

FIG. 5

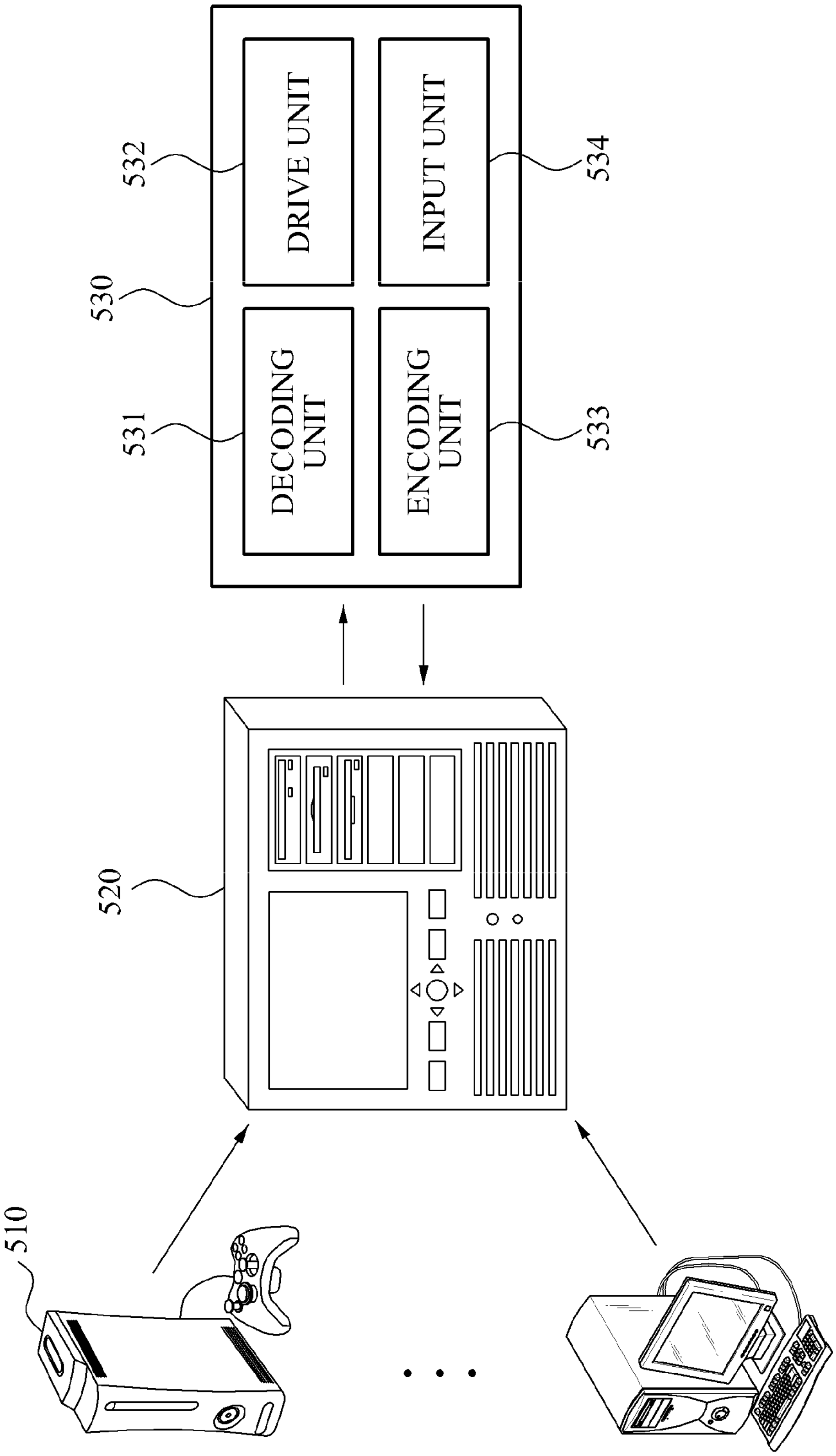
530
531
DECODING UNIT
532
DRIVE UNIT
533
ENCODING UNIT
534
INPUT UNIT
520
510

FIG. 6

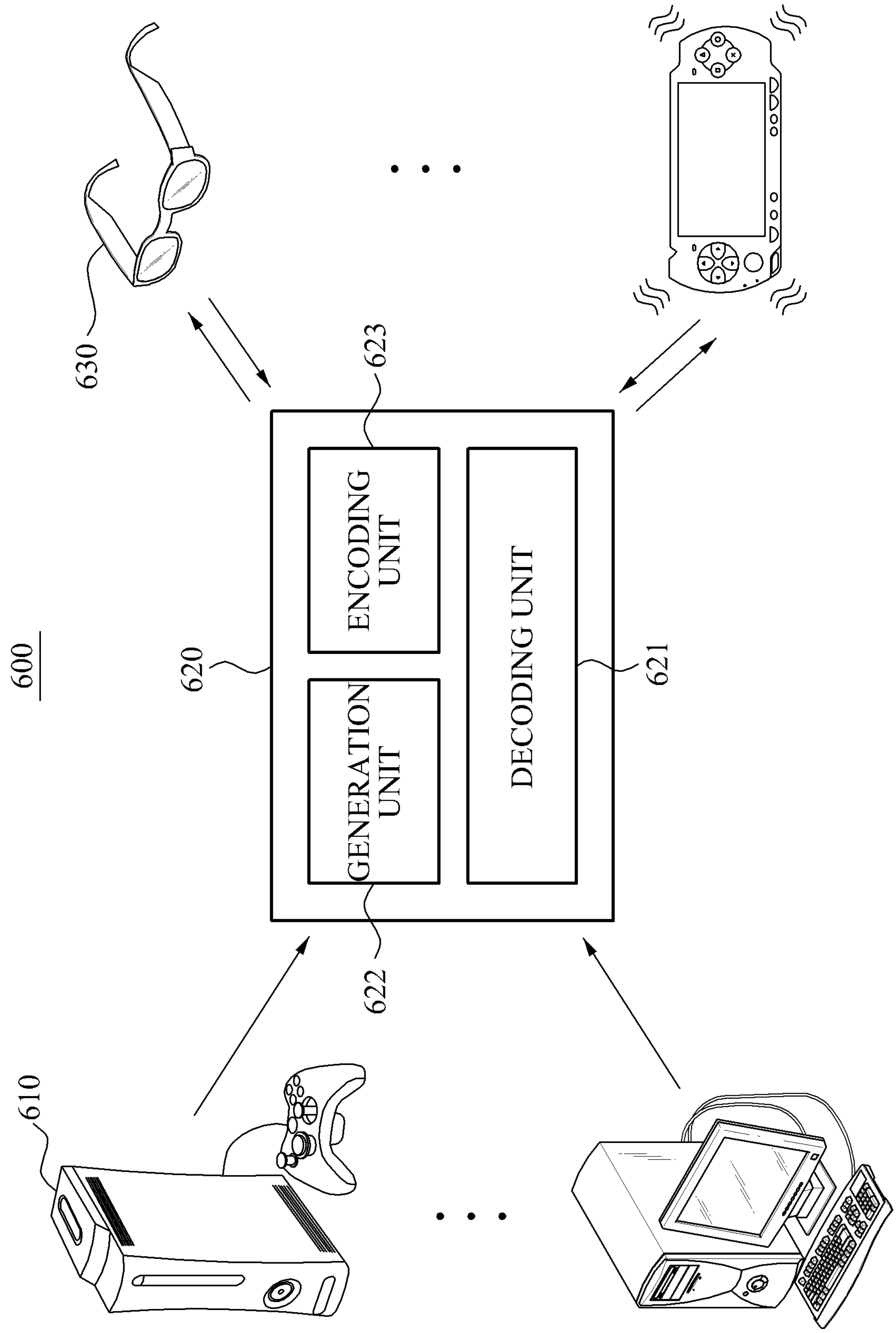
600
610
620
621
622
623
630
ENCODING UNIT
GENERATION UNIT
DECODING UNIT

FIG. 7A

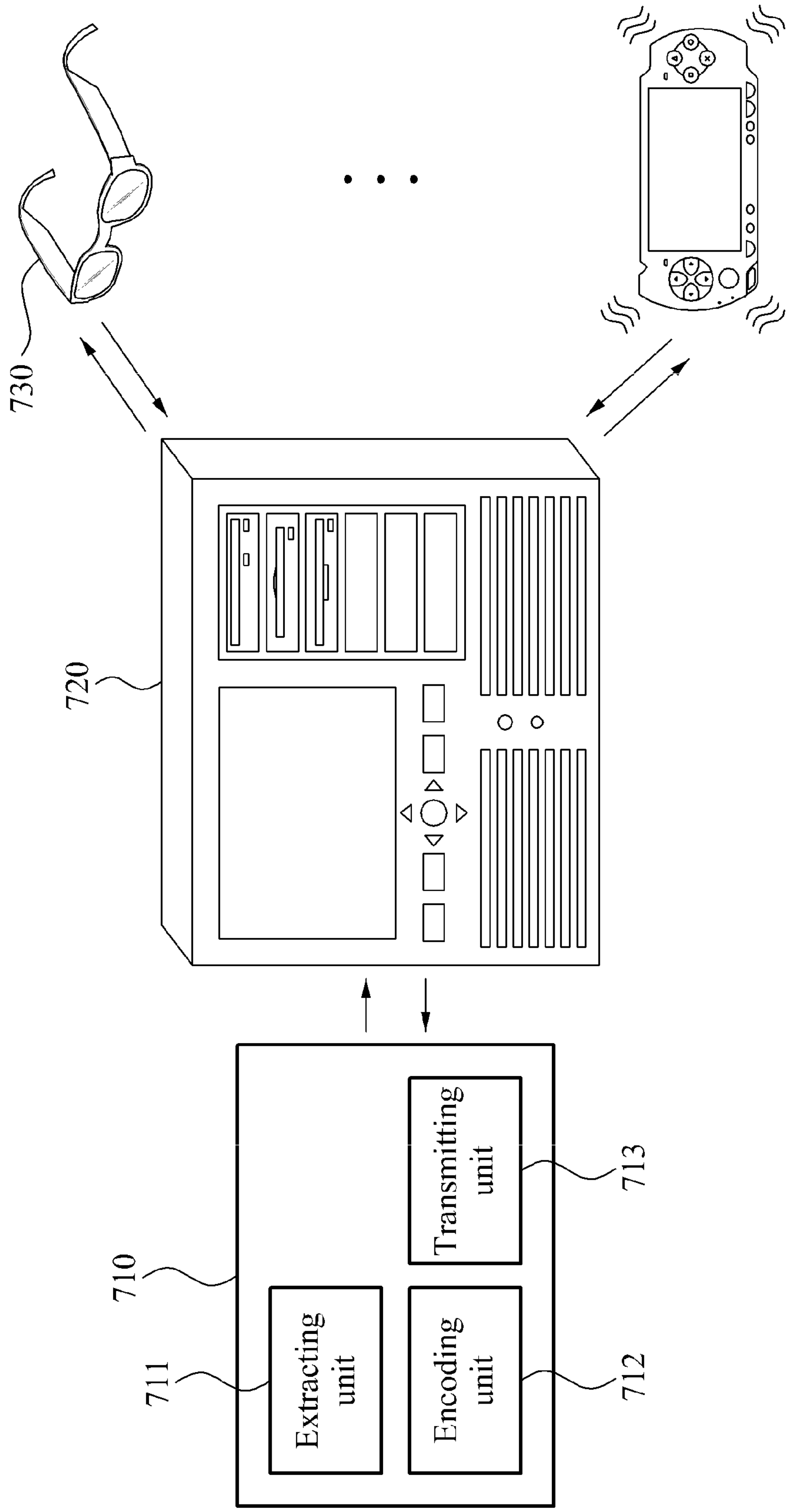
730
720
710
Extracting unit
711
Encoding unit
712
Transmitting unit
713

FIG. 7B

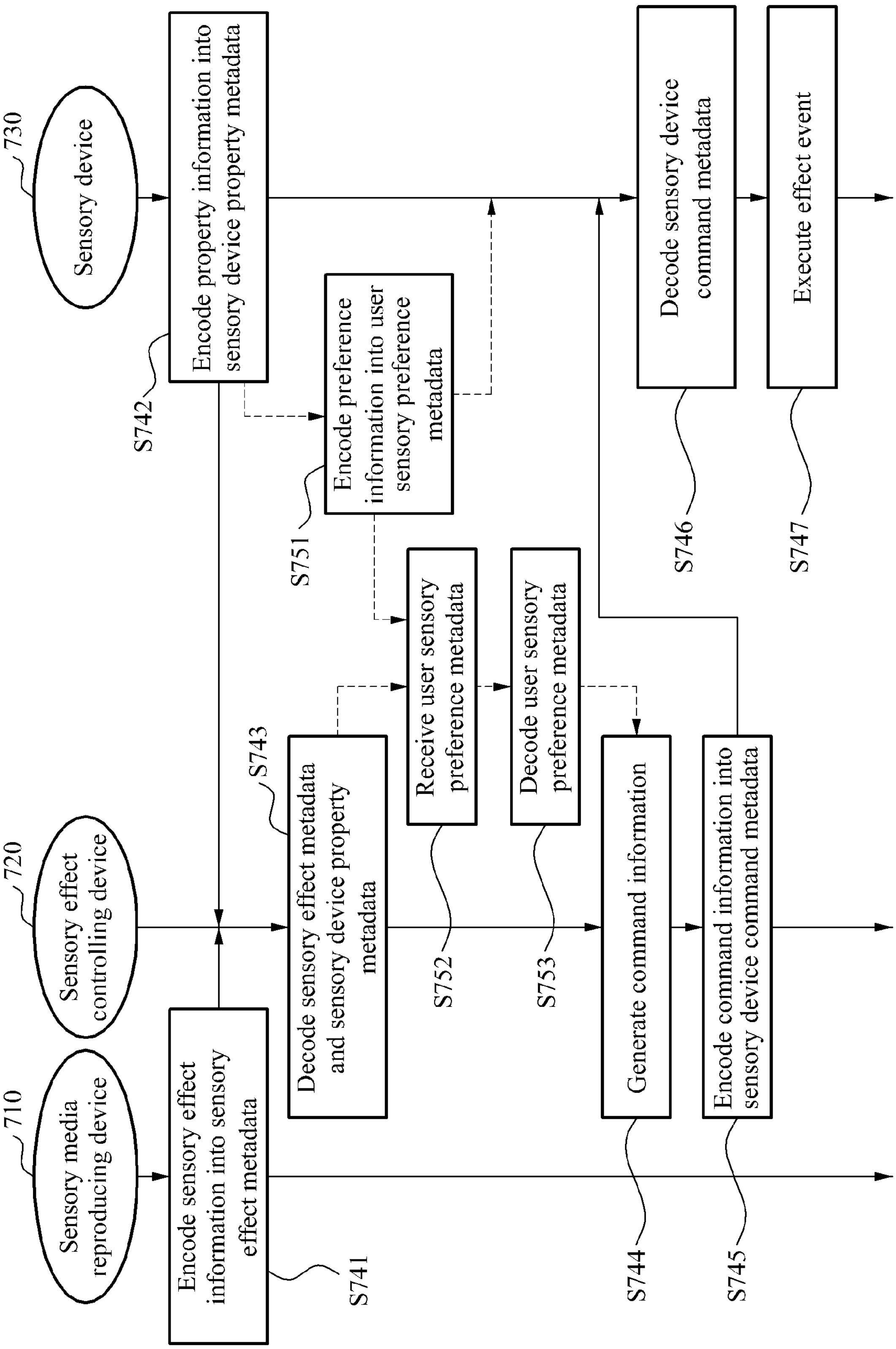
710
Sensory media reproducing device
720
Sensory effect controlling device
730
Sensory device
Encode sensory effect information into sensory effect metadata
S741
Encode property information into sensory device property metadata
S742
Decode sensory effect metadata and sensory device property metadata
S743
Encode preference information into user sensory preference metadata
S751
Receive user sensory preference metadata
S752
Decode user sensory preference metadata
S753
Generate command information
S744
Encode command information into sensory device command metadata
S745
Decode sensory device command metadata
S746
Execute effect event
S747